# EUROPÄISCHE PATENTSCHRIFT

(11) **EP 3 920 061 B1**
(45) Veröffentlichungstag und Bekanntmachung des Hinweises auf die Patenterteilung: **01.10.2025**
(21) Anmeldenummer: 21177754.5
(22) Anmeldetag: 04.06.2021
(51) Int. Cl.: H04L 9/40, G06F 21/34

(54) **SYSTEM ZUM BETRIEB EINES USB-GERÄTS**
SYSTEM FOR OPERATING A USB DEVICE
SYSTÈME DE FONCTIONNEMENT D'UN PÉRIPHÉRIQUE USB

(30) Priorität: 05.06.2020 DE 102020115033
(43) Veröffentlichungstag der Anmeldung: 08.12.2021
(73) Patentinhaber: Bundesdruckerei GmbH, 10969 Berlin (DE)
(72) Erfinder: MORGNER, Frank, 15537 Grünheide (DE)
(74) Vertreter: Richardt Patentanwälte PartG mbB

(56) Entgegenhaltungen:
- DE-A1- 102005 045 816
- US-A1- 2004 098 585
- US-A1- 2009 031 131
- US-A1- 2020 081 811
- US-B1- 10 489 311

## Beschreibung

### Gebiet

Die Erfindung betrifft ein Verfahren zum Betrieb eines USB-Geräts, und insbesondere ein Verfahren zum Betrieb komplexer USB-Geräte z.B. im Kontext der Herstellung oder Personalisierung von Wert- und Sicherheitsdokumenten.

### Hintergrund

Bisher sind USB-Geräte, die nicht zu den standardisierten USB-Geräteklassen wie Tastatur und Maus gehören, durch native Treiber und SDKs unterstützt worden, die einzeln für Betriebssysteme erstellt werden und lokal installiert werden müssen. Webanwendungen und Browser haben darauf jedoch - wenn überhaupt - nur sehr eingeschränkt Zugriff. Der Betrieb komplexer USB Geräte erfordert also die Installation entsprechender Treiber und Software auf dem Computer, welcher mit dem jeweiligen USB-Gerät lokal verbunden ist. Dies führt sowohl beim Anwender als auch beim Hersteller des USB-Geräts zu erheblichem Aufwand, denn der Hersteller muss die zum Betrieb des Geräts nötige Software, z.B. Bediensoftware und die entsprechenden Gerätetreiber, mehrfach für verschiedene Betriebssysteme anpassen. Der Anwender muss die für sein jeweiliges Betriebssystem geeignete Software zunächst identifizieren, herunterladen und installieren. Dies ist aufwändig und fehleranfällig und besonders bei einmaligem Gebrauch der Software lästig, da Speicherplatz verbraucht wird und die Software ggf. nach Gebrauch wieder deinstalliert werden muss.

Mittlerweile ist mit Google Chrome ein Browser verfügbar, der eine WebUSB-API beinhaltet und es dadurch ermöglicht, Javascript-SDKs für USB-Geräte zu erstellen um USB-Geräte über den Browser plattformübergreifend bedienen zu können.

Allerdings ist die Bedienung eines USB-Gerätes über ein unsicheres Netzwerk wie z.B. das Internet für Anwendungen, die ein sehr hohes Maß an Sicherheit erfordern, problematisch, da ein erhöhtes Risiko verschiedenster Angriffe auf die über das Netzwerk übertragenen Daten besteht.

Aus der US 10,489,311 B1 ist es bekannt, von einem Server aus auf eine an einem Client angeschlossene USB-Vorrichtung zuzugreifen. Allerdings kann auch am Client unter Laden eines Stapels ("device stack") durch diesen die USB-Vorrichtung gesteuert werden.

In der US 2020/081811 A1 geht es um Diagnose an Vorrichtungen unter Verwendung von Web-Applikationen. Es ist beschreiben, dass insbesondere ein Web USB-Programm als Java-Script bereitgestellt wird.

Die US 2004/098585 A1 ist mit Authentifizierung von Hardware-Tokens befasst.

Die DE 10 2005 045816 A1 offenbart ein Verfahren zur Herstellung von Sicherheitsdokumenten, bei dem ein Drucker einen Druckauftrag nur nach Eingang einer Rückmeldung auf mindestens eine Verifikationsanfrage ausführt, deren Richtigkeit bestätigt wird.

In der US 2009/031131 A1 ist beschrieben, dass eine netzbasierte graphische Benutzerschnittstelle ( web GUI, "web graphics user interface") genutzt werden kann, um den Nutzer bei einer Authentifizierung mittels eines Tokens zu unterstützen.

### Zusammenfassung

Der Erfindung liegt die Aufgabe zugrunde, ein verbessertes Verfahren zum Betrieb eines USB-Geräts über eine WebAPI vorzuschlagen, sowie entsprechende Computersysteme, die die serverseitigen und/oder clientseitigen Teile des Verfahrens durchführen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem weiteren Aspekt betrifft die Erfindung ein Verfahren zum Betrieb eines lokalen USB-Gerätes. Das Verfahren umfasst:
- Bereitstellung eines Nutzer-Computersystems mit einem WebUSB-fähigen Browser, wobei das USB-Gerät an das Nutzer-Computersystem über eine lokale USB-Schnittstelle des Nutzer-Computersystems verbunden ist;
- Bereitstellung eines Server-Computersystems mit einem Register und mit einer auf dem Server-Computersystem instanziierten Server-Applikation, wobei das Register eine Vielzahl von Geräte-IDs von bei dem Server-Computersystem registrierten USB-Geräten beinhaltet;
- Herunterladen einer Client-Applikation, die mit der Server-Applikation über eine WebUSB-Schnittstelle interoperabel ist, von dem Server-Computersystem über ein Netzwerk durch den Browser;
- Empfang einer Geräte-ID des US-Geräts von dem USB Gerät durch die Client-Applikation über die lokale USB-Schnittstelle;
- Übermittlung der empfangenen Geräte-ID von der Client-Applikation an die Server-Applikation um das USB-Gerät gegenüber der Server-Applikation als eines der registrierten USB-Geräte zu authentifizieren; und/oder Übermitteln eines Berechtigungsnachweises eines Nutzers des USB-Geräts um den Nutzer als zur Nutzung des USB-Geräts berechtigten Nutzer zu authentifizieren; bei dem Berechtigungsnachweis kann es sich z.B. um biometrische Daten des Nutzers, um Daten eines Identitätsdokuments (z.B. Personalausweis oder Reisepass) oder Nutzername-Passwortkombination, oder um die Geräte-ID des USB-Geräts, oder Kombinationen von zwei oder mehr dieser Elemente handeln;
- Im Falle einer erfolgreichen Authentifizierung, Senden eines Freigabesignals von der Server-Applikation an die Client-Applikation;
   - Betrieb des lokalen USB-Gerätes durch die Client-Applikation in Interoperation mit der Server-Applikation nur in Antwort auf einen Erhalt des Freigabesignals. Beispielsweise kann die Client-Applikation und/oder die Server-Applikation dazu konfiguriert sein, eine Prüfung durchzuführen, ob das Freigabesignal erzeugt und an die Client-Applikation gesendet wurde, und das USB-Gerät nur dann zu "betreiben", also zu überwachen und/oder zu kontrollieren, wenn dies der Fall ist, ferner mit:
   - automatischer Aufbau eines geschützten Kommunikationskanals (132) zwischen der heruntergeladenen Client-Applikation und der Server-Applikation;
wobei die Geräte-ID und das Freigabesignal über den Kommunikationskanal übermittelt werden; wobei die Serverapplikation zum Zwecke der Authentifizierung des USB-Geräts eine Challenge in Form eines zufälligen Datenwerts erzeugt, der über den Kommunikationskanal an die Client-Applikation übermittelt wird, wobei die Client-Applikation den Datenwert an das USB-Gerät weiterleitet, wobei das USB-Gerät den Datenwert mit einem dem USB-Gerät eindeutig zugeordneten und in der Hardware des USB-Geräts geschützt gespeicherten Signaturschlüssel signiert und den signierten Datenwert an die Client-Applikation zurückgibt, wobei die Client-Applikation den signierten Datenwert über den geschützten Kommunikationskanal an die Server-Applikation übermittelt, um der Server-Applikation die Durchführung der Authentifizierung des USB-Geräts auf Basis des signierten Datenwerts zu ermöglichen, wobei die Server-Applikation im Zuge der Authentifizierung eine Signaturprüfung durchführt und das Freigabesignal nur dann erzeugt, wenn die Prüfung ergibt, dass die Signatur valide ist.

Dieses Verfahren kann aus mehreren Gründen vorteilhaft sein: Zum einen wird auf einfache und gleichzeitig sichere Art und Weise verhindert, dass die (oftmals wertvolle, proprietäre) Bediensoftware für das USB-Gerät von jedermann genutzt werden kann, zum Beispiel um funktionsgleiche oder funktionsgleiche USB-Geräte von Mitbewerbern mit dieser Bediensoftware zu betreiben. Beispielsweise kann ein Geschäftsmodell des Geräteherstellers darin bestehen, Geräte eines bestimmten Typs im Paket mit Nutzungsrechten an einer komplexen Bediensoftware zu vertreiben, in deren Entwicklung viel Geld und Zeit investiert wurde. Der Hersteller hat also ein Interesse daran, dass diese Software nicht von jedermann unentgeltlich genutzt werden kann, zum Beispiel um USB-Geräte von Mitbewerbern ähnlicher Hardwarefunktionalität mit dieser Bediensoftware zu betreiben.

Dies kann gemäß Ausführungsformen der Erfindung dadurch verhindert werden, dass eine erfolgreiche Authentifizierung des Geräts mittels einer Geräte-ID erforderlich ist, um das Gerät über Client- und Server-Applikation steuern zu können. Die Authentifizierung des Geräts kann anstelle von oder zusätzlich zu einer Nutzer-Authentifikation erfolgen. Die Authentifikation mittels Geräte-ID hat gegenüber der Nutzer-Authentifikation den Vorteil, dass sie komplett im Hintergrund ablaufen kann, also besonders schnell ist, und es ermöglicht, die Nutzung der Bediensoftware, die z.B. in Form der Server-Applikation oder ein oder mehreren weiteren auf dem Server installierten Applikationen ausgebildet sein kann, nur denjenigen Nutzern zur Verfügung zu stellen, die über ein USB-Gerät verfügen, welches sich (im Hintergrund) erfolgreich gegenüber der Server-Applikation authentifiziert hat.

Beispielsweise kann es sich bei dem USB-Gerät um einen komplexen Drucker zur Personalisierung von Wert- und Sicherheits-Dokumenten und bei der Bediensoftware um ein Programm zur Kalibrierung dieses Druckers handeln. Die Bediensoftware kann als integraler Bestandteil der Server-Applikation ausgebildet sein. Um zu verhindern, dass das Programm zur Kalibrierung auch von Personen verwendet werden kann, die keinen Drucker gekauft haben, ist die Client-Applikation und/oder die Server-Applikation dazu konfiguriert, das USB-Gerät nur dann zu steuern, wenn sich das USB-Gerät (im Hintergrund) erfolgreich gegenüber der Server-Applikation als berechtigtes USB-Gerät authentifiziert hat, was zu der Erzeugung eines Freigabesignals führt. Es ist also möglich, die Client-Software ungeschützt über ein Webportal zum Download zur Verfügung zu stellen, vorzugsweise ohne dass sich hierfür ein Nutzer gegenüber dem Webportal authentifizieren muss, da die Client-Software nur von denjenigen Nutzern verwendet werden kann, welche über ein bei der Server-Applikation registriertes USB-Gerät verfügen, und da vorzugsweise die Bediensoftware auf dem Server-Computersystem instanziiert ist und nicht Bestandteil der Client-Applikation ist.

Zwar könnte man die Benutzung der Client-Software durch Unberechtigte (zum Beispiel Nutzer, die die weder die Software noch das USB Gerät erworben oder lizenziert haben) dadurch unterbinden, dass man nur registrierten Nutzern (zum Beispiel registrierten Käufern oder Lizenznehmern) den Download gestattet oder nur bestimmten Nutzern (zum Beispiel im Zuge eines Kaufs oder des Abschlusses eines Lizenzvertrages) Zugang zu einem geschützten Bereich eines Webportals gewährt, wo die Client-Software nach erfolgreicher Authentifizierung eines Nutzers heruntergeladen werden kann. All dies erfordert jedoch eine Registrierung und/oder Authentifizierung des Nutzers und macht das Verfahren somit weniger benutzerfreundlich.

Dies ist im Kontext WebUSB Anwendung besonders nachteilig, da ein wichtiger Vorteil dieses Anwendungskonzeptes ist, einem Nutzer die Bedienung eines USB Geräts auf möglichst einfache Weise (also ohne das manuelle Identifizieren, Herunterladen und installieren einer für das jeweilige Betriebssystem passenden Version der Treiber und Bediensoftware) zu ermöglichen.

Gemäß Ausführungsformen der Erfindung ist für den Betrieb des USB-Geräts lediglich ein erfolgreiches Authentifizieren des USB-Geräts mittels dessen Geräte-ID gegenüber der Server-Applikation erforderlich, nicht jedoch eine Authentifikation des Nutzers, um die Client-Applikation herunterladen und nutzen zu können.

Die Authentifikation des USB-Geräts mittels seiner Geräte-ID kann zum Beispiel im Hintergrund erfolgen, ohne dass der Nutzer hierfür explizit mit dem Computer interagieren muss. Somit wird auf einfache, schnelle und intuitive Weise sichergestellt, dass die Client-Applikation, die möglicherweise aufwendig in der Entwicklung war und die vorurteilsfreiere Verbreitung oder Nutzung geschützt werden soll, auch nur zur Bedienung von USB Geräten zum Einsatz kommen kann, die der Server-Applikation aufgrund eines Registrierungsprozesses bekannt sind.

Beispielsweise kann es zum Herunterladen und Aufspielen von Firmware-Updates für das USB-Gerät ausreichend sein, wenn das USB-Gerät sich im Hintergrund bei dem Server authentifiziert. Für besonders sicherheitskritische Anwendungen wie z.B. das Personalisieren von Dokumenten, insbesondere behördlichen Identitätsdokumenten wie z.B. Personalausweisen und Reisepässen, ist es nach einer Ausführungsform zusätzlich erforderlich, dass sich auch der Nutzer gegenüber der Server-Applikation als ein zur Personalisierung von Dokumenten berechtigter Nutzer authentifiziert. Nur dann, wenn sich sowohl das USB-Gerät (z.B. über die Geräte-ID) als auch der Nutzer (z.B. über Passwort und/oder biometrische Daten) erfolgreich gegenüber der Server-Applikation authentifiziert haben, sendet die Server-Applikation das Freigabesignal an die Client-Applikation.

Ein erster Vorteil kann also darin bestehen, dass es nicht erforderlich ist, dass ein Nutzer sich bei der Client-Applikation registriert und/oder authentifiziert, um das lokal angeschlossene USB Gerät und die zur Bedienung nötige Bediensoftware nutzen zu können.

Ein weiterer Vorteil kann darin bestehen, dass nicht nur die Authentifizierung des Geräts gegenüber der Server-Applikation im Hintergrund erfolgen kann, sondern auch die Identifikation, dass Herunterladen und die Instanziierung der Client-Applikation. Ein Nutzer kann mit dem WebUSB fähigen Browser z.B. eine bestimmte Webseite des Geräteherstellers besuchen, in welcher sich ein Bedienelement (z.B. Link oder Button) befindet, durch dessen Auswahl ("Anklicken") der Nutzer das Herunterladen der Client-Applikation bewirken kann. Da die WebUSB Schnittstelle zur Bedienung des Geräts verwendet wird, muss sich der Nutzer keine Gedanken über Betriebssystemkompatibilität machen und es wird somit vermieden, dass der Nutzer erst nach ein oder mehreren vergeblichen Anläufen die richtige Bediensoftware identifiziert oder bei der Installation Probleme auftreten bzw. eine Bediensoftware für das Betriebssystem des Nutzer-Computers vielleicht gar nicht zur Verfügung steht.

Bei der Erfindung umfasst das Verfahren einen automatischen Aufbau eines geschützten Kommunikationskanals zwischen der heruntergeladenen Client-Applikation und der Server-Applikation. Die Geräte-ID und das Freigabesignal und optional auch Daten, die zur Ableitung der Geräte-ID verwendet werden ("Challenge"), werden über den Kommunikationskanal übermittelt.

Dies kann vorteilhaft sein, da durch den Aufbau des geschützten Datenübertragungskanals die Möglichkeit eröffnet wird, sensible Daten zwischen der Client-Applikation und der Server-Applikation über ein unsicheres Netzwerk wie zum Beispiel das Internet auszutauschen, ohne dass unberechtigte Dritte die übertragenen Daten mitlesen oder gar manipulieren können. Gerade beim Betrieb komplexer, teurer oder sicherheitsrelevanter Geräte über das Internet ist dies vorteilhaft, weil eine Manipulation von Steuerbefehlen dazu führen kann, dass es Gerät beschädigt wird oder fehlerhaft arbeitet. Beispielsweise besteht im Kontext der Herstellung von Wert und Sicherheitsdokumenten bei der Ansteuerung eines Dokumentendruckers das Risiko, dass über das Internet übertragene Steuerbefehle manipuliert werden, um ein manipuliertes Sicherheitsdokument zu erzeugen, oder dass die Steuerbefehle und/oder die übertragene Geräte-ID oder eine von der Server-Applikation an die Client-Applikation übertragene Challenge mitgelesen werden. Dies würde es einem Angreifer erlauben, verschiedene Arten von Angriffen, zum Beispiel sogenannte Replay-Attacken, auf die Kommunikation durchzuführen. Dies kann zum Beispiel mit dem Ziel erfolgen, USB Drucker herzustellen, die sich fälschlicherweise gegenüber der Server-Applikation als registrierte, vertrauenswürdige Drucker ausgeben, um auf dem Server-Computersystem installierte Bediensoftware nutzen zu können, um gefälschte Dokumente, zum Beispiel gefälschte Pässe oder Falschgeld, zu drucken. Um diese Art von Angriffen wirksam zu unterbinden und dennoch eine einfache und sichere Bedienung sensibler USB-Geräte über das Internet zu ermöglichen, ist nach Ausführungsformen der Erfindung die Client-Applikation dazu konfiguriert, nachdem sie heruntergeladen wurde, den sicheren Kommunikationskanal zu der Server-Applikation aufzubauen, sodass der Datenaustausch zwischen Client-Applikation und Server-Applikation auf geschützte Weise erfolgt.

Vorzugsweise sind die über den Kanal übertragenen Daten nicht nur vor lesenden und schreibenden Zugriff durch Drittrechner geschützt, sondern auch vor entsprechendem Zugriff durch den Browser, in welchem die Client-Applikation ausgeführt wird. Dies ist besonders vorteilhaft, da auch Browser häufig eine Schwachstelle für die Sicherheit von Computersystemen darstellen. Beispielsweise können Browser-Add-ons und Browser-Plugins Schadsoftware enthalten, welche Daten, die mithilfe des Browsers kommuniziert werden, mitlesen und an unberechtigte Dritte übermitteln oder gar manipulieren könnten. Dadurch, dass der geschützte Kommunikationskanal auch vor dem Zugriff des Browsers geschützt ist wird ein besonders sicheres Verfahren zur Bedienung von USB-Geräten über ein unsicheres Netzwerk wie das Internet bereitgestellt.

Beispielsweise kann der geschützte Kommunikationskanal als Ende-zu-Ende verschlüsselter Kanal zwischen Client-Applikation und Server-Applikation ausgebildet sein.

Bei der Erfindung erzeugt die Server-Applikation nach Aufbau des geschützten Kommunikationskanals zum Zwecke der Authentifizierung des USB-Geräts eine Challenge, also z.B. einen zufälligen Datenwert. Dieser Datenwert wird auf sichere Weise über den Kanal an die Client-Applikation übermittelt. Die Client-Applikation leitet die Challenge an das USB-Gerät weiter. Das USB-Gerät signiert die Challenge mit einem dem USB-Gerät eindeutig zugeordneten und in der Hardware des USB-Geräts geschützt gespeicherten Signaturschlüssel. Die signierte Challenge dient als Geräte-ID des USB-Geräts und wird vom USB-Gerät an die Client-Applikation zurückgegeben. Die Client-Applikation übermittelt die signierte Challenge über den geschützten Kanal an die Server-Applikation um der Server-Applikation die Durchführung der Authentifizierung des USB-Geräts auf Basis der signierten Challenge zu ermöglichen. Im Zuge der Authentifizierung führt die Server-Applikation zum Beispiel eine Signaturprüfung durch und erzeugt das Freigabesignal nur dann, wenn die Prüfung ergibt, dass die Signatur valide ist.

Die Übertragung der Challenge über den geschützten Kommunikationskanal kann vorteilhaft sein, da hierdurch sichergestellt wird, dass kein unberechtigter Dritter die Challenge abfangen und gegebenenfalls manipulieren kann.

Nach Ausführungsformen der Erfindung ist der Kommunikationskanal ein kryptographisch geschützter Kommunikationskanal, insbesondere ein Ende-zu-Ende verschlüsselter Kommunikationskanal zwischen der Client-Applikation und der Server-Applikation. Der Kommunikationskanal ist vor dem Zugriff durch den Browser geschützt. Insbesondere kann es sich bei dem Kommunikationskanal um einen verschlüsselten Kommunikationskanal handeln. Die Verschlüsselung kann z.B. auf Basis des SSH oder TLS Protokolls erfolgen.

Nach Ausführungsformen der Erfindung wird die Client-Applikation ausschließlich innerhalb des Browsers, welcher die Client-Applikation heruntergeladen hat, ausgeführt. Das Verfahren umfasst ferner ein Löschen der heruntergeladenen Client-Applikation, sobald der Browser geschlossen wird, sodass für eine erneute Ausführung der Client-Applikation die Client-Applikation erneut von dem Server-Computersystem heruntergeladen werden muss.

Beispielsweise kann die Client-Applikation als Java Skript-Programm ausgebildet sein oder als ein sonstiges Programm, welches ausschließlich innerhalb des Browsers läuft und mit dem Beenden des Browsers automatisch geschlossen wird. Dies kann vorteilhaft sein, da der Nutzer die Client-Applikation nicht explizit von seinem Rechner deinstallieren muss, um eine nach Bedienung des USB-Gerätes nicht mehr benötigt der Client-Software zu entfernen. Dies kann insbesondere dann vorteilhaft sein, wenn das USB Gerät nur selten oder nur einmal benutzt wird. Es wird jedoch vermieden, dass sich der Speicher des Nutzer-Computers mit der Zeit mit nicht(mehr) benötigten Programmen füllt, die mühsam manuell entfernt werden müssen.

Nach Ausführungsformen der Erfindung ist das USB-Gerät dazu konfiguriert, zumindest einige seiner Hardware-funktionen nur zur Bedienung durch solche Applikationen freizugeben, welche sich mit einem Freigabetoken gegenüber dem USB-Gerät authentifizieren, wobei das Freigabesignal das Freigabetoken beinhaltet. Das Verfahren umfasst ferner ein Authentifizieren der Client-Applikation gegenüber dem USB-Gerät mittels des Freigabetokens.

Dies kann vorteilhaft sein, da die Sicherheit der Bedienung des USB-Geräts noch weiter erhöht wird. Somit prüft nicht nur die Client-Applikation, ob ein Freigabesignal durch die Server-Applikation erzeugt wurde, sondern auch das USB-Gerät selbst führt eine Prüfung durch, ob ein als Freigabetoken fungierendes Freigabesignal empfangen wurde. Nur in diesem Fall gibt es Gerät seine Hardwarefunktion zur Bedienung durch die Client-Applikation frei.

Beispielsweise kann das USB-Gerät verschiedene Typen von Freigabetoken unterstützen. Beispielsweise kann sich technisches Personal, welches vor Ort Wartungsarbeiten an dem Gerät durchführt, über eine erste Art von Freigabetoken dem Gerät gegenüber als berechtigt ausweisen. Bei dieser ersten Art von Freigabetoken kann es sich zum Beispiel um Chipkarten mit Berechtigungsnachweis oder biometrische Daten handeln, die von einem entsprechenden Sensor des USB-Geräts, z.B. einem Fingerabdrucksensor oder einer Gesichtsbildkamera erfasst werden. Eine Client-Applikation, die von einer Person, die Sicherheitsdokumente herstellt, über den Browser heruntergeladen wurde, kann sich mit einem von der Server-Applikation erzeugten Freigabesignal, das zum Beispiel zu einer zweiten Art von Freigabetoken gehört (z.B. SAML Token), gegenüber dem USB Gerät authentifizieren. Somit erlaubt das USB Gerät auf flexible Weise den Betrieb durch verschiedene Arten von Nutzern und auch den Einsatz von auf einem entfernten Server instanziierten Steuerungssoftware zur Bedienung des Geräts.

Nach Ausführungsformen der Erfindung ist die Geräte-ID eine für das USB-Gerät spezifische Kennung, insbesondere eine MAC-Adresse. Die Authentifizierung umfasst eine Prüfung, ob die Kennung in dem Register gespeichert ist. Diese Ausführungsform kann zum Beispiel sinnvoll sein, wenn das Gerät über eine MAC Adresse verfügt, die schon während des Herstellungsprozesses zur Registrierung des Gerätes bekannt ist und als Kopie in dem Geräteregister des Server-Computersystems gespeichert werden kann. Die Übertragung der MAC-Adresse über den geschützten Kanal stellt sicher, dass nicht ein unberechtigt mitlesender Dritter die MAC Adresse in Erfahrung bringt und diese dazu verwendet, ein manipuliertes USB-Gerät erfolgreich gegenüber der Server-Applikation zu authentifizieren.

Nach Ausführungsformen ist die Geräte-ID ein mittels eines gerätespezifischen kryptographischen Schlüssels abgeleiteter Wert, insbesondere eine mit einem gerätespezifischen Signierschlüssel signierte Challenge der Server-Applikation. Die Authentifizierung umfasst eine Prüfung des abgeleiteten Wertes, insbesondere eine Prüfung, ob die Geräte-ID identisch zu der Challenge und ob die Signatur valide ist. Die Prüfung kann beispielsweise mit einem Signaturprüfschlüssel erfolgen, der in der Server-Applikation hinterlegtes. Beispielsweise kann die Signaturprüfung auch eine Prüfung eines Zertifikats, in welchem die Signatur enthalten ist, umfassen. Kryptographische Schlüssel, die auf manipulationssichere Weise in dem USB-Gerät gespeichert sind und die eindeutig sind für das USB Gerät, können als Geräte-ID verwendet werden oder dazu, eine Geräte-ID des USB Geräts abzuleiten, da sie sehr stark verschränkt sind mit der Hardware des USB-Geräts und einem bestimmten USB-Gerät eineindeutig zuordenbar sind. Die Verwendung kryptographischer Verfahren, insbesondere die Erzeugung einer elektronischen Signatur durch das USB Gerät, zum Beispiel die Signierung einer Challenge der Server-Applikation, kann vorteilhaft sein, da hierdurch ein komplexes Prüfschema unterstützt wird, welches nicht nur eine Prüfung auf das Vorhandensein eines identischen Referenzwerts erlaubt, sondern auch komplexere Prüfungen zum Beispiel bezüglich eines Gültigkeitszeitraums der Signatur. Die Prüfung kann eine Zertifikatskettenprüfung von Zertifikaten umfassen und/oder das Auslesen von Zusatzinformationen die in dem Zertifikat gespeichert sind.

Das Empfangen der Geräte-ID kann z.B. das Auslesen der Geräte-ID aus dem USB Gerät umfassen oder eine Ableitung der Geräte-ID durch das USB-Gerät und die Bereitstellung der abgeleiteten Geräte-ID an die Client-Applikation.

Nach Ausführungsformen der Erfindung erfolgt das Empfangen der Geräte-ID, die Übermittlung der Geräte-ID und der Empfang des Freigabesignals oder des Abbruchssignals von der Client-Applikation automatisch nach dem Herunterladen der Client-Applikation und unabhängig von einer Nutzer-Interaktion ("im Hintergrund").

Nach Ausführungsformen der Erfindung erfordert der Betrieb des lokalen USB-Geräts lediglich eine erfolgreiche Authentifikation des USB-Geräts gegenüber der Server-Applikation und den Empfang des Freigabesignals durch die Client-Applikation, nicht jedoch zusätzlich eine erfolgreiche Authentifikation des Nutzers gegenüber der Server-Applikation.

Dies kann vorteilhaft sein, da das Verfahren dadurch beschleunigt wird und die Anzahlen Nutzerinteraktionen mit dem Nutzer-Computer auf ein Minimum reduziert wird.

Nach Ausführungsformen der Erfindung beinhaltet das USB-Gerät einen im Zuge der Herstellung oder Aktivierung des USB-Geräts in dem Gerät geschützt gespeicherten geheimen Wert, insbesondere einen geheimen kryptographischen Schlüssel oder eine PIN. Das Verfahren umfasst: Erzeugung eines mit Hilfe des geheimen Wertes abgeleiteten Wertes durch das USB-Gerät, wobei der abgeleitete Wert als die Geräte-ID des Geräts verwendet wird, und Übermittlung des abgeleiteten Wertes von der Client-Applikation - vorzugsweise über den Kommunikationskanal - an die Server-Applikation. Die Authentifizierung umfasst eine Prüfung, ob der abgeleitete Wert in dem Register gespeichert ist oder sich von der Server-Applikation aus einem im Register gespeicherten Referenzwert mit einem vordefinierten Verfahren ableiten lässt.

Nach alternativen Ausführungsformen beinhaltet das USB-Gerät einen im Zuge der Herstellung oder Aktivierung des USB-Geräts in dem Gerät geschützt gespeicherten Signaturschlüssel. Das Verfahren umfasst: Erzeugung der Geräte-ID als einen signierten Datenwert mit Hilfe des Signaturschlüssels durch das USB-Gerät und Übermittlung der Signatur von der Client-Applikation über den Kommunikationskanal an die Server-Applikation. Die Authentifizierung umfasst eine Prüfung der Validität der Signatur mittels eines Signaturprüfschlüssels. Beispielsweise kann der Datenwert, der von dem USB-Gerät signiert wird, eine Challenge sein, die von der Server-Applikation an die Client-Applikation und von dieser wiederum an das USB-Gerät übertragen wurde. Beispielsweise kann die Challenge über den geschützten Kanal zwischen Client-Applikation und Server-Applikation übertragen werden. Dies kann besonders vorteilhaft sein, da die Challenge auf diese Art und Weise vor dem Zugriff des Browsers und potentieller Schadsoftware wirksam geschützt ist.

Beispielsweise kann die Authentifikation des USB-Geräts gegenüber der Server-Applikation so erfolgen, dass die Server-Applikation nach Erzeugung des sicheren Kommunikationskanals einen zufälligen Wert (die Challenge) erzeugt und über den Kanal an die Client-Applikation überträgt. Die Client-Applikation leitet die Challenge an das USB-Gerät weiter. Das USB-Gerät bildet aus der Zufallszahl und dem Geheimnis, z.B. der Geräte-PIN, je einen Hashwert mittels einer Hashfunktion (zum Beispiel MD5) und überträgt diese beiden Werte über die Client-Applikation an die Server-Applikation. Unter der Annahme, dass die verwendete Hashfunktion eine Einwegfunktion ist, lassen sich die Zufallszahl und das Geheimnis aus den Hashwerten nicht wieder errechnen. Die Server-Applikation errechnet ebenfalls einen Hashwert aus der Zufallszahl und dem bei ihr (im Klartext) hinterlegten Geheimnis. Wenn diese beiden Werte mit den vom zu authentifizierenden USB-Gerät bzw. Client-Applikation gesendeten Werten übereinstimmen, ist die Authentifizierung erfolgreich. Im Zuge eines erneuten Herunterladens und Instanziierens der Client-Applikation auf dem Nutzer-Computer erstellt die Server-Applikation im Zuge der erneuten Authentifizierung des USB-Geräts eine neue Challenge.

Nach Ausführungsformen der Erfindung umfasst das Verfahren ferner:
- Automatische Ermittlung des Typs und/oder einer Hardware-Version des USB-Geräts durch die Client-Applikation;
- Übertragung des ermittelten Typs und/oder der Hardwareversion über den Kommunikationskanal an die Server-Applikation;
- Automatisches Auswählen von ein oder mehreren USB-Gerät bezogenen Funktionen, die für den Betrieb des USB-Geräts des ermittelten Typs und/oder der ermittelten Hardware-Version geeignet sind, aus einer Vielzahl von auf dem Server-Computersystem für eine Vielzahl von USB-Gerätetypen und/oder Hardwareversionen bereitgestellten Funktionen, durch die Server-Applikation; und
- Verwenden selektiv der ausgewählten Funktionen durch die Server-Applikation zur Initialisierung und/oder zum Betrieb des USB-Geräts in Interoperation mit der Client-Applikation.

Diese Merkmale können insbesondere dann vorteilhaft sein, wenn ein Hersteller eine große Anzahl an verschiedenen Gerätetypen und Untertypen, gegebenenfalls noch jeweils in mehreren Versionen, unterstützt. Bei der Verwendung nativer Gerätetreiber besteht hier für den Anwender das große Problem, nicht nur Bediensoftware und entsprechende Treiber zu finden, die für das eigene Betriebssystem (Windows Vista, Windows 7, Windows 10, Apple, bestimmte Linux Distribution etc.) geeignet sind, und außerdem für das aktuell verwendete USB Gerät passen. Hierfür musste bisher in aufwendiger Weise zunächst Gerätetyp und Versionsnummer in Erfahrung gebracht werden und es musste festgestellt werden, welche Treiber bzw. Bediensoftware für speziell dieses Gerät geeignet ist. Beispielsweise kann ein Hersteller von Druckern verschieden Typen von Druckern (Tintenstrahl, Laser, verschiedene Untertypen mit oder ohne Duplexdruck und weiteren Zusatzfunktionen) jeweils in verschiedenen Versionen anbieten, die jeweils andere Treiber bzw. Versionen von Bediensoftware benötigen. Gemäß Ausführungsformen der Erfindung erfolgt die Identifikation und serverseitigen Instanziierung der geeigneten Software Funktionalität zur Bedienung des USB-Geräts vollautomatisch durch die Server-Applikation anhand den von der Client-Applikation zur Verfügung gestellten Daten bezüglich des Typs und/oder der Version des USB-Geräts. Dies kann die Inbetriebnahme und Bedienung des USB Geräts erheblich beschleunigen und Fehler bzw. sogar Schäden an dem Gerät durch die Auswahl einer Bediensoftware der falschen Version vermeiden.

Nach Ausführungsformen der Erfindung ist das eine lokale USB Gerät eines von ein oder mehreren USB-Geräten, die über eine lokale USB Verbindung mit dem Nutzer-Computersystem verbunden sind und die jeweils nach einer der hier beschriebenen Ausführungsformen eines erfinderischen Verfahrens betrieben werden. Die ein oder mehreren USB-Geräte jeweils ausgewählt sind aus einer Gruppe umfassend:
- ein Drucker zum Bedrucken und/oder Personalisieren von Wert- oder Sicherheitsdokumenten;
- eine Chipkarte mit integrierter USB-Schnittstelle, insbesondere eine Signatur-Chipkarte;
- ein Chipkartenlesegerät mit USB Schnittstelle.

Die Verwendung des Verfahrens zum Betrieb eines USB Geräts gemäß Ausführungsformen der Erfindung ist in dem Kontext der Verwendung von Druckern zur Personalisierung von Chipkarten und/oder im Kontext der Personalisierung von Chipkarten mit USB-Schnittstelle über ein Chipkartenlesegerät mit USB Schnittstelle besonders vorteilhaft, da die zur Personalisierung nötigen Softwarefunktionen nicht nur von Druckertyp und Version abhängen, sondern auch von Typ und Version des Lesegeräts und/oder von Typ und Version der USB-Chipkarte. In manchen Druckverfahren muss sowohl für den Drucker als auch für das verwendete Lesegerät und die jeweilige Chipkarte sowohl der Typ als auch in manchen Fällen die Version berücksichtigt werden, um die für die Personalisierung der Chipkarte nötige Softwarefunktion zu identifizieren. Angesichts der immensen kombinatorischen Komplexität und des Umstands dass manche Kombinationen von Softwarefunktionen in der Praxis zu Konflikten führen, ist eine manuelle Auswahl der einzelnen Softwarefunktionen, die nötig sind, um eine bestimmte Chipkarte mit einem Chipkartendrucker mit einem bestimmten Typlesegerät zu personalisieren derart komplex, dass sie innerhalb eines vertretbaren Zeitraums kaum möglich und in hohem Maße fehleranfällig ist. Ausführungsformen der Erfindung ermöglichen eine vollautomatische Auswahl von geeigneten Softwarefunktionen, die auf dem Server-Computer zu instanziieren sind, für eine beliebige Kombination aus einer Vielzahl von unterstützten Druckertypen, Lesegerättypen und Chipkartentypen und deren jeweiligen Versionen.

Nach Ausführungsformen der Erfindung umfasst das Verfahren ferner eine Bereitstellung einer Webpage über das Netzwerk durch den Server-Computer. Die Webpage beinhaltet Elemente, die dem Nutzer eine Konfiguration der Server-Applikation und optional eine Konfiguration optional vorhandener USB-Gerät-bezogener Funktionen ermöglicht. Die Webpage wird in dem Browser des Nutzer-Computers dem Nutzer des Nutzer-Computers angezeigt. Hierdurch wird es dem Nutzer ermöglicht, die Server-Applikation zu konfigurieren. Beispielsweise kann der Nutzer dadurch, dass er die URL der Webpage in den Browser eingibt, bewirken, dass in dem Browser eine Webseite mit verschiedenen Eingabefeldern angezeigt wird. In diese Felder kann der Nutzer beispielsweise angeben, wie viele Dokumente personalisiert werden sollen, mit welchen Daten die Dokumente personalisiert werden sollen, ob bestimmte Qualitätsprüfungen nach Personalisierung der Dokumente durchgeführt werden sollen, etc.

Diese Ausführungsform hat den Vorteil, dass Webseiten sehr schnell als HTML Code spezifiziert und übertragen werden können. Nachteilig an dieser Ausführungsform ist aber, dass ein Webinterface zur Bedienung der auf dem Server-Computersystem instanziierten Softwareprogramme, zum Beispiel auch der Server-Applikation, zur Verfügung gestellt werden muss. Dies erfordert zum einen den Aufwand, entsprechende HTML Schnittstellen zu programmieren und kann in manchen Fällen auch ein Sicherheitsrisiko darstellen.

Nach bevorzugten Ausführungsformen wird dem Nutzer eine Bedienung des USB-Gerätes daher auf andere Weise ermöglicht, nämlich dadurch, dass die Server-Applikation als Screen-Sharing Server Applikation arbeitet, die den virtuellen Desktop des Server-Computersystems an den Nutzer-Computer überträgt. Die Client-Applikation arbeitet als Screen-Sharing Client-Applikation, die den grafischen Inhalt des virtuellen Desktop von der Server-Applikation empfängt und Nutzer-Interaktionsdaten (Bildschirmposition und Zeit einer Nutzeraktion wie zum Beispiel Mausklick, Scroll-Bewegung, Tastatureingabe etc.), die auf dem Nutzer-Computersystem von dem Nutzer erzeugt werden, an die Server-Applikation überträgt. In Interoperation der Client-Applikation und der Server-Applikation wird es dem Nutzer somit ermöglicht, von seinem Nutzer-Computersystem aus auf alle Applikationen zuzugreifen, die auf dem Server-Computersystem instanziiert sind und über den virtuellen Desktop für den Nutzer zugänglich sind.

Diese Ausführungsvariante hat den Vorteil, dass Programme zur Bedienung des USB Geräts auf dem Server-Computersystem instanziiert werden können und der Nutzer auf diese zugreifen kann, ohne dass es erforderlich ist, diese Programme lokal auf dem Nutzer-Computersystem zu installieren. Die Client-Applikation muss also keinerlei komplexe Bedienlogik für das USB Gerät beinhalten und kann damit eine sehr geringe Größe aufweisen, die sehr schnell auch über eine langsame Netzwerkverbindung heruntergeladen werden kann.

In einem weiteren vorteilhaften Aspekt ist die Bediensoftware vor Reverse Engineering geschützt, da diese niemals den Server-Computer verlässt.

In einem weiteren vorteilhaften Aspekt ist es nicht erforderlich, zusätzlich ein HTML-Interface zur Bedienung von ein oder mehreren Softwareprogrammen bereitzustellen, die zum Betrieb des USB-Geräts über das Netzwerk erforderlich sind. Vielmehr kann die Bediensoftware genutzt werden, wie sie klassischerweise für den Betrieb komplexer Hardware Geräte entwickelt wird, also komplexe, oftmals objektorientierte Programme, zum Beispiel Java Programme.

In einem weiteren vorteilhaften Aspekt können problemlos sogar eine Vielzahl unterschiedlicher Programme, die auf dem Server-Computersystem instanziiert sind, zum Betrieb des USB-Geräts über das Netzwerk genutzt werden. Es ist ja noch nicht einmal erforderlich, dass diese unterschiedlichen Programme eine spezielle Schnittstelle zueinander haben. Beispielsweise kann auf dem Server-Computersystem ein Grafikprogramm wie zum Beispiel Adobe Photoshop installiert sein, welches es dem Nutzer ermöglicht, Helligkeit und/oder Kontrast von Gesichtsbildern, die zur Personalisierung von Ausweisdokumenten verwendet werden sollen, anzupassen. Die entsprechend überarbeiteten Bilder können vom Nutzer manuell in einem frei wählbaren Verzeichnis auf dem Server gespeichert werden und im nächsten Schritt in ein anderes Programm, in welchem Adressdaten und weitere personenbezogene Daten der Person, für welche das Ausweisdokument erstellt werden soll, importiert werden. Außerdem kann auf dem Server-Computersystem ein weiteres Programm zur Kalibrierung und/oder Wartung des Dokumentendruckers vorhanden sein. Die Server-Applikation kann als weitere, separate auf dem Server-Computersystem instanziierte Applikation ausgebildet sein, die im wesentlichen Funktionen für die Registrierung und Authentifizierung von USB-Geräten und/oder von Nutzern sowie für Screen-Sharing-Server-Funktionalität beinhaltet. In diesem Fall übernimmt die Server-Applikation also im wesentlichen nur Authentifizierungs- und Screen-Sharing-Funktionalitäten. Die Server-Applikation kann aber in anderen Ausführungsformen auch eine Kombination aus einer gerätebezogenen Bediensoftware zum Beispiel zur Kalibrierung eines Druckers und der besagten Authentifizierungs- und Screen-Sharing-Funktionalität beinhalten.

Nach Ausführungsformen der Erfindung sind auf dem Server-Computersystem mehrere USB Gerät-bezogene Funktionen gespeichert und optional auch instanziiert. Diese Funktionen umfassen:
- eine Mehrzahl von Gerätetyp-spezifischen Gerätetreibern für mehrere unterschiedliche Gerätetypen, und/oder:
- eine Mehrzahl von Versionen des gleichen Gerätetreibers, und/oder
- eine Mehrzahl von Programmen zur Installation auf einem USB Gerät, insbesondere Firmwareupdates, Patches und/oder funktionale Erweiterungsmodule für das USB-Gerät; und/oder
- ein oder mehrere Programme zur automatischen Validierung und/oder Modifikation biometrischer Daten, die von dem USB-Gerät erfasst und - vorzugsweise über den Kommunikationskanal nach Anspruch 2 - an die Server-Applikation übertragen wurden; und/oder
- ein oder mehrere Programme zur Bearbeitung von Daten, die von dem USB-Gerät bereitgestellt werden oder die dem USB-Gerät zur weiteren Verwendung bereitgestellt werden sollen; und/oder
- ein oder mehrere Programme, die eine Nutzereingabe zur Steuerung des Programmablaufs ermöglichen.

Beispielsweise kann jede dieser Funktionen eine graphische Benutzeroberfläche beinhalten, die einem Nutzer den Aufruf bzw. die Bedienung und/oder Konfiguration dieser Funktionen über die grafische Benutzeroberfläche ermöglicht. Die grafischen Benutzeroberflächen der Funktionen werden nach Ausführungsformen der Erfindung von der Server-Applikation die als Screen-Sharing-Server-Applikation arbeitet, über das Netzwerk, vorzugsweise über den geschützten Kanal, an die Client-Applikation übertragen. Die Client-Applikation sorgt dafür, dass der grafische Inhalt dieser grafischen Benutzeroberflächen dem Nutzer über einen Bildschirm des Nutzer-Computersystems angezeigt wird. Der grafische Inhalt besteht vorzugsweise in einer Serie von Screenshots des virtuellen Desktops, der von dem Server-Computersystem erzeugt wird. Die Client-Applikation ist dazu ausgebildet, zu erfassen, wann und an welcher Position der Nutzer auf welche Art und Weise (Mausklick, Tastatureingabe, etc.) mit einem angezeigten Screenshot des virtuellen Desktops interagiert und übermittelt diese Angaben bezüglich Position, Zeit und Art der Nutzeraktion zurück an die Server-Applikation. Die Server-Applikation stellt fest, auf welche der Funktionen bzw. auf welches Eingabefeld der grafischen Benutzeroberflächen sich die Eingabe des Nutzers bezog und erzeugt serverseitig eine entsprechende Eingabe, die bewirkt, dass die serverseitige Funktionalität gemäß den Eingaben des Nutzers gesteuert bzw. konfiguriert wird. Somit wird es dem Nutzer ermöglicht, mittels ein oder mehrerer Funktionen bzw. Applikationen, die auf dem Server-Computersystem instanziiert sind, das USB Gerät zu betreiben, ohne diese speziellen Funktionen lokal installieren zu müssen.

Nach Ausführungsformen der Erfindung umfasst das Server-Computersystem mehrere USB-Gerät-bezogene Funktionen. Diese Funktionen können teilweise oder vollständig integraler Bestandteil der Server-Applikation sein oder können als separate, unabhängige Applikationen, die auf dem Server-Computersystem instanziiert sind, realisiert sein. Die Initialisierung und/oder der Betrieb des USB-Geräts erfolgt dadurch, dass die Client-Applikation in Interoperation mit der Server-Applikation einem Nutzer des Nutzer-Computersystems über eine GUI der Client-Applikation Zugriff auf die serverseitig instanziierten, USB-Gerät bezogenen Funktionen ermöglicht. Hierbei fungiert die Server-Applikation als virtuelle Screen-Sharing Applikation um dem Nutzer Zugriff auf GUIs der auf dem Server-Computersystem instanziierten USB-Gerät-bezogenen Funktionen zu ermöglichen.

Die hier beschriebene Kombination aus WebUSB-Schnittstelle und einer Client-Server-basierten Screen-Sharing-Applikation zur Bedienung eines lokalen USB-Gerätes kann aus mehreren Gründen besonders vorteilhaft sein:
ein oder mehrere Programme zur Bedienung des USB Geräts können auf dem Server instanziiert sein und müssen nicht über das Netzwerk auf das Nutzer-Computersystem übertragen werden. Dies reduziert die Menge an Daten, die über das Netzwerk übertragen werden muss und erhöht damit die Performance. Außerdem erleichtert es die Wartung und Aktualisierung der Bediensoftware, denn der Betreiber des Server-Computersystems kann die auf diesem System installierten Applikationen ohne weiteres ersetzen, updaten oder auf andere Weise verbessern ohne dass der Nutzer des Nutzer-Computersystems hierin involviert sein müsste. Da die Interaktion mit der serverseitigen Bediensoftware über eine Screen-Sharing Funktionalität erfolgt, die als Bestandteil der Client-Applikation innerhalb des Browsers läuft, muss der Nutzer auch keine spezielle Screen-Sharing-Applikation vor installiert haben. Die Screen-Sharing-Funktionalität wird bei Bedarf als Bestandteil der Client-Applikation heruntergeladen und im Browser des Nutzers ausgeführt. Außerdem ist besonders vorteilhaft, dass eine Vielzahl von Applikationen serverseitig installiert und instanziiert sein können, welche weder untereinander noch mit der Client-Applikation eine spezifische Schnittstelle aufweisen müssen. Beispielsweise kann ein Standard-Grafikprogramm wie zum Beispiel Adobe Photoshop auf dem Server-Computersystem installiert sein und kann vom Nutzer per Screen-Sharing-Funktionalität der Client-Applikation genutzt werden, um Gesichtsbilder von Personen, die im Zuge der Personalisierung von Sicherheitsdokumenten auf oder in dem Dokument gedruckt werden sollen, zu überarbeiten. Zusätzlich kann auf dem Server ein spezielles Programm zur Bedienung eines Dokumentendruckers instanziiert sein, mit dessen Hilfe man den USB-Drucker des Nutzers kalibrieren und konfigurieren kann und welches es zudem erlaubt, Gesichtsbilder zu importieren und auf das Dokument zu drucken. Es ist also nicht erforderlich, dass spezielle Schnittstellen zwischen der Drucker-Bediensoftware und Adobe Photoshop bzw. der Grafiksoftware erstellt werden. Vielmehr kann der Nutzer mit beiden Programmen die jeweils anfallenden Tätigkeiten ausführen, indem er per Screen-Sharing-Funktionalität auf das Server-Computersystem zugreift und sie darauf instanziierten Programme nutzt als hätte er sich vor Ort in das Server-Computersystem eingeloggt.

Nach Ausführungsformen der Erfindung beinhaltet das Verfahren das Ersetzen von ein oder mehreren der Softwarefunktionen durch eine aktuellere Version.

Wie bereits zuvor dargestellt ist die Wartung und Aktualisierung der serverseitig instanziierten Bediensoftware besonders einfach, denn der Nutzer des Nutzer-Computersystems muss keinerlei Änderungen oder Aktualisierungen an der Software des Nutzer-Computersystems vornehmen, um von den Aktualisierungen der serverseitigen Programme zu profitieren. Vorzugsweise werden die ein oder mehreren auf dem Server-Computersystem instanziierten Programme zur Bedienung einer Vielzahl von USB-Geräten, die über eine lokale USB Verbindung mit einer Vielzahl verschiedener Nutzer-Computersysteme verbunden sind, verwendet. Somit profitiert eine große Anzahl an Nutzern von einer einmalig serverseitig durchgeführten Aktualisierung einer Software zur Bedienung der USB-Geräte.

Nach Ausführungsformen der Erfindung ist die Client-Applikation eine browserbasierte Applikation (auch "App" genannt), insbesondere eine JavaScript-Applikation.

Zusätzlich oder alternativ dazu umfasst die Client-Applikation Programlogik zur Durchführung einer Authentifizierung des USB-Gerätes gegenüber dem Server-Computersystem. Die Client-Applikation beinhaltet vorzugsweise auch Programmlogik zum Aufbau des Kommunikationskanals in Interoperation mit der Server-Applikation. Vorzugsweise ist die Client-Applikation im Wesentlichen frei von gerätespezifischer Programlogik zur Steuerung und zum Betrieb des USB-Gerätes.

Unter einer "Programmlogik" wird hier ein Softwareprogramm oder ein Teil eines Softwareprogramms verstanden.

Zusätzlich oder alternativ dazu umfasst die Client-Applikation Programlogik zur Erfassung von Zeit, Ort und Art von Nutzer-Interaktionen des Nutzers mit einer GUI der Client-Applikation und zur Weiterleitung dieser erfassten Daten an die Server-Applikation. Angaben bezüglich der Zeit, des Ortes und der Art der Nutzer Interaktionen können zum Beispiel Informationen beinhalten, wann ein Nutzer auf einem bestimmten Punkt des Bildschirms, der zum Beispiel über X, Y Bildschirmpixel-Koordinaten spezifiziert sein kann, einen bestimmten Typ von Nutzeraktion (Klick linke Maustaste, Klick rechte Maustaste, Scrollbewegung, Tastatureingabe, Cursorbewegung, Spracheingabe etc.) durchgeführt hat. Sofern der Nutzer die Nutzeraktion auf einem Bildschirmbereich ausgeführt hat, der von der Client, Applikation erzeugt wird und einem Bild (Screenshot) des virtuellen Desktops des Server-Computersystems entspricht, übermittelt die Client-Applikation die erfassten Angaben zu Zeit, Ort und Art der Nutzer-Interaktion an die Server-Applikation. Die Server-Applikation leitet die Nutzer-Aktion an diejenigen serverseitig instanziierten Programme weiter, auf deren GUI sich die Aktion des Nutzers bezog. Somit kann der Nutzer des Nutzer-Computersystems eine Vielzahl unterschiedlicher serverseitig instanziierter Programme nutzen, um das Lokal an das Nutzer-Computersystem angeschlossene USB-Gerät zu bedienen, ohne hierfür eine einzige gerätespezifische Software installieren zu müssen und ohne eine bestimmte Art von Screen-Sharing-Software permanent bzw. vorab installiert haben zu müssen. Dies erhöht auch die Sicherheit, denn die innerhalb der Client-Applikation laufende Screen-Sharing-Client-Funktionalität existiert nur so lange auf dem Nutzer-Computersystem, wie diese wirklich zur Bedienung des USB-Geräts benötigt wird.

Zusätzlich oder alternativ dazu implementiert die Client-Applikation eine Screen-Sharing-Client-funktion und ist dazu ausgebildet, Bilder (Screenshots) des virtuellen Desktops des Server-Computersystems (das den graphischen Inhalt der Server-Applikation und optional auch den Inhalt weiterer auf dem Server-Computersystem instanziierter Programme enthält) von der Server-Applikation zu empfangen und dem Nutzer in einer GUI der Client-Applikation anzuzeigen.

Nach Ausführungsformen der Erfindung nutzen die Client-Applikation und die Server-Applikation existierende Screen-Sharing-Protokolle wie zum Beispiel RDP - remote desktop protocol oder VNC - Virtual Network Computing Protokoll, um die Screen-Sharing-Funktionalität bereitzustellen.

Nach Ausführungsformen der Erfindung enthält die Server-Applikation Programlogik zur Authentifizierung von USB-Geräten anhand des Registers und der empfangenen Geräte-ID, zum Erzeugen des Freigabesignals oder des Abbruchssignals, und gerätespezifische Programlogik zur Steuerung und zum Betrieb des USB-Gerätes (oder mehrerer USB Geräte) in Abhängigkeit von empfangenen Informationen über Zeit, Ort und Art von Nutzerinteraktionen. Die Server-Applikation umfasst vorzugsweise auch Programmlogik zum Aufbau des Kommunikationskanals in Interoperation mit der Client-Applikation.

Nach Ausführungsformen der Erfindung umfasst die Server-Applikation Programlogik eine Screen-Sharing-Server-funktion, die beispielsweise auf existierenden Protokollen und/oder Programmen wie zum Beispiel RDP - remote desktop protocol, VNC - Virtual Network Computing Protokoll, Apache Guacamole aufbaut. Beispielsweise kann die Server-Applikation das Programm Apache Guacamole nutzen, um den virtuellen Arbeitsplatz (Desktop) des Server-Computersystems in Form einer Serie von Bildern (Screenshots) an die Client Applikation zu übertragen. Vorzugsweise wird zur Übertragung der geschützte Kommunikationskanal verwendet.

Nach bevorzugten Ausführungsformen ist die Server-Applikation dazu ausgebildet, in Echtzeit den Inhalt von GUIs der Server-Applikation und optional auch den Inhalt weiterer auf dem Server-Computersystem instanziierter Programme an die Client-Applikation zu übertragen und Nutzerinteraktionen mit den übertragenen Inhalten in Steuerungsbefehle an das USB-Gerät umzusetzen.

Nach Ausführungsformen der Erfindung verbleibt die Funktionalität zur Bedienung des Geräts somit auf dem Server-Computersystem,. Die dynamisch bei Bedarf/beim Besuchen einer bestimmten Webseite heruntergeladene Client-Applikationsprogramm beinhaltet nach Ausführungsformen lediglich Programlogik zur Authentifizierung des USB-Geräts gegenüber der Server-Applikation, zum Aufbau des geschützten Kommunikationskanals, zum Empfang von Bildern des Desktops des Server-Computersystems und zur Übermittlung von Nutzeraktion an die Server-Applikation. Die Client-Applikation dienst somit als "schlanke", kommunikative Schnittstelle zwischen Nutzer bzw. Nutzer-Computersystem/USB-Gerät und Server-Applikation, welche selbst aber keine oder nur sehr wenige Funktionen zur Bedienung des Geräts beinhaltet. Dies stellt sicher, dass die Client-Applikation nur eine geringe Größe hat und schnell heruntergeladen werden kann.

Die Bedienung eines Geräts per WebUSB stellt zum anderen sicher, dass die eigentliche Bediensoftware des Geräts, in welcher sich sensitive Anweisungen befinden können, z.B. wie und wo bestimmte Sicherheitsmerkmale auf ein Dokument gedruckt werden sollen, den Server-Computer niemals verlässt. Dies stellt einen wirksamen Schutz vor Reverse-Engineering dar.

Falls die Authentifizierung ergibt, dass das USB Gerät nicht registriert oder gesperrt ist, sendet die Server-Applikation gemäß Ausführungsformen der Erfindung ein Abbruchsignals an die Client Applikation. Die Client-Applikation ist dazu konfiguriert, in Antwort auf den Erhalt eines Abbruchsignals eine Fehlernachricht an den Nutzer des Nutzer-Computersystems auszugeben.

Dies kann vorteilhaft sein, da der Nutzer frühzeitig darüber informiert wird, dass Probleme bei der Authentifizierung aufgetreten sind und möglicherweise ein Sicherheitsproblem bezüglich des USB-Geräts vorliegt. Beispielsweise könnte das USB-Gerät manipuliert sein.

Nach Ausführungsformen der Erfindung ist die lokale USB-Schnittstelle eine kabelgebundene USB-Schnittstelle ist.

Nach anderen Ausführungsformen der Erfindung ist die lokale USB-Schnittstelle eine per WLAN an das Nutzer-Computersystem gekoppelte USB-Schnittstelle.

Nach wieder anderen Ausführungsformen der Erfindung ist die lokale USB-Schnittstelle eine per Bluetooth an das Nutzer-Computersystem gekoppelte USB Schnittstelle.

Nach weiteren Ausführungsformen der Erfindung ist die lokale USB-Schnittstelle eine per Nahfeldkommunikation drahtlos an das Nutzer-Computersystem gekoppelte USB Schnittstelle, wobei die Reichweite der Nahfeldkommunikation und der Abstand des USB-Gerätes von dem Nutzer-Computersystem kleiner ist als 15 m.

Nach Ausführungsformen der Erfindung ist das Nutzer-Computersystem frei von einem persistent gespeicherten USB-Gerät-spezifischen Treiber und frei von einer persistent gespeicherten Software zum Betrieb des USB-Geräts. Dennoch ist der Betrieb des lokal angeschlossenen USB-Gerätes möglich, in dem der Nutzer eine Bestimmte Seite in seinen WebUSB-fähigen Browser öffnet und die hier beschriebene Client-Software herunterlädt und ausführt.

Ausführungsformen der Erfindung sind vielfältig einsetzbar, etwa zur Bedienung verschiedener Maschinen, die innerhalb eines Produktionsprozesses verschiedenster Güter zusammenwirken, zur Fernwartung von Laborgeräten mit einem USB Anschluss, zur Überwachung chemischer Synthesen und Analyseprozesse etc.

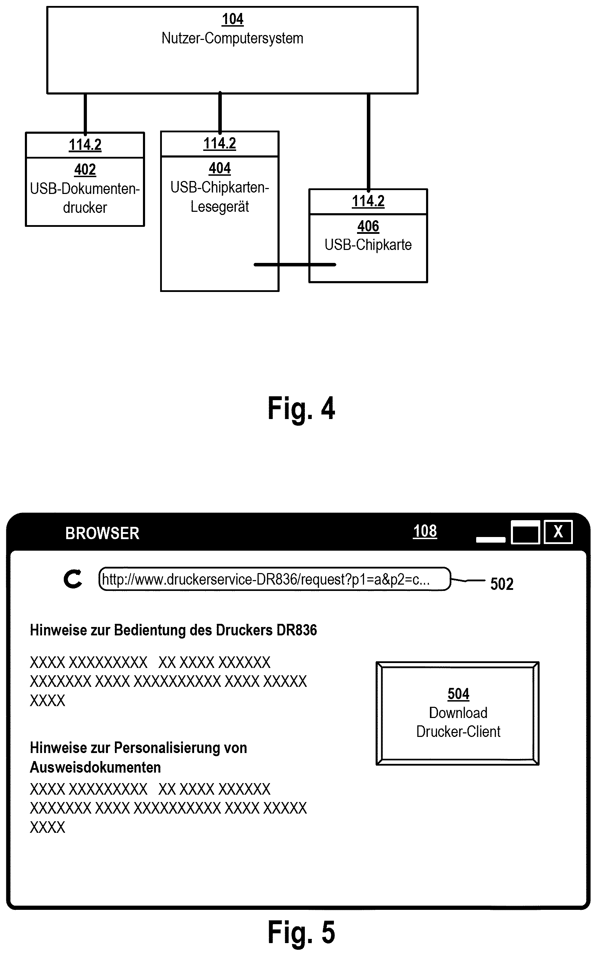

Gemäß manchen Ausführungsformen der Erfindung wird das hier beschriebene Verfahren zur Bedienung von ein oder mehreren USB-Geräten zum Erstellen von Wert- oder Sicherheitsdokumenten, zum Personalisieren dieser Dokumente und für weitere Anwendungsszenarien verwendet. Einige besonders vorteilhafte Anwendungsmöglichkeiten sind zum Beispiel im Hinblick auf Figur 4 beschrieben.

In einem weiteren Aspekt betrifft die Erfindung ein System, welches zumindest ein Nutzer-Computersystem umfasst.

Das Nutzer-Computersystem beinhaltet eine lokale USB-Schnittstelle, über welche ein USB-Gerät an das Nutzer-Computersystem lokal anschließbar ist und/oder angeschlossen ist. Außerdem beinhaltet das Nutzer-Computersystem einen WebUSB-fähigen Browser, zum Beispiel Google Chrome, sowie eine Netzwerkschnittstelle um mit einem Server-Computersystem über ein Netzwerk, zum Beispiel das Internet, Daten austauschen zu können.

Außerdem ist auf dem Nutzer-Computersystem eine Client-Applikation instanziiert, die mit einer auf dem Server-Computersystem instanziierten Server-Applikation über eine WebUSB-Schnittstelle interoperabel ist. Die Client-Applikation ist konfiguriert zum:
- automatisches Empfangen einer Geräte-ID von dem USB Gerät über die lokale USB-Schnittstelle;
- Übermittlung der empfangenen Geräte-ID an die Server-Applikation um das USB-Gerät gegenüber der Server-Applikation anhand der Geräte-ID zu authentifizieren;
- Empfang eines Freigabesignal von der Server-Applikation nach erfolgreicher Authentifikation; und
- Betrieb des lokalen USB-Gerätes in Interoperation mit der Server-Applikation nur in Antwort auf einen Erhalt des Freigabesignals.

Nach bevorzugten Ausführungsformen ist die Client-Applikation dazu ausgebildet, mit der Server-Applikation einen Kommunikationskanal aufzubauen und darüber die Geräte-ID zu verwenden und das Freigabesignal zu empfangen. Insbesondere kann es sich bei dem Kommunikationskanal um einen geschützten Kommunikationskanal, zum Beispiel um einen Ende-zu-Ende verschlüsselten Kommunikationskanal handeln.

Nach Ausführungsformen der Erfindung beinhaltet das System außerdem das USB-Gerät.

In einem weiteren Aspekt betrifft die Erfindung ein Server-Computersystem. Das Server-Computersystem beinhaltet ein Register mit einer Vielzahl von Geräte-IDs von bei dem Server-Computersystem registrierten USB-Geräten und eine Server-Applikation. Die Server-Applikation ist mit einer auf einem Nutzer-Computersystem erzeugten Instanz einer Client-Applikation über eine WebUSB-Schnittstelle interoperabel. Die Server-Applikation ist ausgebildet zum: Empfang einer Geräte-ID des USB-Geräts von der Client-Applikation; Authentifizierung des USB-Geräts gegenüber der Server-Applikation als eines der registrierten USB-Geräte unter Verwendung der Geräte-ID; Zusätzlich oder alternativ dazu Authentifizierung des Nutzers des USB-Geräts gegenüber der Server-Applikation als ein zum Betrieb des registrierten USB-Geräts berechtigter Nutzer unter Verwendung eines Berechtigungsnachweises. Der Berechtigungsnachweis des Nutzers kann ausgewählt sein aus einer Gruppe umfassend: biometrische Daten des Nutzers; Daten eines Sicherheitsdokuments wie z.B. Personalausweis oder Reisepass; Nutzername-PasswortKombination; Geräte-ID des USB-Geräts. Im Falle einer erfolgreichen Authentifizierung, Senden eines Freigabesignal von der Server-Applikation an die Client-Applikation und Betrieb des USB-Gerätes in Interoperation mit der Client-Applikation.

Nach bevorzugten Ausführungsformen ist die Server-Applikation in Interoperation mit der Client-Applikation zum Aufbau eines Kommunikationskanals zwischen der heruntergeladenen Client-Applikation und der Server-Applikation ausgebildet und dazu, die Geräte-ID über diesen Kanal zu empfangen und das Freigabesignal über diesen Kanal zu senden.

Nach Ausführungsformen umfasst die Server-Applikation eine Screen-Sharing Funktion und ist dazu ausgebildet, den graphischen Inhalt der GUI der Server-Applikation und/oder den graphischen Inhalt der GUIs weiterer Applikationen zum Betrieb des USB-Geräts an die Client-Applikation zu übermitteln.

Der Name "USB" steht für Universal Serial Bus und bezeichnet ein serielles Bussystem zur Verbindung eines Computers mit externen Geräten. Mit USB ausgestattete Geräte oder Speichermedien, wie etwa USB-Speichersticks, können im laufenden Betrieb miteinander verbunden (Hot Plugging) und angeschlossene Geräte sowie deren Eigenschaften automatisch erkannt werden.

Nach Ausführungsformen ist ein USB Bussystem ein Bussystem, welches Daten bitseriell überträgt, das heißt, die einzelnen Bits werden nacheinander übertragen. Im Vergleich zu bitparallelen Verbindungen - wie etwa IEEE 1284 ("Centronics") - ist eine hohe Datenübertragungsrate mit relativ geringem Aufwand zu erreichen, da nicht mehrere Signale gleichzeitig mit gleichem elektrischen Verhalten übertragen werden müssen. Es steht eine Palette unterschiedlicher Übertragungsgeschwindigkeiten zur Verfügung. Je nach den sich aus der Anwendung ergebenden Anforderungen kann die maximale Datenübertragungsrate stark variieren, wobei die Wahl der maximalen Datenübertragungsrate Einfluss hat auf diverse Parameter, wie etwa Aufwand der Implementierung, Auswahl des Kabelmaterials, Steckertypen oder auch benutzte Signalspannungen.

In der Regel werden USB Schnittstellen vom USB-Konsortium standardisiert. Der Begriff "USB" umfasst gemäß Ausführungsformen der Erfindung jedoch auch serielle Bussysteme, die nicht vom USB-Konsortium standardisiert werden, insbesondere USB Systeme für den industriellen Einsatz, z.B. bei POS-Anwendungen wie etwa Kassensystemen. Hier gibt es mehrere weitere USB-Stecker-Varianten mit deutlich höheren Strombelastbarkeiten von bis zu 6 A (3 A pro Kontakt). Diese Varianten werden in zum Teil lizenzpflichtigen Standards namens Retail USB, PoweredUSB, USB PlusPower oder USB +Power von Unternehmen wie IBM, Microsoft, NCR und Berg/FCI lizensiert. Außerdem umfasst der Begriff gemäß Ausführungsformen der Erfindung Micro- und Mini-USB Systeme, die insb. für Geräte mit geringerem Platzangebot (digitale Kameras, Mobiltelefone, MP3-Player und andere mobile Geräte) relevant sind und für welche besonders kompakte USB-Steckverbinder verfügbar sind. Im USB-2.0-Standard verankert sind dabei lediglich fünfpolige Mini- und Micro-Varianten (plus Schirm), die gegenüber den normalen USB-Steckverbindern über einen zusätzlichen ID-Pin verfügen, z.B. "Mini-A", "Mini-A-" und "Mini-AB-Steckverbinder".

In einem Aspekt betrifft die Erfindung ein Verfahren zum Betrieb eines lokalen USB-Gerätes, welches keine Authentisierung an einer Server-Computersystem beinhaltet, umfassend:
- Bereitstellung eines Nutzer-Computersystems mit einem WebUSB-fähigen Browser, wobei das USB-Gerät an das Nutzer-Computersystem über eine lokale USB-Schnittstelle des Nutzer-Computersystems verbunden ist;
- Bereitstellung eines Server-Computersystems mit einem Register und mit einer auf dem Server-Computersystem instanziierten Server-Applikation, wobei das Register eine Vielzahl von Geräte-IDs von bei dem Server-Computersystem registrierten USB-Geräten beinhaltet;
- Herunterladen einer Client-Applikation, die mit der Server-Applikation über eine WebUSB-Schnittstelle interoperabel ist, von dem Server-Computersystem über ein Netzwerk durch den Browser;
- automatisches Empfangen einer Geräte-ID des USB Geräts von dem USB-Gerät durch die Client-Applikation über die lokale USB-Schnittstelle;
- Betrieb des lokalen USB-Gerätes durch die Client-Applikation in Interoperation mit der Server-Applikation. Beispielsweise kann das Verfahren keine Authentifizierung des USB-Geräts gegenüber dem Server-Computersystem vorsehen oder das USB-Gerät oder ein Nutzer, z.B. der lokale Nutzer des USB-Geräts, authentifiziert sich gegenüber der Server-Applikation und erhält von dieser bei erfolgreicher Authentifikation ein Freigabesignal zum Betrieb des USB Geräts über die Client-Applikation.

Nach einer Ausführungsform umfasst das Verfahren eine Authentifizierung des Nutzers gegenüber dem Server-Computersystem. Das Verfahren umfasst folgende Schritte:
- Übermittlung eines Berechtigungsnachweises des Nutzers von der Client-Applikation an die Server-Applikation um den Nutzer des USB-Geräts gegenüber der Server-Applikation als einen Nutzer zu authentifizieren, der berechtigt ist, das registrierte USB-Gerät zu nutzen; bei dem Berechtigungsnachweis kann es sich z.B. um biometrische Daten des Nutzers, um Daten eines Identitätsdokuments (z.B. Personalausweis oder Reisepass) oder Nutzername-Passwortkombination, oder um die Geräte-ID des USB-Geräts, oder Kombinationen von zwei oder mehr dieser Elemente handeln;
- Im Falle einer erfolgreichen Authentifizierung des Nutzers, Senden eines Freigabesignals von der Server-Applikation an die Client-Applikation;
- Betrieb des lokalen USB-Gerätes durch die Client-Applikation in Interoperation mit der Server-Applikation nur in Antwort auf einen Erhalt des Freigabesignals.

Die hier im Hinblick auf das Bedienverfahren beschriebenen Schritte sind so zu verstehen, dass sie implizit auch die Fähigkeit der jeweiligen diese Schritte ausführenden Komponenten offenbaren, diese Schritte durchzuführen. In analoger Weise sind im Hinblick auf die Client-Applikation oder die Server-Applikation beschriebenen Merkmale auch Merkmale von Verfahren, die entsprechende Schritte beinhalten.

Ein "USB-Gerät" ist ein Gerät mit mindestens einer USB Schnittstelle für den Austausch von Daten mit einem Computer über diese USB Schnittstelle. Diese USB Schnittstelle wird auch als "lokale USB Schnittstelle" bezeichnet, da diese eine Bedienung des USB-Geräts über einen Computer ermöglicht, welcher sich in räumlicher Nähe zu dem USB-Gerät befindet und mit dem USB-Gerät über die lokale USB-Schnittstelle verbunden ist. Ein über eine lokale USB-Schnittstelle an ein Computersystem angeschlossenes USB-Gerät wird auch als "lokales USB Gerät" bezeichnet.

Unter einer "lokalen USB-Schnittstelle" wird hier eine USB-Schnittstelle verstanden welche den Betrieb des USB-Geräts über einen Computer, der sich in räumlicher Nähe zu dem USB-Gerät befindet, ermöglicht. Die lokale USB-Schnittstelle kann kabelgebunden oder drahtlos ausgestaltet sein. Falls die lokale USB-Schnittstelle kabelgebunden ist, entspricht die räumliche Nähe der Länge des Kabels. Falls die lokale USB-Schnittstelle drahtlos ausgestaltet ist, entspricht die räumliche Nähe der Reichweite der drahtlosen Signalübertragung.

Ein Beispiel für eine drahtlose lokale USB-Schnittstelle ist die sog. "Certified Wireless USB" (kurz CWUSB). CWUSB ist eine funkbasierte Erweiterung des Universal-Serial-Bus-Standards und soll die Sicherheit und Geschwindigkeit der kabelgebundenen Übertragung mit der unkomplizierten kabellosen Übertragung kombinieren. CWUSB ist definiert durch das USB Implementers Forum. Ein weiteres Beispiel für eine drahtlose lokale USB-Schnittstelle ist eine drahtlose USB Schnittstelle gemäß der Spezifikation zu WUSB von Cypress Semiconductors.

Eine "lokale USB-Schnittstelle" entspricht also einer konventionellen "USB-Schnittstelle" in Abgrenzung von einer "WebUSB Schnittstelle".

Unter einer "WebUSB Schnittstelle" wird hier eine Schnittstelle bezeichnet, welche den Betrieb eines USB-Geräts über ein Netzwerk durch einen "entfernten Computer" erlaubt, wobei das USB-Gerät über eine lokale USB-Schnittstelle mit einem "lokalen Computer" verbunden ist, nicht aber mit dem "entfernten Computer", und wobei der "entfernten Computer" mit dem lokalen Computer über das Netzwerk verbunden ist. Das Netzwerk kann insbesondere das Internet sein. Eine WebUSB-Schnittstelle erlaubt es, USB-Gerätedienste über das Internet an entfernt ("remote") arbeitende Nutzer bereitzustellen.

Gemäß Ausführungsformen der Erfindung basiert die WebUSB-Schnittstelle auf einer WebUSB API, die es Entwicklern ermöglicht, unter Verwendung bereits vorhandener nativer USB-Bibliotheken eine definierte Geräteschnittstelle über ein Netzwerk zur Verfügung zu stellen. Mit dieser API haben Hardwarehersteller die Möglichkeit, plattformübergreifende Client-Applikationen, die z.B. mittels des JavaScript-SDKs programmiert werden können, für ihre Geräte zu erstellen. Anstatt darauf zu warten, dass ein neuer Typ von Gerät weit verbreitet genug ist, um von einem Browser direkt erkannt und angesteuert zu werden, kann der Hersteller also neue und innovative Hardware für das Web entwickeln, die vom ersten Tag an über das Netz genutzt werden kann. Die WebUSB-API bietet also eine Möglichkeit, USB-Gerätedienste im Internet bereitzustellen bzw. über das Internet zu steuern. Es bietet eine API, die Entwicklern vertraut ist, die bereits vorhandene native USB-Bibliotheken verwendet haben, und stellt die durch bestehende Spezifikationen definierten Geräteschnittstellen zur Verfügung. Mit dieser API haben Hardwarehersteller die Möglichkeit, plattformübergreifende SDKs, z.B. eine JavaScript-SDK, für ihre Geräte zu erstellen.

Unter einem "Browser" oder "Webbrowser" werden hier spezielle Computerprogramme zur Darstellung von Webseiten im World Wide Web verstanden. Das Durchstöbern des World Wide Webs beziehungsweise das aufeinanderfolgende Abrufen beliebiger Hyperlinks als Verbindung zwischen Webseiten mit Hilfe solch eines Programms wird auch als Internetsurfen bezeichnet. Neben HTML-Seiten können Webbrowser verschiedene andere Arten von Dokumenten wie zum Beispiel Bilder und PDF-Dokumente anzeigen. Webbrowser stellen die Benutzeroberfläche für Webanwendungen dar.

Unter einem "WebUSB-fähigen Browser" wird hier ein Browser verstanden, welcher eine WebUSB-Schnittstelle beinhaltet. Beispielsweise beinhaltet Google Chrome mittlerweile eine WebUSB Schnittstelle.

Unter einem "Netzwerk" wird hier Verbund von Rechnernetzwerken, die autonome Systeme agieren, verstanden. Insbesondere kann das Netzwerk das "Internet" sein, also ein Netzwerk, welches die Nutzung von Internetdiensten wie WWW, E-Mail, Telnet, SSH, XMPP, MQTT und FTP ermöglicht. Dabei kann sich jeder Rechner mit jedem anderen Rechner verbinden. Der Datenaustausch zwischen den über das Internet verbundenen Rechnern erfolgt über die technisch normierten Internetprotokolle. Die Technik des Internets wird durch die RFCs der Internet Engineering Task Force (IETF) beschrieben.

Unter einem "Server-Computersystem" wird hier ein Computersystem verstanden, welches aus einem einzigen Computer oder aus einer funktionalen Einheit aus einer Vielzahl miteinander vernetzten Computern besteht. Beispielsweise kann es sich bei dem Server-Computersystem um ein Cloud-Computersystem handeln.

Unter einem "Nutzer-Computersystem" wird hier ein Computersystem verstanden, welches einem oder mehreren Nutzern zugewiesen ist. Auch das Nutzer-Computersystem kann als eine aus mehreren miteinander vernetzten Computern bestehen, die eine funktionale Einheit bilden, z.B. wenn ein Nutzer ein Cloud-Rechensystem einer Firma nutzt. Typischerweise handelt es sich jedoch bei dem Nutzer-Computersystem um einen einzelnen Computer, z.B. einen Desktoprechner oder einen portablen Computer, z.B. ein Smartphone, Notebook, oder um einen Tablett-Computer.

Unter einem "Register" wird hier eine auf einem nicht-flüchtigen Speicher gespeicherte Datenstruktur (z.B. Datei, Verzeichnis, relationale Datenbank, etc.) verstanden, innerhalb welcher ein oder mehrere Datensätze gespeichert sind, insbesondere die Datensätze von USB-Geräten und/oder Nutzern, welche in einem Registrierungsprozess bei einer bestimmten Organisation registriert wurden.

Unter einer "Server-Applikation" wird hier ein Softwareprogramm verstanden, welches auf einem Computersystem, das hier als "Server-Computersystem" bezeichnet wird, instanziiert ist.

Unter einer "Client-Applikation" wird hier ein Softwareprogramm verstanden, welches auf einem Computersystem, das hier als "Nutzer-Computersystem" bezeichnet wird, instanziiert ist, und welches mit der Server-Applikation interoperabel ist. Unter Interoperabilität zweier Softwareprogramme wird hier die Fähigkeit verstanden, nahtlos zusammenzuarbeiten, um Informationen auf effiziente und verwertbare Art und Weise auszutauschen bzw. dem Benutzer zur Verfügung zu stellen, vorzugsweise zumindest auch durch die Einhaltung gemeinsamer Standards auf Applikationsebene.

Als "Geräte-ID" wird hier ein Datenwert oder eine Kombination mehrerer Datenwerte bezeichnet, welche eine eindeutige Identifikation eines bestimmten Geräts erlaubt und die aus ein oder mehreren Hardwarekomponenten des Geräts automatisiert ausgelesen und/oder abgeleitet werden kann. Bei der Geräte-ID kann es sich z.B. um eine MAC-Adresse oder einen sonstigen spezifischen Datenwert handeln. Eine Geräte-ID kann auch in einer Kombination aus einer Hersteller-ID und einer Gerätenummer, z.B. einer herstellerspezifischen Seriennummer, bestehen. Es kann sich auch um einen Zufallswert oder kryptographischen Datenwert (kryptographischer Schlüssel und/oder Zertifikat) handeln, der im Zuge der Registrierung des Geräts bei der Server-Applikation spezifisch für dieses Gerät erzeugt wurde und die sowohl in dem Geräte-Register des Server-Computersystems als ach in einem Speicher des registrierten Geräts gespeichert wurde.

Vorzugsweise ist die Geräte-ID in dem USB-Gerät derartig gespeichert oder angebracht, dass eine Modifikation der Geräte-ID durch unberechtigte Dritte oder jedermann technisch unterbunden wird. Beispielsweise kann das USB-Gerät ein HSM beinhalten und die Geräte-ID kann in dem HSM sicher und vor Manipulation geschützt gespeichert sein.

Unter "USB-Gerät bezogenen Funktionen" werden hier Softwarefunktionen verstanden, die für den Betrieb des USB-Geräts des ermittelten Typs und/oder der ermittelten Hardware-Version vorgesehen und/oder notwendig sind.

Unter einer "Bediensoftware" eines Geräts wird hier ein Applikationsprogramm verstanden, welches speziell zum Zwecke der Bedienung eines bestimmten Geräts oder zur Bedienung einer bestimmten Gruppe von (typischerweise funktionell ähnlichen) Geräten entwickelt wurden. Oftmals, aber nicht notwendigerweise, wird die Bediensoftware vom Hersteller des Geräts entwickelt. Eine Bediensoftware enthält vorzugsweise eine Schnittstelle, z.B. eine graphische Benutzerschnittstelle (GUI), die es einem Nutzer ermöglicht, das Gerät zu steuern und/oder sich Statusinformationen des Geräts anzeigen zu lassen. Gemäß Ausführungsformen der Erfindung ist die Bediensoftware auf dem Server-Computer installiert, z.B. als Teil der Server-Applikation die mit der Client-Applikation interoperabel ist oder als weitere auf dem Server-Computersystem instanziierte Applikation. Weder Client-Applikation noch eine sonstige Applikation des Nutzer-Computersystems beinhalten eine Bediensoftware. Vielmehr wirkt die Client-Applikation gemäß Ausführungsformen der Erfindung als Screen-Sharing Client-Software, die mit einer Screen-Sharing-Server-Funktionalität der Server-Applikation derart interoperabel ist, dass die Client-Applikation dem Nutzer über die Screen-Sharing Funktionalität Zugriff auf die auf dem Server-Computersystem instanziierte Bediensoftware ermöglicht ohne die Bediensoftware auf das Nutzer-Computersystem zu übertragen.

Ein "Gerätetreiber" oder "Treiber" ist ein Computerprogramm oder Softwaremodul, das die Interaktion mit einem Gerät steuert. Dazu kommuniziert der Treiber auf der einen Seite meist direkt mit dem Gerät und tauscht Steuersignale und Daten mit dem Gerät aus, über den Kommunikationsbus (Hardware-Schnittstelle) oder ein Basis-Kommunikationssystem des Betriebssystems. Der Treiber kann Bestandteil der Bediensoftware sein oder kann ein separates Softwareprogramm sein, welches der Bediensoftware eine Schnittstelle für die die Steuerung des Geräts und/oder den Datenaustausch mit dem Gerät bietet. Bedingt durch ihre Funktion sind Gerätetreiber typischerweise stark hardware- und betriebssystemabhängig

### Kurze Beschreibung der Zeichnung

Nachfolgend werden Ausführungsformen der Erfindung mit Bezug auf die Zeichnung beschrieben. In der Zeichnung zeigt
- Fig. 1: ein Blockdiagramm eines Systems zum Betrieb eines lokal an ein Nutzer-Computersystem angeschlossenes USB-Gerät über Bediensoftware, die auf einem Server-Computersystem instanziiert ist;
- Fig. 2: ein Flussdiagramm eines entsprechenden Verfahrens zum Betrieb des USB-Geräts;
- Fig. 3: ein Blockdiagramm des Systems nach Figur 1, in welchen Aspekte der Screen-Sharing Funktionalität illustriert sind;
- Fig. 4: ein Nutzer-Computersystem an welches 3 USB-Geräte angeschlossen sind;
- Fig. 5: eine beispielhafte Ausführung einer Webseite, von der die Client-Applikation heruntergeladen werden kann;
- Fig. 6: einen Bildschirm mit der Desktop-Umgebung des Server-Computersystems;
- Fig. 7: einen Bildschirm des Nutzer-Computersystems mit Desktop-Umgebung des Nutzer-Computersystems einschließlich eines per Screen-Sharing übermittelten Bildes des Server-Desktops;
- Fig. 8: Blockdiagramm eines Systems mit mehreren USB-Geräten, die bei dem Server-Computersystem registriert sind.

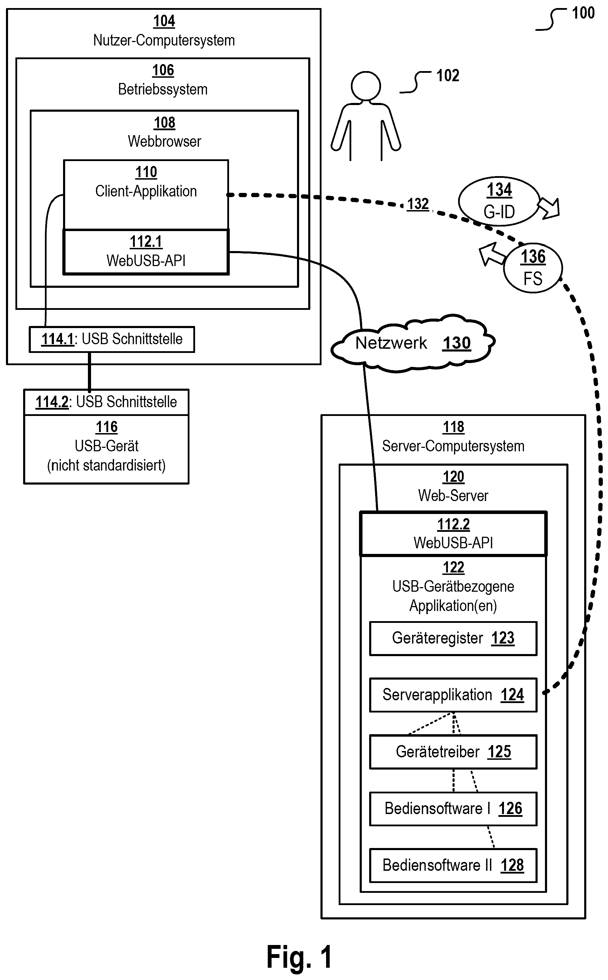

**Figur 1** illustriert ein Blockdiagramm eines Systems 100 zum Betrieb eines lokal an ein Nutzer-Computersystem 104 angeschlossenen USB-Geräts 116 über Bediensoftware 126, 128, die auf einem Server-Computersystem 118 instanziiert ist.

Der Universal Serial Bus (USB) ist der De-facto-Standard für kabelgebundene Peripheriegeräte. Die meisten USB-Geräte implementieren eine von etwa einem Dutzend Standard "Geräteklassen", die eine Möglichkeit für das Gerät festlegen, die von ihm unterstützten Funktionen und Befehle und Datenformate zur Nutzung dieser Funktionen zu bewerben. Zu den Standardgeräteklassen gehören Tastatur, Maus, Audio, Video und Speichergeräte. Betriebssysteme unterstützen solche Geräte mit dem vom Betriebssystemhersteller bereitgestellten "Klassentreiber". Es gibt jedoch eine Reihe von Geräten, die nicht in eine der standardisierten Geräteklassen passen. Diese Geräte erfordern, dass Hardwarehersteller native Treiber und SDKs schreiben, damit Entwickler sie nutzen können, und dieser native Code verhindert, dass diese Geräte über das Web verwendet bzw. überwacht und gesteuert werden.

Gemäß Ausführungsformen der Erfindung handelt es sich bei dem USB-Gerät 116 um ein Gerät, das nicht zu diesen Standardgeräteklassen gehört.

In dem hier beschriebenen System ist es dennoch nicht erforderlich, dass ein Nutzer 102 auf seinem Nutzer-Computersystem 104 spezielle Gerätetreiber oder Bediensoftware installiert, um das USB-Gerät 116 bedienen zu können.

Beispielsweise kann es sich bei dem Nutzer um einen Angestellten einer Firma handeln, die die Herstellung und/oder Personalisierung von Sicherheitsdokumenten als Dienstleistung anbietet. Bei den Sicherheitsdokumenten kann es sich zum Beispiel Mitarbeiterausweise, Kantinen-Bezahlkarten, Hotelzimmer-Zugangskarten etc. handeln. Die Firma hat einen komplexen Dokumenten Drucker 116 von einem Drucker-Hersteller gekauft und in den eigenen Räumlichkeiten aufgebaut.

Um mit dem Drucker Mitarbeiterausweise personalisieren zu können, ist eine komplexe Software zur Bedienung des Druckers 116 erforderlich, da im Zuge der Personalisierung verschiedene, teilweise komplexe Arbeitsschritte durchgeführt werden müssen. Im Zuge der Personalisierung sollen verschiedene drucktechnische Sicherheitsmerkmale auf dem Dokument aufgebracht werden, die im Hinblick auf Position, Farbzusammensetzung und weiterer Merkmale exakt bestimmten Vorgaben entsprechen. Hierfür kann es erforderlich sein, zum Beispiel Gesichtsbilder von Mitarbeitern so zu bearbeiten, dass Größe Kontrast, Helligkeit und/oder Farbraum in einem definierten Bereich liegen. Es kann erforderlich sein, den Drucker auf komplexe Weise zu kalibrieren, Farbschemata zu definieren und andere Konfigurationsmaßnahmen vorzunehmen.

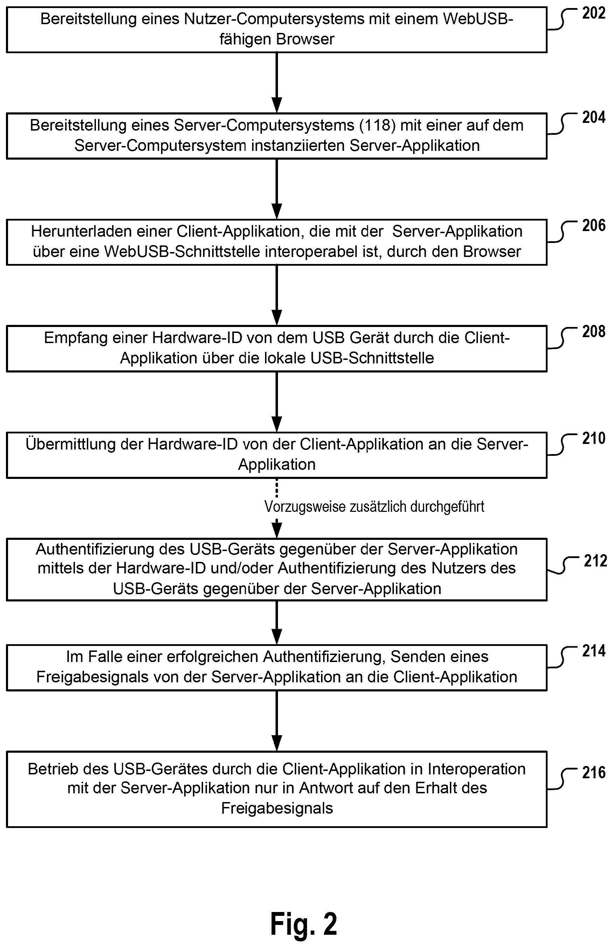

Im Folgenden wird unter Bezugnahme auf das Flussdiagram in Figur 2 beschrieben, wie ein Mitarbeiter 102 der Firma den Drucker 116 auf sichere, performante und einfache Art und Weise betreiben kann.

In einem ersten Schritt 202 wird ein Nutzer-Computersystem 104 mit einem WebUSB-fähigen Browser bereitgestellt. Beispielsweise kann es sich bei dem Computersystem 104 um einen Firmenrechner, zum Beispiel ein Firmen-Notebook, handeln, welcher dem Mitarbeiter 102 zugewiesen ist. Das Nutzer-Computersystem 104 kann zum Beispiel ein Windows 10 Betriebssystem 106 haben, auf welchem Google Chrome als WebUSB-fähiger Browser 108 installiert ist. Der Dokumenten-Drucker 116 wird über eine lokale, zum Beispiel kabelgebundene, USB Schnittstelle 114 mit dem Nutzer-Computersystem 104 des Mitarbeiters 102 verbunden.

Im Schritt 204, der auch vor Schritt 202 erfolgen kann, wird ein Server-Computersystem 118 bereitgestellt. Auf dem Server-Computersystem ist eine Server-Applikation 124 instanziiert. Die Server-Applikation 124 kann zum Beispiel von einer Web-Server-Applikation 120 als Webservice über ein Netzwerk an mehreren Nutzer-Computersysteme bereitgestellt werden. Es gibt jedoch auch eine Vielzahl alternativer Implementierungsmöglichkeiten für die Bereitstellung der Server-Applikation.

Das Server-Computersystem und die Server-Applikation können von dem Hersteller des Druckers 116 bereitgestellt werden, welcher auch ein oder mehrere Softwareprogramme zur Bedienung dieses Druckers entwickelt hat. Diese Bedienprogramme 126, 128 können ebenfalls auf diesem Server-Computersystem instanziiert sein.

In manchen Ausführungsformen beinhaltet das Server-Computersystem 118 eine Web-Server-Applikation 120, die eine Webseite über das Internet bereitstellt, über welche der Nutzer 102 durch Öffnen dieser Webseite in seinem Browser 108 eine Client-Applikation 110 herunterladen kann, die mit der Server-Applikation 124 über ein Netzwerk 130, und zwar über eine WebUSB Schnittstelle, interoperabel ist. Bei dem Netzwerk 130 kann es sich insbesondere um das Internet handeln.

In Schritt 206 öffnet der Nutzer 102 die besagte Downloadseite im Webbrowser 108 seines Nutzer-Computersystems 104. Ein Beispiel für eine solche Downloadseite ist in Figur 5 skizziert. Auf der Downloadseite können verschiedene Zusatzinformationen bezüglich des USB Geräts 116 und/oder bezüglich der Client-Applikation, die man über diese Internetseite herunterladen kann, beschrieben sein. Der Nutzer 102 kann nun zum Beispiel durch Auswahl eines Download-Links die Client-Software, zum Beispiel ein JavaScript Programm, herunterladen und innerhalb seines Browsers 108 ausführen.

In Schritt 208 empfängt die heruntergeladene und innerhalb des Browsers ausgeführte Client-Applikation 110 eine Geräte-ID über die lokale USB Schnittstelle 114 von dem USB-Gerät.

Nach einer Ausführungsform ist in dem USB Drucker 116 bereits im Herstellungsprozess des Druckers ein geheimer Signierschlüssel gespeichert ist, der für diesen Drucker 116 spezifisch ist. Die Übertragung der Geräte-ID an die Client-Applikation umfasst die Übertragung einer Geräte -ID des USB Geräts vom USB Gerät an die Client-Applikation, wobei die Geräte-ID und/oder ein anderer Datenwert mit dem Signierschlüssel signiert ist und also zusätzlich eine Signatur enthält. Ein entsprechender Signaturprüfschlüssel ist in einem Register 123 des Server-Computersystems 118 hinterlegt. Die Server-Applikation 124 erzeugt in Antwort auf den Erhalt einer Anfrage des Nutzers 102, die Client-Applikation herunterzuladen, eine Zufallszahl (Challenge) und übermittelt diese zusammen mit der Client-Applikation an den Browser 108. Die Client-Applikation leitet die Challenge an das USB-Gerät 116 weiter und veranlasst das USB-Gerät, die Challenge mit dem privaten Signierschlüssel zu signieren. Die signierten Challenge wird als Geräte-ID 134 von dem USB-Gerät 116 an die Client-Applikation 110 zurückgegeben. Es sind jedoch auch einfache Implementierungsvarianten möglich, zum Beispiel das Auslesen einer MAC-Adresse des Druckers und das Verwenden dieser MAC-Adresse als Geräte-ID.

Vorzugsweise wird vor der Ausführung des nächsten Schritts 210 ein sicherer Kanal 132 zur Datenübertragung zwischen der Client-Applikation 110 und der Server-Applikation 124 aufgebaut. Beispielsweise kann es sich bei diesem Kanal um einen Ende-zu-Ende-verschlüsselten Kanal handeln, an dessen Aufbau beide Applikationen 110, 124 beteiligt sind.

In Schritt 210 übermittelt die Client-Applikation 110 die Geräte-ID 134 an die Server-Applikation 124 über das Netzwerk 130. Vorzugsweise wird die Hardware-ID über den geschützten Kanal 132 übermittelt um zu verhindern, dass unberechtigte Dritte die Hardware-ID mitlesen können. Wenn die Hardware-ID über den geschützten Kanal übertragen wird, kann noch nicht einmal der Browser 108 oder ein Browser-Plugin auf die über den geschützten Kanal 132 übertragenen Daten zugreifen.

In Schritt 212 verwendet die Server-Applikation die übertragene Geräte-ID dazu, um das USB-Gerät anhand der Geräte-ID als ein berechtigtes und registriertes USB-Gerät zu authentifizieren. Hierzu gleicht die Server-Applikation die übertragene Geräte-ID mit Daten ab, die in dem Geräteregister 123 für verschiedene registrierte USB-Geräte gespeichert sind. Beispielsweise kann das Register 123 Geräte-IDs sämtlicher von dem Drucker-Hersteller verkauften USB-Drucker und zugehörige Metadaten bzw. Authentifizierungsdaten enthalten. Beispielsweise kann in dem Register für jeden registrierten USB Drucker die Geräte-ID des Druckers, ein Signaturprüfschlüssel, der mit dem Signierschlüssel des jeweiligen Geräts ein asymmetrisches kryptographisches Schlüsselpaar bildet, und sonstige Daten gespeichert sein, die im Kontext der Authentifizierung des USB-Geräts 116 gegenüber der Server-Applikation verwendet werden können. Es ist möglich, dass pro USB Gerät mehrere Geräte-IDs in dem Register gespeichert und/oder zur Authentifizierung verwendet werden. Beispielsweise kann die statische Mac Adresse der registrierten USB Geräte als erste, statische Geräte-ID verwendet werden, wohingegen die Authentifizierung mittels einer aus einer Challenge abgeleiteten Geräte-ID erfolgt, die für jeden Authentifizierungsprozess einen anderen, aber dennoch gerätespezifischen da mit einem gerätespezifischen Signierschlüssel erzeugten, Wert einnimmt. Dem Signierschlüssel kann zum Beispiel ein Zertifikat zugeordnet sein, in welchem Metadaten zu dem jeweiligen USB Gerät auf verlässliche Art und Weise hinterlegt sind.

Im Falle einer erfolgreichen Authentifizierung des USB-Geräts 116 gegenüber der Server-Applikation 124 sendet die Server-Applikation in Schritt 214 ein Freigabesignal über das Netzwerk bzw. den geschützten Kanal 132 an die Client-Applikation 110. Das Freigabesignal kann aus einem einzelnen Bit bestehen oder komplexere Daten umfassen, zum Beispiel eine XML Datei, eine Jason Datei, die zum Beispiel weitere Konfigurationsdaten zum weiteren Betrieb der Client-Applikation beinhaltet.

Nur falls die Client-Applikation von der Server-Applikation das Freigabesignal erhält, betreibt die Client-Applikation in Antwort auf den Empfang des Freigabesignal das lokal angeschlossene USB-Gerät 116 in Interoperation mit der Server-Applikation. Unter dem "Betreiben" des lokalen USB-Geräts ist hier gemeint, dass die Interoperation von Client- und Server-Applikation es dem Nutzer 102 erlaubt, zum Beispiel über eine Screen-Sharing Funktionalität von Client- und Server- Applikation über das Netzwerk, vorzugsweise über den geschützten Kommunikationskanal 132, auf die auf dem Server-Computersystem 118 instanziierten Softwareapplikationen 124, 126, 128 zur Bedienung des USB Druckers 116 zuzugreifen.

Zumindest ein oder mehrere dieser Softwareapplikationen 124, 126 sind jeweils dazu konfiguriert, über die WebUSB Schnittstelle 112 auf das USB-Gerät 116 über das Netzwerk zuzugreifen. Beispielsweise können die Softwareapplikationen 124, 126 Steuerungsbefehle 324 über die WebUSB Schnittstelle 112 an den Drucker 116 zu senden. Nach einer Ausführungsform werden die Steuerungsbefehle von der Bediensoftware 126 über die WebUSB Schnittstelle direkt an das lokale USB Gerät gesendet. Nach einer anderen Ausführungsform werden die Steuerungsbefehle zunächst an die Client-Applikation gesendet, die die Befehle dann an der Bediensoftware 126 über die WebUSB Schnittstelle direkt an das weitergibt.

Für den Fall dass die Authentifizierung des USB-Geräts 116 scheitert, kann die Server-Applikation anstatt des Freigabesignal sein Abbruchsignal an die Client-Applikation senden um eine Ausgabe eine Fehler Nachricht an den Nutzer 102 durch die Client-Applikation zu bewirken.

**Figur 2** zeigt ein Flussdiagramm eines entsprechenden Verfahrens zum Betrieb des USB-Geräts. Das Verfahren wurde bereits mit Referenz auf Figur 1 erläutert.

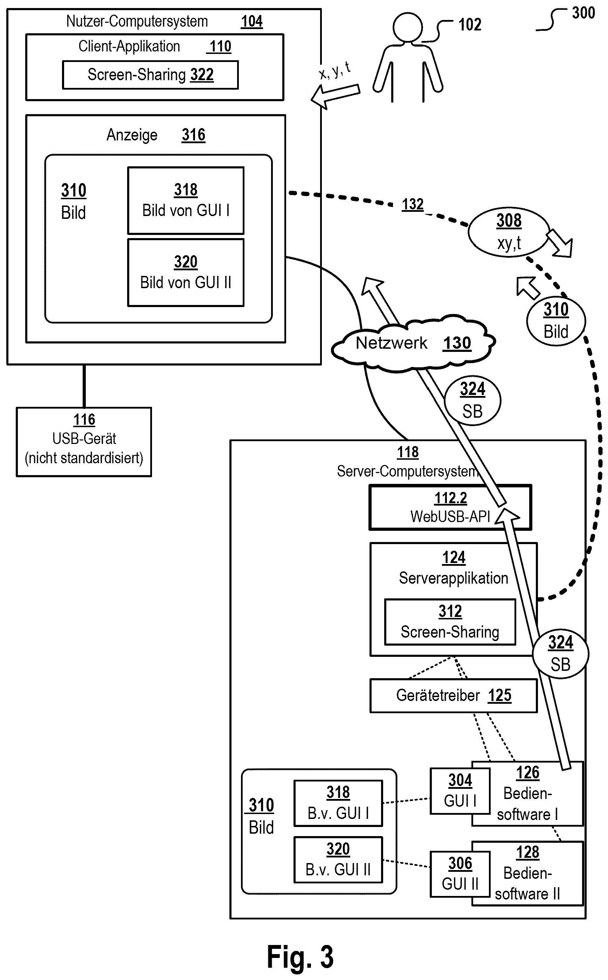

**Figur 3** zeigt ein Blockdiagramm des Systems nach Figur 1, in welchen Aspekte der Screen-Sharing Funktionalität noch genauer illustriert sind.

Aus Figur 3 geht hervor, dass die Client-Applikation 110 eine Screen-Sharing Funktionalität 322 beinhaltet. Auch die Server-Applikation 124 beinhaltet eine Screen-Sharing-Funktionalität 312. Bei den beiden Funktionalitäten 322, 312 handelt es sich um komplementäre Screen-Sharing-Funktionalitäten, wobei Funktionalität 322 hier auch als Screen-Sharing-Client Funktionalität und Funktionalität 312 auch als Screen-Sharing-Server-Funktionalität bezeichnet wird.

Die Aufgabe der Funktionalität 312 besteht darin, in regelmäßigen Abständen Bilder 310 (Screenshots) vom virtuellen Arbeitsplatz (Desktop) des Server-Computersystems zu erzeugen und über das Netzwerk 130, insbesondere den geschützten Kanal 132, an die Client-Applikation zu übertragen. Zudem Desktop des Server-Computersystems gehören auch alle Programme 126, 128 und deren GUIs 304, 306, die auf dem Server-Computersystem instanziiert sind und für welche die Server-Applikation 124 auch entsprechende Zugriffsrechte besitzt. Die erzeugten Bilder 310 des Desktops des Server-Computersystems beinhalten somit auch Teilbilder 318, 320, die den grafischen Inhalt der GUIs 304, 306 der jeweiligen Applikationen 126, 128 abbilden.

Beispielsweise ist die Bediensoftware 126 dazu konfiguriert, eine GUI 304 zu erzeugen. Der Bildausschnitt eines Desktop-Screenshots 310, der die GUI 304 zeigt, ist durch die Nummer 318 gekennzeichnet. Die Bediensoftware 128 ist dazu konfiguriert, eine GUI 306 zu erzeugen. Der Bildausschnitt des Desktop-Screenshots 310, der die GUI 306 zeigt, ist durch die Nummer 320 gekennzeichnet.

Die Aufgabe der Funktionalität 322 besteht darin, die in regelmäßigen Abständen von der Server-Applikation empfangenen Bilder 310 dem Nutzer auf einer Anzeige 316 des Nutzer-Computersystems 104 anzuzeigen. Die Anzeige 316 kann zum Beispiel ein LCD Bildschirm oder ein Smartphone-Touchscreen sein. Die Anzeige 316 zeigt also einen von der Client-Applikation erzeugten grafischen Inhalt an, welcher das Bild 310 und damit auch Teilbilder 318, 320 von den GUIs 304, 306, der auf der Server-Applikation instanziierten Programme zur Bedienung des USB-Geräts an.

Außerdem besteht die Aufgabe der Funktionalität 322 darin, zu überwachen, ob, wann, wo und welche Art von Aktion der Nutzer 102 ausführt, um mit dem Nutzer-Computersystem zu interagieren. Beispielsweise kann der Nutzer durch betätigen einer Maus oder der Tastatur bestimmte Bereiche oder Punkte des angezeigten Bildes 310 auswählen. Zeit, Ort und Art dieser Nutzer-Interaktion werden als Interaktionsdaten 308 des Nutzers 102 von der Funktionalität 322 der Client-Applikation erfasst und an die Server-Applikation übermittelt.

Zur Funktionalität 312 der Server-Applikation gehört es, die empfangenen Interaktionsdaten 308 auszuwerten um festzustellen, auf welche der serverseitig instanziierten Programme 124, 126, 128 sich die Nutzereingabe bezog, und die Nutzereingabe so an das jeweilige Programm weiterzuleiten, dass das Programm die gleichen Nutzer-Eingabesignale empfängt, die es erhalten hätte, wenn der Nutzer eine lokale Eingabeschnittstelle wie zum Beispiel Maus oder Tastatur des Server-Computersystems 118 zur Dateneingabe genutzt hätte. Somit setzt die Client-Applikation die einzelnen Programme 126, 128 in die Lage, auf Nutzereingaben zu reagieren und entsprechende Kommandos oder Nutzdaten, hier als "Steuerbefehle" SB 324 zusammengefasst, für das USB-Gerät 116 zu erzeugen, die benötigt werden, um das USB-Gerät zu betreiben, also zum Beispiel, um einen Dokumentendrucker in die Lage zu versetzen, ein Dokument zu personalisieren. Diese Steuerbefehle werden von den serverseitig installierten Applikationen 124, 126 über die WebUSB Schnittstelle an das USB-Gerät 116 übermittelt.

**Figur 4** zeigt ein Nutzer-Computersystem an welches 3 USB-Geräte 402, 404, 406 angeschlossen sind. Nach manchen Ausführungsformen sind zwei oder 3 oder noch weitere USB Geräte gleichzeitig mit dem Nutzer-Computersystem 104 über eine lokale USB-Schnittstelle 114 verbunden.

Beispielsweise kann es sich bei dem USB Gerät 204 um einen Dokumentendrucker handeln, der zur Personalisierung von Wert- oder Sicherheitsdokumenten wie zum Beispiel Firmen ausweisen verwendet werden kann.

Bei dem USB Gerät 404 kann es sich um ein Chipkartenlesegerät handeln. Es gibt verschiedene Typen von Lesegeräten von verschiedenen Herstellern und es ist möglich, dass ein Nutzer-Computersystem, über welches eine Chipkarte personalisiert werden soll, vor der Herausforderung steht, aus der Vielzahl an Bediensoftwareprogrammen für Lesegeräte verschiedenen Typs und/oder verschiedener Versionen genau die richtige Bediensoftware zu nutzen, die zu dem jeweils verwendeten Lesegerät passt. Gemäß Ausführungsformen der Erfindung wird die Problematik dadurch umgangen, dass die Bediensoftware serverseitig instanziiert ist und die Server-Applikation die geeignete Bediensoftware automatisch auf Basis einer Geräte-ID des Lesegeräts 404 identifiziert.

Bei dem USB-Gerät 406 kann es sich um eine USB-Chipkarte handeln. Beispielsweise können die zu personalisieren Dokumente als Chipkarten ausgebildet sein, zum Beispiel auch als Chipkarten mit USB Anschluss. Auch hier existiert eine große Vielzahl an unterschiedlichen Chipkartentypen. Gemäß Ausführungsformen der Erfindung sind serverseitig eine Vielzahl unterschiedlicher Bedienprogramme für verschiedene Chipkartentypen und/oder Versionen instanziiert und die Server-Applikation ist dazu konfiguriert, dass geeignete Programm auf Basis einer Geräte-ID der aktuell zu personalisierende Chipkarte 406 automatisch zu identifizieren und für die Personalisierung der Chipkarte 406 zu nutzen.

Im Folgenden werden verschiedene Verfahren für verschiedene Anwendungsszenarien beschrieben, in welchen das Verfahren zur Bedienung eines USB-Geräts über ein Netzwerk 130 gemäß den hier beschriebenen Ausführungsformen der Erfindung verwendet werden kann.

In einem Aspekt bezieht sich die Erfindung auf ein Verfahren zur Personalisierung eines Sicherheitsdokuments. Das Verfahren umfasst:
- Betreiben eines lokalen USB Geräts gemäß einer Ausführungsform des hier beschriebenen Verfahrens zum Betrieb eines USB-Geräts, wobei das eine lokale USB Gerät ein USB-Chipkartenlesegerät 404 ist, das zur Personalisierung von Chipkarten ausgebildet ist; die die Server-Applikation 124 ist dazu konfiguriert, automatisch den zum Betrieb des USB Chipkartenlesegeräts geeigneten Gerätetreiber aus einer Vielzahl von auf dem Server-Computersystem instanziierten Lesegerät-Gerätetreibern auszuwählen; der ausgewählte Gerätetreiber kann das Lesegerät sodann zum Beispiel über die WebUSB Schnittstelle über das Netzwerk steuern; Beispielsweise kann die Server-Applikation prüfen, ob die Chipkarte von DTrust stammt, und falls ja, automatisch eine von DTrust bereitgestellte Bediensoftware für den weiteren Betrieb der Chipkarte zu verwenden;
- in Antwort auf ein Signal des Chipkartenlesegeräts, dass ein noch nicht personalisiertes Dokument mit einer integrierten USB-Schnittstelle in das Lesegerät eingeführt wurde, leitet die Client-Applikation eine Geräte-ID des Lesegeräts an die Server-Applikation weiter um die Chipkarte automatisch als ein weiteres lokales USB Gerät des Nutzer-Computersystems gegenüber der Serverapplikation (in gleicher Weise wie das Chipkartenlesegerät) anhand einer Geräte-ID der Chipkarte zu authentifizieren, wobei die Server-Applikation automatisch den zum Datenaustausch mit dieser Chipkarte geeigneten Chipkartengerätetreiber aus einer Vielzahl von Chipkartengerätetreibern auswählt;
- Übermittlung von Informationen über Interaktionen des Nutzers mit einer GUI der Client-Applikation an die Server-Applikation; und
- Kontrolle des Personalisierungsprozesses, insbesondere der Auswahl und Modifikation von personenbezogenen Daten, die auf der Chipkarte gespeichert oder anderweitig aufgebracht werden, durch die Server-Applikation oder durch eine andere auf dem Server-Computersystem instanziierte Applikation in Abhängigkeit von den übermittelten Nutzerinteraktionen.

Die Verwendung des WebUSB-basierten Verfahrens in diesem Kontext kann besonders vorteilhaft sein, da eine Vielzahl an Treibern und Bediensoftware-Lösungen jeweils für den Betrieb von Druckern, Chipkartenlesegeräten und Chipkarten vorhanden ist und weil der Datenaustausch zwischen Nutzer-Computer, Lesegerät und Chipkarte recht komplex sein kann. Der im Hinblick auf Treiber und Bediensoftware für Drucker, Lesegerät und/oder Sicherheitsdokument mögliche kombinatorische Raum ist angesichts der Vielzahl an Komponenten, Komponententypen und Versionen sehr groß und die Auswahl entsprechender Softwarelösungen und Treiber ein hochkomplexer, fehleranfälliger Prozess. Dadurch, dass die Vorhaltung der Treiber und Softwarelösungen wie auch die Auswahl der im Hinblick auf eine bestimmte Gerätekombination geeigneten Softwarekomponenten automatisch serverseitig erfolgt, wird die Geschwindigkeit der Inbetriebnahme bzw. Bedienung des Geräts erhöht und Installationsfehler und Softwarekonflikte vermieden.

In einem weiteren Aspekt betrifft die Erfindung ein Verfahren zur Verwendung eines Sicherheitsdokuments, insbesondere zur Verwendung des Sicherheitsdokuments zu Signaturzwecken. Das Verfahren umfasst:
- Betreiben eines lokalen USB Geräts 406 gemäß einer Ausführungsform des hier beschriebenen Verfahrens zum Betrieb eines USB-Geräts. Das eine lokale USB Gerät ist eine Chipkarte mit einer USB-Schnittstelle, die als das Sicherheitsdokument dient, und die einen geheimen Signaturschlüssel, der dem Sicherheitsdokument eindeutig zugeordnet ist, beinhaltet. Die Server-Applikation ist dazu ausgebildet, automatisch den zum Betrieb der Chipkarte geeigneten Treiber aus einer Vielzahl anderer Treiber auszuwählen;
- Öffnen einer Webseite eines Signaturportals, die von dem Server-Computersystem 124 bereitgestellt wird, durch den Browser 108;
- Hochladen der zu signierenden Daten von dem Nutzer-Computer über den Browser an das Signaturportal des Server-Computersystems 118;
- Bereitstellung einer GUI zur Modifikation der hochgeladenen Daten und/oder zur Kontrolle eines Signaturprozesses durch das Signaturportal auf dem Server-Computer;
- Übertragung des graphischen Inhalts 310 der GUI des Signaturportals durch die Server-Applikation 124 an die Client-Applikation 110;
- Anzeige der übermittelten graphischen Information 310 in einer GUI der Client-Applikation;
- Übermittlung von Informationen über Interaktionen 308 des Nutzers 102 mit der GUI der Client-Applikation an die Server-Applikation 124; und
- Signierung der zu signierenden Daten mit dem Signaturschlüssel der Chipkarte durch die Chipkarte unter der Kontrolle des ausgewählten Chipkartentreibers, wobei der ausgewählte Treiber Kontrollbefehle in Abhängigkeit von den übermittelten Interaktionen des Nutzers erzeugt, wobei die Kontrollbefehle 324 des ausgewählten Treibers über die WebUSB Schnittstelle an die Chipkarte gesendet werden.

Dies kann vorteilhaft sein, da der Nutzer eine Vielzahl unterschiedlicher Sicherheitsdokumente von verschiedenen Herstellern zur Signierung von Daten verwenden kann ohne dass hierfür eine manuelle Auswahl, Installation und Konfiguration entsprechender Treiber erforderlich ist. Die Erstellung digitaler Signaturen ist ein Vorgang, der in einer zunehmenden Anzahl von Situationen relevant ist und das Management mehrerer Signaturkarten wird daher zunehmend eine technische Herausforderung. Ausführungsformen der Erfindung bieten hier ein hohes Maß an Flexibilität bei minimalem Aufwand für den Anwender im Hinblick auf die Inbetriebnahme und fortgesetzte Verwendung mehrerer unterschiedlicher Sicherheitsdokumente mit Signierfunktion.

In einem weiteren Aspekt betrifft die Erfindung ein Verfahren zur Personalisierung eines Sicherheitsdokuments. Das Verfahren umfasst:
Betreiben eines lokalen USB Geräts gemäß dem Verfahren nach einer der hier beschriebenen Ausführungsformen, wobei das eine lokale USB Gerät ein USB-Chipkartenlesegerät ist, das zur Personalisierung von Chipkarten ausgebildet ist. Die Server Applikation ist dazu konfiguriert, folgende Schritte auszuführen:
- automatische Auswahl eines zum Betrieb des USB Chipkartenlesegeräts geeigneten Gerätetreibers aus einer Vielzahl von Lesegerät-Gerätetreibern;
- Authentifizieren eines Sensors biometrischer Daten (insbesondere ein Fingerabdrucksensors), als ein weiteres lokales USB Gerät des Nutzer-Computersystems, gegenüber der Serverapplikation in gleicher Weise wie das Chipkartenlesegerät anhand einer Geräte-ID des Sensors, wobei die Server-Applikation automatisch den zum Betrieb des USB Sensors geeigneten Gerätetreiber aus einer Vielzahl von Sensor-Gerätetreiber auswählt; die Authentifizierung erfolgt z.B. wie im Hinblick auf das Lesegerät bereits beschrieben, nämlich durch a) Empfangen der Geräte-ID des Sensors durch die Client-Applikation, Übermittlung der Geräte-ID des Sensors an die Server-Applikation über den Kommunikationskanal, Authentifizierung des Sensors gegenüber der Server-Applikation durch Abgleich der Geräte-ID des Sensors mit den Daten des Registers und Senden eines Freigabesignals für den Sensor im Falle eines erfolgreichen Abgleichs an die Client-Applikation;,
- In Antwort auf ein Signal des Sensors durch die Client-Applikation, dass ein biometrisches Merkmal des Nutzers von dem Sensor erfasst wurde, automatisches Übermitteln des erfassten biometrischen Merkmals von der Client-Applikation an die Server-Applikation; vorzugsweise werden die sensiblen biometrischen Daten über den geschützten Kanal übertragen;
- Übermittlung von Informationen 308 über Interaktionen des Nutzers mit einer GUI der Client-Applikation, welche den graphischen Inhalt der Server-Applikation und optional die GUI weiterer auf dem Server instanziierter Funktionen dem Nutzer des Nutzer-Computersystems anzeigt, an die Server-Applikation;
- Kontrolle des Personalisierungsprozesses, insbesondere Validierung und Korrektur des übermittelten biometrischen Merkmals, durch die Server-Applikation oder eine andere auf dem Server-Computersystem instanziierte Applikation in Abhängigkeit von den übermittelten Nutzerinteraktionen; und
- Senden des validierten und/oder korrigierten biometrischen Merkmals von dem Server-Applikation an die Client-Applikation zur Speicherung oder anderweitigen Aufbringung des biometrischen Merkmals in das oder an dem Dokument unter der Kontrolle der Server-Applikation.

Dies kann vorteilhaft sein, da der genaue Prozess der Validierung und/oder Korrektur biometrischer Daten, z.B. Fingerabdruckdaten, Irisbilder, Gesichtsbilder, Bewegungsprofile etc.) oftmals geheim gehalten werden soll um es Fälschern zu erschweren, entsprechende Fälschungen anzufertigen. Dadurch, dass sensible Softwarefunktionen im Kontext der Personalisierung von Sicherheitsdokumenten nur auf dem Server vorgehalten werden, wird eine Offenlegung dieser Funktionen durch Reverse Engineering verhindert.

In einem weiteren Aspekt betrifft die Erfindung ein Verfahren zur Personalisierung eines Sicherheitsdokuments. Das Verfahren umfasst:
- Betreiben eines lokalen USB Geräts gemäß einer Ausführungsform des hier beschriebenen Verfahrens zum Betrieb eines USB-Geräts, wobei das eine lokale USB Gerät ein USB-Drucker ist, der zur Personalisierung von Sicherheitsdokumenten mittels eines drucktechnischen Verfahrens ausgebildet ist, wobei die Server-Applikation automatisch den zum Betrieb des USB Druckers geeigneten Druckertreiber aus einer Vielzahl von Druckertreibern auswählt;
- Übermittlung eines Bildes, welches gedruckt werden soll, von der Client-Applikation an die Server-Applikation, wobei die Server-Applikation eine Programmfunktion128 mit einer GUI 306 zur Bearbeitung des Bildes beinhaltet oder operativ an diese Funktion gekoppelt ist und die graphischen Inhalte dieser GUI zur Bildbearbeitung (vorzugsweise über den Kommunikationskanal) an die Client-Applikation überträgt;
- Anzeige der übermittelten graphischen Information 310, 320 in einer GUI der Client-Applikation;
- Übermittlung von Informationen 308 über Interaktionen des Nutzers mit der GUI der Client-Applikation, an die Server-Applikation;
- Bearbeitung des Bildes durch die Server-Applikation in Abhängigkeit von den übermittelten Nutzerinteraktionen;
- Senden des bearbeiteten Bildes von dem Server-Applikation an die Client-Applikation zum Aufdruck des bearbeiteten Bildes durch den Drucker in oder auf das Dokument unter der Kontrolle der Server-Applikation.

**Figur 5** zeigt eine beispielhafte Ausführung einer Webseite, über welche die Client-Applikation heruntergeladen werden kann.

Beispielsweise kann in einer Bediener Anleitung eines gekauften USB Geräts 116, zum Beispiel eines USB Druckers, eine URL angegeben sein, die der Käufer aufsuchen soll, um das USB Gerät mithilfe einer auf einem Server installierten Software 124, 126, 128 zu betreiben. Durch Eingabe dieser URL in ein entsprechendes Eingabefenster 502 eines WebUSB fähigen Browsers 108 wird einem Nutzer 102 eines Nutzer-Computersystems 104 eine Webseite angezeigt, auf welcher verschiedene Informationen, zum Beispiel Informationen zur Bedienung des USB Geräts und/oder zu der auf dem Server instanziierten Software zu finden sein können. Auf der Website ist außerdem ein Downloadlink 508 enthalten. Indem der Nutzer diesen Link 504 auswählt, initialisiert der Nutzer das Herunterladen und das Instanziieren der Client Applikation 110. Diese kann daraufhin einen geschützten Datenübertragungskanal zu der Server-Applikation aufbauen um darüber beispielsweise eine Geräte ID des USB Geräts an die Server-Applikation zu übertragen, um das USB-Gerät bei der Server-Applikation zu authentifizieren und dem Nutzer eine Bedienung serverseitig installierter Software 124, 126, 128 über eine Screen-Sharing Funktionalität 312, 322 zu ermöglichen und um der besagten serverseitigen Software 124, 126, 128 einen Betrieb des USB Geräts über die WebUSB Schnittstelle 112 gemäß den Eingaben des Nutzers 102 zu ermöglichen.

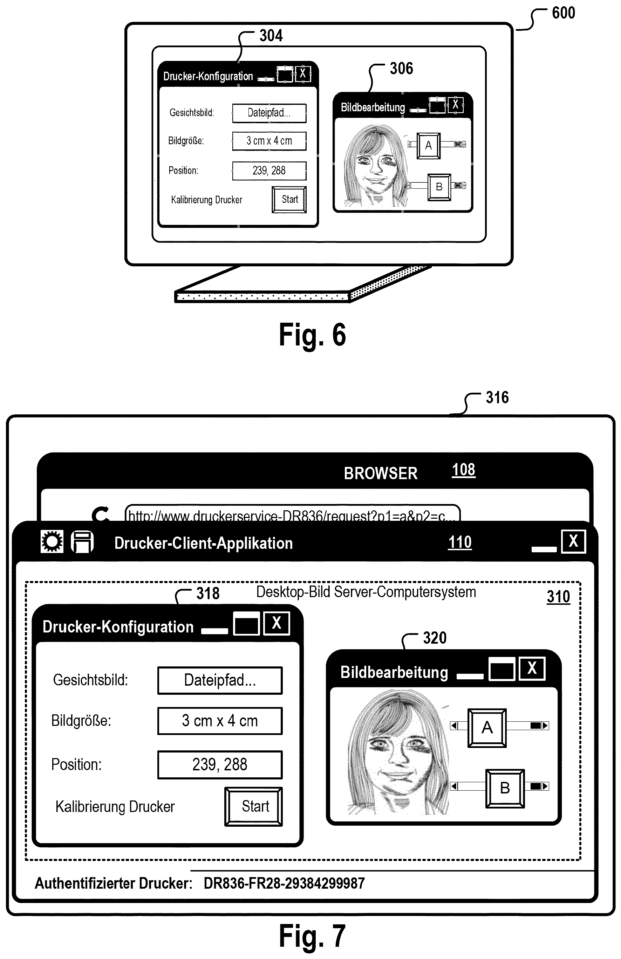

**Figur 6** zeigt einen Bildschirm 600 eines Server-Computersystems 118 mit der Desktop-Umgebung des Server-Computersystems. Der Bildschirm zeigt also die GUIs sämtlicher Applikationen, die auf dem Server-Computersystem instanziiert sind und für welche die Server-Applikation 124 entsprechende Zugriffsrechte hat.

Bei dem im rechten Teil der Anzeige 600 gezeigten Programmfenster kann es sich zum Beispiel um eine GUI 306 einer Bildbearbeitungssoftware 128 handeln, die es einem Nutzer ermöglicht, Helligkeits- oder Kontrastwerte eines Profilbilds einer Person, das im Zuge der Personalisierung eines Dokuments auf oder in das Dokument gedruckt werden soll, zu verändern.

Bei dem im linken Teil der Anzeige 600 gezeigten Programmfenster kann es sich um eine GUI 306 einer Bediensoftware 128 zur Konfiguration eines USB Druckers 116 handeln, die es einem Nutzer ermöglicht, den Drucker zu kalibrieren, ein zu drucken des Bild auszuwählen, die Bildgröße zu bestimmen, etc.

**Figur 7** zeigt einen Bildschirm 316 des Nutzer-Computersystems 104 mit virtuellem Desktop des Nutzer-Computersystems. Der Desktop des Nutzer-Computersystems kann zum Beispiel noch den geöffneten Browser 108 und GUIs weiterer auf dem Nutzer-Computersystem instanziierter Programme beinhalten.

Der Desktop des Nutzer-Computersystems beinhaltet auch eine GUI, die von der Client-Applikation 110 erzeugt wird. Diese GUI beinhaltet ein Bild 310 des aktuellen Desktops des Server-Computersystems, wie er in Figur 6 gezeigt ist. Der Desktop des Server-Computersystems wurde per Screen-Sharing Funktion 312, 322 an die Client-Applikation übermittelt.

Der in Figur 7 dargestellte Screenshot 310 des Desktops des Server-Computersystems zeigt auf der rechten Seite ein Bild 320 einer GUI 306 eines Grafikprogramms 128, zum Beispiel Adobe Photoshop, das dazu verwendet wird, Bilder von Personen, die zur Personalisierung von Dokumenten verwendet werden sollen, zu modifizieren und/oder zu korrigieren, zum Beispiel dadurch, dass Helligkeits- und Kontrastwerte angepasst werden. Ein Nutzer 102 des Nutzer-Computersystems 104 kann nun zum Beispiel mit einer Maus den Regler "A" oder den Regler "B" bewegen, um das Bild entsprechend anzupassen. Obwohl es sich bei dem Bild 320 nicht um eine dynamisch auf dem Nutzer-Computersystem erzeugte Applikations-GUI handelt, sondern um einen Teil eines Screenshots 310, also um eine Pixelmatrix, wird dem Nutzer der Eindruck vermittelt, er würde mit einer "konventionellen" GUI interagieren, denn alle Aktionen, die der Nutzer auf dem Teilbereich 320 des Bildes 310 ausführt, werden in Echtzeit von der Client-Applikation erfasst, an die Server-Applikation übertragen, dort an die Bildbearbeitungssoftware 128 weitergeleitet und von dieser unmittelbar angewandt um das Bild serverseitig zu verändern. Da die Bilder (Screenshots) des Desktops des Server-Computersystems mit sehr hoher Frequenz von der Server-Applikation an die Client-Applikation übertragen werden, erhält der Nutzer in Echtzeit eine Rückmeldung darüber, wie seine Eingaben das Bild verändert haben. Wenn die Bildbearbeitung abgeschlossen ist kann das fertige Bild auf dem Server-Computersystem gespeichert und die Bildverarbeitungssoftware 128 geschlossen werden.

Der Screenshot 310 des Desktops des Server-Computersystems zeigt auf der linken Seite ein Bild 318 eine GUI 304 einer Bediensoftware 126, die es dem Nutzer erlaubt, den lokal angeschlossenen Drucker zu konfigurieren. Der Nutzer 102 des Nutzer-Computersystems 104 kann nun zum Beispiel mit der Maus den Cursor in die einzelnen Felder setzen um z.B. das soeben bearbeitete Bild zu laden, Größe und Position des Bildes auf dem Dokument zu bestimmen und/oder um den Drucker zu kalibrieren. Obwohl es sich bei dem Bild 318 nicht um eine dynamisch auf dem Nutzer-Computersystem erzeugte Applikations-GUI handelt, sondern um einen Teil eines Screenshots 310, also um eine Pixelmatrix, wird dem Nutzer der Eindruck vermittelt, er würde mit einer "konventionellen" GUI interagieren, denn alle Aktionen, die der Nutzer auf dem Teilbereich 318 des Bildes 310 ausführt, werden in Echtzeit von der Client-Applikation erfasst, an die Server-Applikation übertragen, dort an die Druckerbediensoftware 126 weitergeleitet und von dieser unmittelbar angewandt um den Drucker über die WebUSB Schnittstelle 112 zu konfigurieren und/oder zu steuern. Da die Bilder (Screenshots) des Desktops des Server-Computersystems mit sehr hoher Frequenz von der Server-Applikation an die Client-Applikation übertragen werden, erfolgt die Konfiguration und/oder Steuerung des lokalen USB-Geräts ebenfalls in Echtzeit.

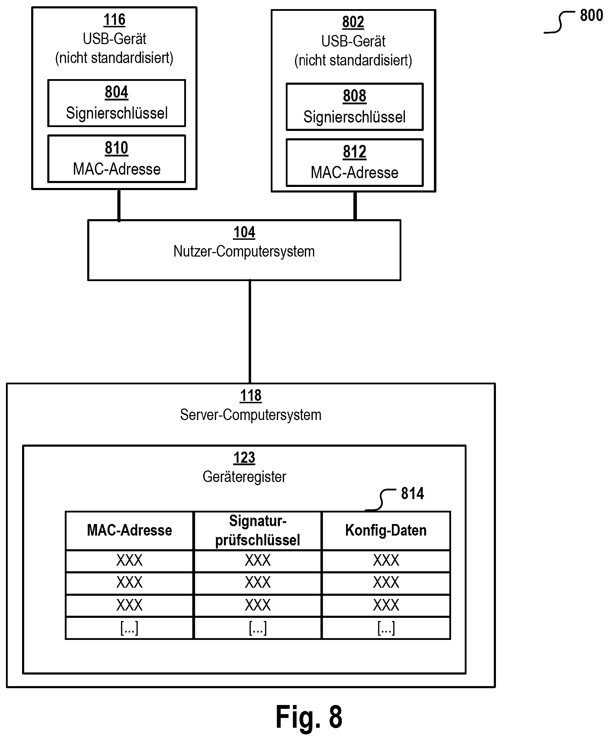

**Figur 8** zeigt Blockdiagramm eines Systems 800 mit mehreren USB-Geräten 116, 802, die bei dem Server-Computersystem registriert sind.

Beispielsweise hat jedes USB Gerät eine für dieses Gerät eindeutige MAC-Adresse 810, 812, welche auch im Geräteregister 123 des Server-Computersystems 118 in einer Zuordnungstabelle 814 gespeichert ist.

Gemäß manchen Ausführungsformen wird im Zuge der Herstellung oder des Verkaufs der USB Geräte für jedes der Geräte ein diesen Gerät spezifisch zugeordnetes Geheimnis, zum Beispiel ein privater kryptographischer Schlüssel, zugewiesen und in einem Datenspeicher des jeweiligen Geräts geschützt gespeichert. Dieses Geheimnis oder ein mit diesem Geheimnis funktional verknüpfter Datenwert wird mit einer Geräte-ID des jeweiligen Geräts verknüpft in der Zuordnungstabelle 814 gespeichert. Das Geheimnis 804, 808 in Kombination mit den hinterlegten werden kann später nach Verkauf des Geräts zur Authentifizierung des USB Geräts gegenüber der Server-Applikation 124 verwendet werden, sodass auf dem Server-Computersystem 118 instanziierte Software zum Betrieb der Geräte nur denjenigen Nutzern zur Verfügung gestellt wird, die über ein Gerät verfügen, dass sich erfolgreich gegenüber der Server-Applikation authentifizieren konnten. Das gerätespezifische Geheimnis kann zum Beispiel anstelle von oder zusätzlich zu der MAC Adresse als Geräte ID verwendet werden.

Beispielsweise kann es sich bei dem Geheimnis um einen privaten kryptographischen Signierschlüssel 804, 808 handeln, der in einem Speicherbereich des jeweiligen Gerätes geschützt gespeichert ist und einmalig für das jeweilige Gerät ist. Für jeden privaten Signierschlüssel existiert ein korrespondierender, öffentlicher Signaturprüfschlüssel, der mit dem Signierschlüssel ein asymmetrisches kryptographisches Schlüsselpaar bildet. Der Signaturprüfschlüssel kann in Verbindung mit der Geräte-ID des Geräts in der Zuordnungstabelle gespeichert sein und kann von der Server-Applikation verwendet werden, um das USB Gerät als ein registriertes, berechtigtes USB Gerät zu authentifizieren. Beispielsweise kann die Server-Applikation dazu konfiguriert sein, einen Zufallswert zu erzeugen und an die Client-Applikation über einen geschützten Datenkommunikationskanal 132 zu übermitteln. Die Client-Applikation leitet den Zufallswert an das USB Gerät weiter um ihn von dem privaten Signierschlüssel des Geräts durch das Gerät signieren zu lassen. Der signierten Zufallswert wird von der Client-Applikation an die Server-Applikation zurück übertragen um der Server-Applikation zu ermöglichen, mithilfe des dem Gerät in der Tab. 814 zugeordneten Signaturprüfschlüssels eine Signaturprüfung durchzuführen.

Vorteilhafte Ausführungsformen umfassen beispielsweise die folgenden Merkmale:
1. Verfahren zum Betrieb eines lokalen USB-Gerätes (116, 404, 406, 802), umfassend:
   - Bereitstellung (202) eines Nutzer-Computersystems (104) mit einem WebUSB-fähigen Browser (108), wobei das USB-Gerät an das Nutzer-Computersystem über eine lokale USB-Schnittstelle (114.1) des Nutzer-Computersystems verbunden ist;
   - Bereitstellung (204) eines Server-Computersystems (118) mit einem Register (123) und mit einer auf dem Server-Computersystem instanziierten Server-Applikation (124), wobei das Register eine Vielzahl von Geräte-IDs von bei dem Server-Computersystem registrierten USB-Geräten beinhaltet;
   - Herunterladen (206) einer Client-Applikation (110), die mit der Server-Applikation (124) über eine WebUSB-Schnittstelle (112) interoperabel ist, von dem Server-Computersystem über ein Netzwerk (130) durch den Browser;
   - automatisches Empfangen (208) einer Geräte-ID (134, 810, 812) des USB Geräts von dem USB-Gerät durch die Client-Applikation über die lokale USB-Schnittstelle (114);
   - Übermittlung (210) der empfangenen Geräte-ID von der Client-Applikation an die Server-Applikation um das USB-Gerät gegenüber der Server-Applikation als eines der registrierten USB-Geräte zu authentifizieren (212) und/oder Authentifizieren eines Nutzers des USB-Geräts gegenüber der Server-Applikation;
   - Im Falle einer erfolgreichen Authentifizierung, Senden (214) eines Freigabesignals (136) von der Server-Applikation an die Client-Applikation;
   - Betrieb (216) des lokalen USB-Gerätes durch die Client-Applikation in Interoperation mit der Server-Applikation nur in Antwort auf einen Erhalt des Freigabesignals.
2. Verfahren nach Anspruch 1, ferner mit:
   - automatischer Aufbau eines geschützten Kommunikationskanals (132) zwischen der heruntergeladenen Client-Applikation und der Server-Applikation;
      wobei die Geräte-ID und das Freigabesignal über den Kommunikationskanal übermittelt werden.
3. Verfahren nach Anspruch 2, wobei der Kommunikationskanal (132) ein kryptographisch geschützter Kommunikationskanal, insbesondere ein Ende-zu-Ende verschlüsselter Kommunikationskanal zwischen der Client-Applikation und der Server-Applikation ist, der vor dem Zugriff durch den Browser geschützt ist, wobei es sich insbesondere um einen verschlüsselten Kommunikationskanal handelt.
4. Verfahren nach einem der vorigen Ansprüche, wobei die Client-Applikation ausschließlich innerhalb des Browsers, welcher die Client-Applikation heruntergeladen hat, ausgeführt wird, ferner mit:
   - Löschen der heruntergeladenen Client-Applikation, sobald der Browser (108) geschlossen wird, sodass für eine erneute Ausführung der Client-Applikation die Client-Applikation erneut von dem Server-Computersystem heruntergeladen werden muss.
5. Verfahren nach einem der vorigen Ansprüche, wobei das USB-Gerät dazu konfiguriert ist, zumindest einige seiner Hardware-funktionen nur zur Bedienung durch solche Applikationen freizugeben, welche sich mit einem Freigabetoken gegenüber dem USB-Gerät authentifizieren, wobei das Freigabesignal das Freigabetoken beinhaltet, ferner mit:
   - Authentifizieren der Client-Applikation gegenüber dem USB-Gerät mittels des Freigabetokens.
6. Verfahren nach einem der vorigen Ansprüche,
   - wobei die Geräte-ID eine für das USB-Gerät spezifische Kennung (810, 812), insbesondere eine MAC-Adresse ist, wobei die Authentifizierung eine Prüfung umfasst, ob die Kennung in dem Register gespeichert ist; und/oder
   - wobei die Geräte-ID ein mittels eines gerätespezifischen kryptographischen Schlüssels (804, 808) abgeleiteter Wert ist, insbesondere eine mit einem gerätespezifischen Signierschlüssel signierte Challenge der Server-Applikation, wobei die Authentifizierung eine Prüfung des abgeleiteten Wertes umfasst, insbesondere eine Prüfung, ob die Geräte-ID identisch zu der Challenge und ob die Signatur valide ist;
   - wobei das Empfangen der Geräte-ID, die Übermittlung der Geräte-ID und der Empfang des Freigabesignals oder des Abbruchssignals von der Client-Applikation automatisch nach dem Herunterladen der Client-Applikation und unabhängig von einer Nutzer-Interaktion ("im Hintergrund") erfolgt; und/oder
   - wobei der Betrieb des lokalen USB-Geräts lediglich eine erfolgreiche Authentifikation des USB-Geräts gegenüber der Server-Applikation und den Empfang des Freigabesignals durch die Client-Applikation erfordert, nicht jedoch zusätzlich eine erfolgreiche Authentifikation des Nutzers (102) gegenüber der Server-Applikation.
7. Verfahren nach einem der vorigen Ansprüche 2-6,
   - wobei das USB-Gerät einen im Zuge der Herstellung oder Aktivierung des USB-Geräts in dem Gerät geschützt gespeicherten geheimen Wert (804, 808), insbesondere einen geheimen kryptographischen Schlüssel oder eine PIN, beinhaltet, und wobei das Verfahren umfasst: Erzeugung der Geräte-ID (134) als einen mit Hilfe des geheimen Wertes abgeleiteten Wert durch das USB-Gerät; Übermittlung des abgeleiteten Wertes von der Client-Applikation über den Kommunikationskanal (132) an die Server-Applikation, wobei die Authentifizierung eine Prüfung umfasst, ob der abgeleitete Wert in dem Register gespeichert ist oder sich von der Server-Applikation aus einem im Register gespeicherten Referenzwert mit einem vordefinierten Verfahren ableiten lässt; und/oder
   - wobei das USB-Gerät (116) einen im Zuge der Herstellung oder Aktivierung des USB-Geräts in dem Gerät geschützt gespeicherten Signaturschlüssel (804, 808) beinhaltet und wobei das Verfahren umfasst: Erzeugung eines signierten Wertes mit Hilfe des Signaturschlüssels durch das USB-Gerät; Übermittlung des signierten Wertes als die Geräte-ID des Gerätes von der Client-Applikation über den Kommunikationskanal (132) an die Server-Applikation, wobei die Authentifizierung eine Prüfung der Validität der Signatur mittels eines Signaturprüfschlüssels umfasst.
8. Verfahren nach einem der vorigen Ansprüche, ferner umfassend:
   - Automatische Ermittlung des Typs und/oder einer Hardware-Version des USB-Geräts durch die Client-Applikation;
   - Übertragung des ermittelten Typs und/oder der Hardwareversion über den Kommunikationskanal an die Server-Applikation;
   - Automatisches Auswählen von ein oder mehreren USB-Gerät bezogenen Funktionen, die für den Betrieb des USB-Geräts des ermittelten Typs und/oder der ermittelten Hardware-Version geeignet sind, aus einer Vielzahl (122) von auf dem Server-Computersystem für eine Vielzahl von USB-Gerätetypen und/oder Hardwareversionen bereitgestellten Funktionen, durch die Server-Applikation; und
   - Verwenden selektiv der ausgewählten Funktionen durch die Server-Applikation zur Initialisierung und/oder zum Betrieb des USB-Geräts in Interoperation mit der Client-Applikation.
9. Verfahren nach einem der vorigen Ansprüche, wobei das eine lokale USB Gerät eines von ein oder mehreren USB-Geräten ist, wobei die ein oder mehreren USB-Geräte jeweils ausgewählt sind aus einer Gruppe umfassend:
   - ein Drucker (402) zum Bedrucken und/oder Personalisieren von Wert- oder Sicherheitsdokumenten;
   - eine Chipkarte (406) mit integrierter USB-Schnittstelle, insbesondere eine Signatur-Chipkarte;
   - ein Chipkartenlesegerät (404) mit USB Schnittstelle.
10. Verfahren nach einem der vorigen Ansprüche, wobei auf dem Server-Computersystem mehrere USB-Gerät-bezogene Funktionen (122) gespeichert sind umfassend:
   - eine Mehrzahl von Gerätetyp-spezifischen Gerätetreibern für mehrere unterschiedliche Gerätetypen, und/oder:
   - eine Mehrzahl von Versionen des gleichen Gerätetreibers, und/oder
   - eine Mehrzahl von Programmen zur Installation auf einem USB Gerät, insbesondere Firmwareupdates, Patches und/oder funktionale Erweiterungsmodule für das USB-Gerät; und/oder
   - ein oder mehrere Programme zur automatischen Validierung und/oder Modifikation biometrischer Daten, die von dem USB-Gerät erfasst und - vorzugsweise über den Kommunikationskanal nach Anspruch 2 - an die Server-Applikation übertragen wurden; und/oder
   - ein oder mehrere Programme zur Bearbeitung von Daten, die von dem USB-Gerät bereitgestellt werden oder die dem USB-Gerät zur weiteren Verwendung bereitgestellt werden sollen; und/oder
   - ein oder mehrere Programme, die eine Nutzereingabe zur Steuerung des Programmablaufs ermöglichen.
11. Verfahren nach einem der vorigen Ansprüche, wobei die Server-Applikation umfasst oder operativ gekoppelt ist an mehrere USB-Gerät bezogene Funktionen (122), wobei die Initialisierung und/oder der Betrieb des USB-Geräts dadurch erfolgt, dass die Client-Applikation in Interoperation mit der Server-Applikation einem Nutzer des Nutzer-Computersystems über eine GUI der Client-Applikation Zugriff auf die USB-Gerät bezogene Funktionen (122) ermöglicht, wobei hierbei die Server-Applikation als virtuelle Screen-Sharing Applikation (312) fungiert um dem Nutzer Zugriff auf GUIs der auf dem Server-Computersystem instanziierten USB-Gerät bezogenen Funktionen (122) zu ermöglichen.
12. Verfahren nach Anspruch 11, ferner umfassend:
   - Ersetzen von ein oder mehreren der Softwarefunktionen (122) durch eine aktuellere Version.
13. Verfahren nach einem der vorigen Ansprüche,
   - wobei die Client-Applikation eine Browserbasierte App, insbesondere eine JavaScript-Applikation ist; und/oder
   - wobei die Client-Applikation Programlogik zur Durchführung einer Authentifizierung des USB-Gerätes gegenüber dem Server-Computersystem umfasst, wobei die Client-Applikation vorzugsweise auch Programmlogik zum Aufbau des Kommunikationskanals in Interoperation mit der Server-Applikation, wobei die Client-Applikation im Wesentlichen frei ist von gerätespezifischer Programlogik zur Steuerung und zum Betrieb des USB-Gerätes; und/oder
   - wobei die Client-Applikation Programlogik zur Erfassung von Zeit, Ort und Art von Nutzer-Interaktionen (308) des Nutzers (102) mit einer GUI der Client-Applikation und zur Weiterleitung dieser erfassten Daten an die Server-Applikation umfasst; und/oder
   - wobei die Client-Applikation eine Screen-Sharing-Client-funktion (322) implementiert und dazu ausgebildet ist, in Echtzeit den Inhalt (310, 318, 320) von GUIs der Server-Applikation und optional auch den Inhalt der GUIs (304, 306) weiterer auf dem Server-Computersystem instanziierter Programme von der Server-Applikation zu empfangen und dem Nutzer in einer GUI der Client-Applikation anzuzeigen; und/oder
   - wobei die Server-Applikation Programlogik zur Authentifizierung von USB-Geräten anhand des Registers und der empfangenen Geräte-ID, zum Erzeugen des Freigabesignals oder des Abbruchssignals, und gerätespezifischer Programlogik zur Steuerung und zum Betrieb des USB-Gerätes in Abhängigkeit von empfangenen Informationen über Zeit, Ort und Art von Nutzerinteraktionen enthält, wobei die Server-Applikation vorzugsweise auch Programmlogik zum Aufbau des Kommunikationskanals in Interoperation mit der Client-Applikation umfasst; und/oder
   - wobei die Server-Applikation Programlogik eine Screen-Sharing -Serverfunktion (112) implementiert und dazu ausgebildet ist, in Echtzeit den Inhalt von GUIs der Server-Applikation und optional auch den Inhalt weiterer auf dem Server-Computersystem instanziierter Programme an die Client-Applikation zu übertragen und Nutzerinteraktionen mit den übertragenen Inhalten in Steuerungsbefehle an das USB-Gerät umzusetzen.
14. Verfahren zur Personalisierung eines Sicherheitsdokuments, umfassend:
   - Betreiben eines lokalen USB Geräts gemäß dem Verfahren nach einem der vorhergehenden Ansprüche, wobei das eine lokale USB Gerät ein USB-Chipkartenlesegerät (404) ist, das zur Personalisierung von Chipkarten ausgebildet ist, wobei die Server-Applikation automatisch den zum Betrieb des USB Chipkartenlesegeräts geeigneten Gerätetreiber aus einer Vielzahl von Lesegerät-Gerätetreibern auswählt;
   - In Antwort auf ein Signal des Chipkartenlesegeräts, dass ein noch nicht personalisiertes Dokument mit einer integrierten USB-Schnittstelle in das Lesegerät eingeführt wurde, durch die Client-Applikation, automatisches Authentifizieren der Chipkarte als ein weiteres über eine lokale USB-Schnittstelle an das Nutzer-Computersystem gekoppeltes USB-Gerät gegenüber der Serverapplikation in gleicher Weise wie das Chipkartenlesegerät anhand einer Geräte-ID der Chipkarte, wobei die Server-Applikation automatisch den zum Datenaustausch mit dieser Chipkarte geeigneten Chipkartengerätetreiber aus einer Vielzahl von Chipkartengerätetreibern auswählt;
   - Übermittlung von Informationen über Interaktionen des Nutzers mit einer GUI der Client-Applikation an die Server-Applikation; und
   - Kontrolle des Personalisierungsprozesses, insbesondere der Auswahl und Modifikation von personenbezogenen Daten, die auf der Chipkarte gespeichert oder anderweitig aufgebracht werden, durch die Server-Applikation oder durch eine andere auf dem Server-Computersystem instanziierte Applikation in Abhängigkeit von den übermittelten Nutzerinteraktionen.
15. Verfahren zur Verwendung eines Sicherheitsdokuments, umfassend:
   - Betreiben eines lokalen USB Geräts gemäß dem Verfahren nach einem der vorhergehenden Ansprüche 1-14, wobei das eine lokale USB Gerät eine Chipkarte mit USB-Schnittstelle ist, die einen geheimen Signaturschlüssel, der dem Sicherheitsdokument eindeutig zugeordnet ist, beinhaltet, wobei die Server-Applikation automatisch den zum Betrieb der Chipkarte geeigneten Treiber aus einer Vielzahl von Treibern auswählt;
   - Öffnen einer Webseite eines Signaturportals, die von dem Server-Computersystem bereitgestellt wird, durch den Browser;
   - Hochladen der zu signierenden Daten von dem Nutzer-Computer über den Browser an das Signaturportal des Server-Computersystems;
   - Bereitstellung einer GUI zur Modifikation der hochgeladenen Daten und/oder zur Kontrolle eines Signaturprozesses durch das Signaturportal auf dem Server-Computer;
   - Übertragung des graphischen Inhalts der GUI des Signaturportals durch die Server-Applikation an die Client-Applikation;
   - Anzeige der übermittelten graphischen Information in einer GUI der Client-Applikation;
   - Übermittlung von Informationen über Interaktionen (308) des Nutzers (102) mit der GUI der Client-Applikation an die Server-Applikation (124); und
   - Signierung der zu signierenden Daten mit dem Signaturschlüssel der Chipkarte durch die Chipkarte unter der Kontrolle des ausgewählten Chipkartentreibers, wobei der ausgewählte Treiber Kontrollbefehle in Abhängigkeit von den übermittelten Interaktionen des Nutzers erzeugt, wobei die Kontrollbefehle (324) des ausgewählten Treibers über die WebUSB Schnittstelle an die Chipkarte gesendet werden.
16. Verfahren zur Personalisierung eines Sicherheitsdokuments, umfassend:
   - Betreiben eines lokalen USB Geräts gemäß dem Verfahren nach einem der vorhergehenden Ansprüche 1-14, wobei das eine lokale USB Gerät ein USB-Chipkartenlesegerät ist, das zur Personalisierung von Chipkarten ausgebildet ist, wobei die Server-Applikation automatisch den zum Betrieb des USB Chipkartenlesegeräts geeigneten Gerätetreiber aus einer Vielzahl von Lesegerät-Gerätetreibern auswählt;
   - Authentifizieren eines Sensors biometrischer Daten, als ein weiteres lokales USB Gerät des Nutzer-Computersystems, gegenüber der Serverapplikation in gleicher Weise wie das Chipkartenlesegerät anhand einer Geräte-ID des Sensors, wobei die Server-Applikation automatisch den zum Betrieb des USB Sensors geeigneten Gerätetreiber aus einer Vielzahl von Sensor-Gerätetreibern auswählt;
   - In Antwort auf ein Signal des Sensors durch die Client-Applikation, dass ein biometrisches Merkmal des Nutzers von dem Sensor erfasst wurde, automatisches Übermitteln des erfassten biometrischen Merkmals von der Client-Applikation an die Server-Applikation;
   - Übermittlung von Informationen über Interaktionen des Nutzers mit einer GUI der Client-Applikation, welche den graphischen Inhalt der Server-Applikation und optional die GUI weiterer auf dem Server instanziierter Funktionen dem Nutzer des Nutzer-Computersystems anzeigt, an die Server-Applikation;
   - Kontrolle des Personalisierungsprozesses, insbesondere Validierung und Korrektur des übermittelten biometrischen Merkmals, durch die Server-Applikation oder durch eine andere auf dem Server-Computersystem instanziierte Applikation in Abhängigkeit von den übermittelten Nutzerinteraktionen;
   - Senden des validierten und/oder korrigierten biometrischen Merkmals von dem Server-Applikation an die Client-Applikation zur Speicherung oder anderweitigen Aufbringung des biometrischen Merkmals in das oder an dem Dokument unter der Kontrolle der Server-Applikation.
17. Verfahren zur Personalisierung eines Sicherheitsdokuments, umfassend:
   - Betreiben eines lokalen USB Geräts gemäß dem Verfahren nach einem der vorhergehenden Ansprüche 1-14, wobei das eine lokale USB Gerät ein USB-Drucker ist, der zur Personalisierung von Sicherheitsdokumenten mittels eines drucktechnischen Verfahrens ausgebildet ist, wobei die Server-Applikation automatisch den zum Betrieb des USB Druckers geeigneten Druckertreiber aus einer Vielzahl von Druckertreibern auswählt;
   - Übermittlung eines Bildes, welches gedruckt werden soll, von der Client-Applikation an die Server-Applikation, wobei die Server-Applikation eine Programmfunktion mit einer GUI zur Bearbeitung des Bildes beinhaltet oder operativ an diese Funktion gekoppelt ist und die graphischen Inhalte dieser GUI zur Bildbearbeitung an die Client-Applikation überträgt;
   - Anzeige der übermittelten graphischen Information in einer GUI der Client-Applikation;
   - Übermittlung von Informationen über Interaktionen des Nutzers mit der GUI der Client-Applikation, an die Server-Applikation;
   - Bearbeitung des Bildes durch die Server-Applikation in Abhängigkeit von den übermittelten Nutzerinteraktionen;
   - Senden des bearbeiteten Bildes von dem Server-Applikation an die Client-Applikation zum Aufdruck des bearbeiteten Bildes durch den Drucker in oder auf das Dokument unter der Kontrolle der Server-Applikation.
18. Ein System umfassend:
   - Ein Nutzer-Computersystem (104), wobei das Nutzer-Computersystem umfasst:
      - eine lokale USB-Schnittstelle (114.1) über welche ein USB-Gerät an das Nutzer-Computersystem lokal anschließbar ist,
      - einen WebUSB-fähigen Browser (108);
      - eine Netzwerkschnittstelle zu einem Server-Computersystem (118);
      - eine Client-Applikation (110), die mit einer auf dem Server-Computersystem instanziierten Server-Applikation (124) über eine WebUSB-Schnittstelle (112) interoperabel ist, wobei die Client-Applikation konfiguriert ist zu:
         ∘ automatisches Empfangen einer Geräte-ID des USB Geräts von dem USB Gerät über die lokale USB-Schnittstelle (114);
         o Übermittlung der empfangenen Geräte-ID an die Server-Applikation um das USB-Gerät gegenüber der Server-Applikation zu authentifizieren;
         o Empfang eines Freigabesignal von der Server-Applikation nach erfolgreicher Authentifikation;
         o Betrieb des lokalen USB-Gerätes in Interoperation mit der Server-Applikation nur in Antwort auf einen Erhalt des Freigabesignals.
19. Server-Computersystem (118), umfassend:
   - ein Register (123) mit einer Vielzahl von Geräte-IDs von bei dem Server-Computersystem registrierten USB-Geräten;
   - eine Server-Applikation (124), die mit einer auf einem Nutzer-Computersystem erzeugten Instanz einer Client-Applikation über eine WebUSB-Schnittstelle (112) interoperabel ist, wobei die Server-Applikation ausgebildet ist zum:
      ∘ Empfang einer Geräte-ID eines USB-Geräts von der Client-Applikation; und Authentifizierung des USB-Geräts gegenüber der Server-Applikation als eines der registrierten USB-Geräte anhand der Geräte-ID; und/oder
      ∘ Empfang eines Berechtigungsnachweises eines Nutzers eines USB-Geräts von der Client-Applikation; und Authentifizierung des Nutzers gegenüber der Server-Applikation als ein zur Nutzung des USB-Geräts berechtigter Nutzer anhand des Berechtigungsnachweises;
      ∘ Im Falle einer erfolgreichen Authentifizierung, Senden eines Freigabesignal von der Server-Applikation an die Client-Applikation und Betrieb des USB-Gerätes in Interoperation mit der Client-Applikation.
20.Server-Computersystem nach Anspruch 19, wobei die Server-Applikation eine Screen-Sharing Funktion umfasst und dazu ausgebildet ist, den graphischen Inhalt (310, 318, 320) der GUI der Server-Applikation und/oder den graphischen Inhalt der GUIs (304, 306) weiterer Applikationen zum Betrieb des USB-Geräts an die Client-Applikation zu übermitteln.

### Bezugszeichenliste

- 100: verteiltes System
- 102: Nutzer
- 104: Nutzer-Computersystem
- 106: Betriebssystem
- 108: Webbrowser
- 110: Client-Applikation
- 112: WebUSB-Schnittstelle
- 114: lokale USB-Schnittstelle
- 116: USB-Gerät
- 118: Server-Computersystem
- 120: Webserver-Applikation
- 122: Vielzahl an USB-Geräte-bezogenen Applikationen
- 123: Geräteregister
- 124: Server-Applikation
- 125: Gerätetreiber
- 126: Bediensoftware I für USB-Gerät 116
- 128: Bediensoftware II für USB-Gerät 116
- 130: Netzwerk
- 132: geschützter Kommunikationskanal
- 134: Hardware-A-D
- 136: Freigabesignal
- 202-216: Schritte
- 300: verteiltes System
- 304: GUI von Bediensoftware 126
- 306: GUI von Bediensoftware 128
- 308: Nutzer-Interaktionsdaten
- 310: Bild(er) vom Desktop des Server-Computersystems
- 312: Screen-Sharing-Server-Funktionalität der Server-Applikation
- 316: Anzeige
- 318: Bild von GUI 304
- 320: Bild von Guido 106
- 322: Screen-Sharing-Client-Funktionalität der Client-Applikation
- 324: Steuerbefehle über WebUSB Schnittstelle
- 402: USB-Dokumentendruck
- 404: USB-Chipkarten-Lesegerät
- 406: USB-Chipkarte
- 502: URL zu Downloadseite
- 504: Download-Link Client-Applikation
- 600: Anzeige Server-Computersystem
- 800: System mit mehreren lokal angeschlossenen USB-Geräten
- 802: USB-Gerät
- 804: Signierschlüssel von Gerät 116
- 808: Signierschlüssel von Gerät 802
- 810: Mac Adresse von Gerät 116
- 812: Mac Adresse von Gerät 802
- 814: Zuweisungstabelle

## Patentansprüche

1. Verfahren zum Betrieb eines lokalen USB-Gerätes (116, 404, 406, 802), umfassend:
- Bereitstellung (202) eines Nutzer-Computersystems (104) mit einem WebUSB-fähigen Browser (108), wobei das USB-Gerät an das Nutzer-Computersystem über eine lokale USB-Schnittstelle (114.1) des Nutzer-Computersystems verbunden ist;
- Bereitstellung (204) eines Server-Computersystems (118) mit einem Register (123) und mit einer auf dem Server-Computersystem instanziierten Server-Applikation (124), wobei das Register eine Vielzahl von Geräte-IDs von bei dem Server-Computersystem registrierten USB-Geräten beinhaltet;
- Herunterladen (206) einer Client-Applikation (110), die mit der Server-Applikation (124) über eine WebUSB-Schnittstelle (112) interoperabel ist, von dem Server-Computersystem über ein Netzwerk (130) durch den Browser;
- automatisches Empfangen (208) einer Geräte-ID (134, 810, 812) des USB-Geräts von dem USB-Gerät durch die Client-Applikation über die lokale USB-Schnittstelle (114);
- Übermittlung (210) der empfangenen Geräte-ID von der Client-Applikation an die Server-Applikation um das USB-Gerät gegenüber der Server-Applikation als eines der registrierten USB-Geräte zu authentifizieren (212) und Authentifizieren eines Nutzers des USB-Geräts gegenüber der Server-Applikation;
- Im Falle einer erfolgreichen Authentifizierung, Senden (214) eines Freigabesignals (136) von der Server-Applikation an die Client-Applikation;
- Betrieb (216) des lokalen USB-Gerätes durch die Client-Applikation in Interoperation mit der Server-Applikation nur in Antwort auf einen Erhalt des Freigabesignals, ferner mit:
- automatischer Aufbau eines geschützten Kommunikationskanals (132) zwischen der heruntergeladenen Client-Applikation und der Server-Applikation;
wobei die Geräte-ID und das Freigabesignal über den Kommunikationskanal übermittelt werden, wobei die Serverapplikation zum Zwecke der Authentifizierung des USB-Geräts eine Challenge in Form eines zufälligen Datenwerts erzeugt, der über den Kommunikationskanal an die Client-Applikation übermittelt wird, wobei die Client-Applikation den Datenwert an das USB-Gerät weiterleitet, wobei das USB-Gerät den Datenwert mit einem dem USB-Gerät eindeutig zugeordneten und in der Hardware des USB-Geräts geschützt gespeicherten Signaturschlüssel signiert und den signierten Datenwert an die Client-Applikation zurückgibt, wobei die Client-Applikation den signierten Datenwert über den geschützten Kommunikationskanal an die Server-Applikation übermittelt, um der Server-Applikation die Durchführung der Authentifizierung des USB-Geräts auf Basis des signierten Datenwerts zu ermöglichen, wobei die Server-Applikation im Zuge der Authentifizierung eine Signaturprüfung durchführt und das Freigabesignal nur dann erzeugt, wenn die Prüfung ergibt, dass die Signatur valide ist.

2. Verfahren nach Anspruch 1,
- wobei der geschützte Kommunikationskanal ein kryptographisch geschützter Kommunikationskanal, insbesondere ein Ende-zu-Ende verschlüsselter Kommunikationskanal zwischen der Client-Applikation und der Server-Applikation ist, der vor dem Zugriff durch den Browser geschützt ist.

3. Verfahren nach einem der vorigen Ansprüche, wobei die Client-Applikation ausschließlich innerhalb des Browsers, welcher die Client-Applikation heruntergeladen hat, ausgeführt wird, ferner mit:
- Löschen der heruntergeladenen Client-Applikation, sobald der Browser (108) geschlossen wird, sodass für eine erneute Ausführung der Client-Applikation die Client-Applikation erneut von dem Server-Computersystem heruntergeladen werden muss.

4. Verfahren nach einem der vorigen Ansprüche, wobei das USB-Gerät dazu konfiguriert ist, zumindest einige seiner Hardware-funktionen nur zur Bedienung durch solche Applikationen freizugeben, welche sich mit einem Freigabetoken gegenüber dem USB-Gerät authentifizieren, wobei das Freigabesignal das Freigabetoken beinhaltet, ferner mit:
- Authentifizieren der Client-Applikation gegenüber dem USB-Gerät mittels des Freigabetokens.

5. Verfahren nach einem der vorigen Ansprüche,
- wobei die Geräte-ID eine für das USB-Gerät spezifische Kennung (810, 812), insbesondere eine MAC-Adresse ist, wobei die Authentifizierung eine Prüfung umfasst, ob die Kennung in dem Register gespeichert ist; und/oder
- wobei die Geräte-ID ein mittels eines gerätespezifischen kryptographischen Schlüssels (804, 808) abgeleiteter Wert ist, insbesondere eine mit einem gerätespezifischen Signierschlüssel signierte Challenge der Server-Applikation, wobei die Authentifizierung eine Prüfung des abgeleiteten Wertes umfasst, insbesondere eine Prüfung, ob die Geräte-ID identisch zu der Challenge und ob die Signatur valide ist;
- wobei das Empfangen der Geräte-ID, die Übermittlung der Geräte-ID und der Empfang des Freigabesignals oder des Abbruchssignals von der Client-Applikation automatisch nach dem Herunterladen der Client-Applikation und unabhängig von einer Nutzer-Interaktion ("im Hintergrund") erfolgt; und/oder
- wobei der Betrieb des lokalen USB-Geräts lediglich eine erfolgreiche Authentifikation des USB-Geräts gegenüber der Server-Applikation und den Empfang des Freigabesignals durch die Client-Applikation erfordert, nicht jedoch zusätzlich eine erfolgreiche Authentifikation des Nutzers (102) gegenüber der Server-Applikation.

6. Verfahren nach einem der vorigen Ansprüche 2-5,
- wobei das USB-Gerät einen im Zuge der Herstellung oder Aktivierung des USB-Geräts in dem Gerät geschützt gespeicherten geheimen Wert (804, 808), insbesondere einen geheimen kryptographischen Schlüssel oder eine PIN, beinhaltet, und wobei das Verfahren umfasst: Erzeugung der Geräte-ID (134) als einen mit Hilfe des geheimen Wertes abgeleiteten Wert durch das USB-Gerät; Übermittlung des abgeleiteten Wertes von der Client-Applikation über den Kommunikationskanal (132) an die Server-Applikation, wobei die Authentifizierung eine Prüfung umfasst, ob der abgeleitete Wert in dem Register gespeichert ist oder sich von der Server-Applikation aus einem im Register gespeicherten Referenzwert mit einem vordefinierten Verfahren ableiten lässt; und/oder
- wobei das USB-Gerät (116) einen im Zuge der Herstellung oder Aktivierung des USB-Geräts in dem Gerät geschützt gespeicherten Signaturschlüssel (804, 808) beinhaltet und wobei das Verfahren umfasst: Erzeugung eines signierten Wertes mit Hilfe des Signaturschlüssels durch das USB-Gerät; Übermittlung des signierten Wertes als die Geräte-ID des Gerätes von der Client-Applikation über den Kommunikationskanal (132) an die Server-Applikation, wobei die Authentifizierung eine Prüfung der Validität der Signatur mittels eines Signaturprüfschlüssels umfasst.

7. Verfahren nach einem der vorigen Ansprüche, ferner umfassend:
- Automatische Ermittlung des Typs und/oder einer Hardware-Version des USB-Geräts durch die Client-Applikation;
- Übertragung des ermittelten Typs und/oder der Hardwareversion über den Kommunikationskanal an die Server-Applikation;
- Automatisches Auswählen von ein oder mehreren USB-Gerät bezogenen Funktionen, die für den Betrieb des USB-Geräts des ermittelten Typs und/oder der ermittelten Hardware-Version geeignet sind, aus einer Vielzahl (122) von auf dem Server-Computersystem für eine Vielzahl von USB-Gerätetypen und/oder Hardwareversionen bereitgestellten Funktionen, durch die Server-Applikation; und
- Verwenden selektiv der ausgewählten Funktionen durch die Server-Applikation zur Initialisierung und/oder zum Betrieb des USB-Geräts in Interoperation mit der Client-Applikation.

8. Verfahren nach einem der vorigen Ansprüche,
- wobei das eine lokale USB Gerät eines von ein oder mehreren USB-Geräten ist, wobei die ein oder mehreren USB-Geräte jeweils ausgewählt sind aus einer Gruppe umfassend:
• ein Drucker (402) zum Bedrucken und/oder Personalisieren von Wert- oder Sicherheitsdokumenten;
• eine Chipkarte (406) mit integrierter USB-Schnittstelle, insbesondere eine Signatur-Chipkarte;
• ein Chipkartenlesegerät (404) mit USB Schnittstelle;
- und/oder wobei auf dem Server-Computersystem mehrere USB-Gerät-bezogene Funktionen (122) gespeichert sind umfassend:
• eine Mehrzahl von Gerätetyp-spezifischen Gerätetreibern für mehrere unterschiedliche Gerätetypen, und/oder:
• eine Mehrzahl von Versionen des gleichen Gerätetreibers, und/oder
• eine Mehrzahl von Programmen zur Installation auf einem USB Gerät, insbesondere Firmwareupdates, Patches und/oder funktionale Erweiterungsmodule für das USB-Gerät; und/oder
• ein oder mehrere Programme zur automatischen Validierung und/oder Modifikation biometrischer Daten, die von dem USB-Gerät erfasst und - vorzugsweise über den Kommunikationskanal nach Anspruch 2 - an die Server-Applikation übertragen wurden; und/oder
• ein oder mehrere Programme zur Bearbeitung von Daten, die von dem USB-Gerät bereitgestellt werden oder die dem USB-Gerät zur weiteren Verwendung bereitgestellt werden sollen; und/oder
• ein oder mehrere Programme, die eine Nutzereingabe zur Steuerung des Programmablaufs ermöglichen.

9. Verfahren nach einem der vorigen Ansprüche, wobei die Server-Applikation umfasst oder operativ gekoppelt ist an mehrere USB-Gerät bezogene Funktionen (122), wobei die Initialisierung und/oder der Betrieb des USB-Geräts dadurch erfolgt, dass die Client-Applikation in Interoperation mit der Server-Applikation einem Nutzer des Nutzer-Computersystems über eine GUI der Client-Applikation Zugriff auf die USB-Gerät bezogene Funktionen (122) ermöglicht, wobei hierbei die Server-Applikation als virtuelle Screen-Sharing Applikation (312) fungiert um dem Nutzer Zugriff auf GUIs der auf dem Server-Computersystem instanziierten USB-Gerät bezogenen Funktionen (122) zu ermöglichen.

10. Verfahren nach einem der vorigen Ansprüche,
- wobei die Client-Applikation eine Browserbasierte App, insbesondere eine JavaScript-Applikation ist; und/oder
- wobei die Client-Applikation Programlogik zur Durchführung einer Authentifizierung des USB-Gerätes gegenüber dem Server-Computersystem umfasst, wobei die Client-Applikation vorzugsweise auch Programmlogik zum Aufbau des Kommunikationskanals in Interoperation mit der Server-Applikation, wobei die Client-Applikation im Wesentlichen frei ist von gerätespezifischer Programlogik zur Steuerung und zum Betrieb des USB-Gerätes; und/oder
- wobei die Client-Applikation Programlogik zur Erfassung von Zeit, Ort und Art von Nutzer-Interaktionen (308) des Nutzers (102) mit einer GUI der Client-Applikation und zur Weiterleitung dieser erfassten Daten an die Server-Applikation umfasst; und/oder
- wobei die Client-Applikation eine Screen-Sharing-Client-funktion (322) implementiert und dazu ausgebildet ist, in Echtzeit den Inhalt (310, 318, 320) von GUIs der Server-Applikation und optional auch den Inhalt der GUIs (304, 306) weiterer auf dem Server-Computersystem instanziierter Programme von der Server-Applikation zu empfangen und dem Nutzer in einer GUI der Client-Applikation anzuzeigen; und/oder
- wobei die Server-Applikation Programlogik zur Authentifizierung von USB-Geräten anhand des Registers und der empfangenen Geräte-ID, zum Erzeugen des Freigabesignals oder des Abbruchssignals, und gerätespezifischer Programlogik zur Steuerung und zum Betrieb des USB-Gerätes in Abhängigkeit von empfangenen Informationen über Zeit, Ort und Art von Nutzerinteraktionen enthält, wobei die Server-Applikation vorzugsweise auch Programmlogik zum Aufbau des Kommunikationskanals in Interoperation mit der Client-Applikation umfasst; und/oder
- wobei die Server-Applikation Programlogik eine Screen-Sharing -Serverfunktion (112) implementiert und dazu ausgebildet ist, in Echtzeit den Inhalt von GUIs der Server-Applikation und optional auch den Inhalt weiterer auf dem Server-Computersystem instanziierter Programme an die Client-Applikation zu übertragen und Nutzerinteraktionen mit den übertragenen Inhalten in Steuerungsbefehle an das USB-Gerät umzusetzen.

11. Verfahren zur Personalisierung eines Sicherheitsdokuments, umfassend:
- Betreiben eines lokalen USB Geräts gemäß dem Verfahren nach einem der vorhergehenden Ansprüche, wobei das eine lokale USB Gerät ein USB-Chipkartenlesegerät (404) ist, das zur Personalisierung von Chipkarten als jeweiliges Sicherheitsdokument ausgebildet ist, wobei die Server-Applikation automatisch den zum Betrieb des USB Chipkartenlesegeräts geeigneten Gerätetreiber aus einer Vielzahl von Lesegerät-Gerätetreibern auswählt;
- In Antwort auf ein Signal des Chipkartenlesegeräts, dass als Chipkarte ein noch nicht personalisiertes Sicherheitsdokument mit einer integrierten USB-Schnittstelle in das Lesegerät eingeführt wurde, durch die Client-Applikation, automatisches Authentifizieren der Chipkarte als ein weiteres über eine lokale USB-Schnittstelle an das Nutzer-Computersystem gekoppeltes USB-Gerät gegenüber der Serverapplikation in gleicher Weise wie das Chipkartenlesegerät anhand einer Geräte-ID der Chipkarte, wobei die Server-Applikation automatisch den zum Datenaustausch mit dieser Chipkarte geeigneten Chipkartengerätetreiber aus einer Vielzahl von Chipkartengerätetreibern auswählt;
- Übermittlung von Informationen über Interaktionen des Nutzers mit einer GUI der Client-Applikation an die Server-Applikation; und
- Kontrolle des Personalisierungsprozesses, insbesondere der Auswahl und Modifikation von personenbezogenen Daten, die auf der Chipkarte gespeichert oder anderweitig aufgebracht werden, durch die Server-Applikation oder durch eine andere auf dem Server-Computersystem instanziierte Applikation in Abhängigkeit von den übermittelten Nutzerinteraktionen.

12. Verfahren zur Verwendung eines Sicherheitsdokuments, umfassend:
- Betreiben eines lokalen USB Geräts gemäß dem Verfahren nach einem der vorhergehenden Ansprüche 1-10, wobei das eine lokale USB Gerät als das Sicherheitsdokument eine Chipkarte mit USB-Schnittstelle ist, die einen geheimen Signaturschlüssel, der dem Sicherheitsdokument eindeutig zugeordnet ist, beinhaltet, wobei die Server-Applikation automatisch den zum Betrieb der Chipkarte geeigneten Treiber aus einer Vielzahl von Treibern auswählt;
- Öffnen einer Webseite eines Signaturportals, die von dem Server-Computersystem bereitgestellt wird, durch den Browser;
- Hochladen der zu signierenden Daten von dem Nutzer-Computer über den Browser an das Signaturportal des Server-Computersystems;
- Bereitstellung einer GUI zur Modifikation der hochgeladenen Daten und/oder zur Kontrolle eines Signaturprozesses durch das Signaturportal auf dem Server-Computer;
- Übertragung des graphischen Inhalts der GUI des Signaturportals durch die Server-Applikation an die Client-Applikation;
- Anzeige der übermittelten graphischen Information in einer GUI der Client-Applikation;
- Übermittlung von Informationen über Interaktionen (308) des Nutzers (102) mit der GUI der Client-Applikation an die Server-Applikation (124); und
- Signierung der zu signierenden Daten mit dem Signaturschlüssel der Chipkarte durch die Chipkarte unter der Kontrolle des ausgewählten Chipkartentreibers, wobei der ausgewählte Treiber Kontrollbefehle in Abhängigkeit von den übermittelten Interaktionen des Nutzers erzeugt, wobei die Kontrollbefehle (324) des ausgewählten Treibers über die WebUSB Schnittstelle an die Chipkarte gesendet werden.

13. Verfahren zur Personalisierung eines Sicherheitsdokuments, umfassend:
- Betreiben eines lokalen USB Geräts gemäß dem Verfahren nach einem der vorhergehenden Ansprüche 1-10, wobei das eine lokale USB Gerät ein USB-Chipkartenlesegerät ist, das zur Personalisierung von Chipkarten als jeweiliges Sicherheitsdokument ausgebildet ist, wobei die Server-Applikation automatisch den zum Betrieb des USB Chipkartenlesegeräts geeigneten Gerätetreiber aus einer Vielzahl von Lesegerät-Gerätetreibern auswählt;
- Authentifizieren eines Sensors biometrischer Daten, als ein weiteres lokales USB Gerät des Nutzer-Computersystems, gegenüber der Serverapplikation in gleicher Weise wie das Chipkartenlesegerät anhand einer Geräte-ID des Sensors, wobei die Server-Applikation automatisch den zum Betrieb des USB Sensors geeigneten Gerätetreiber aus einer Vielzahl von Sensor-Gerätetreibern auswählt;
- In Antwort auf ein Signal des Sensors durch die Client-Applikation, dass ein biometrisches Merkmal des Nutzers von dem Sensor erfasst wurde, automatisches Übermitteln des erfassten biometrischen Merkmals von der Client-Applikation an die Server-Applikation;
- Übermittlung von Informationen über Interaktionen des Nutzers mit einer GUI der Client-Applikation, welche den graphischen Inhalt der Server-Applikation und optional die GUI weiterer auf dem Server instanziierter Funktionen dem Nutzer des Nutzer-Computersystems anzeigt, an die Server-Applikation;
- Kontrolle des Personalisierungsprozesses, insbesondere Validierung und Korrektur des übermittelten biometrischen Merkmals, durch die Server-Applikation oder durch eine andere auf dem Server-Computersystem instanziierte Applikation in Abhängigkeit von den übermittelten Nutzerinteraktionen;
- Senden des validierten und/oder korrigierten biometrischen Merkmals von dem Server-Applikation an die Client-Applikation zur Speicherung oder anderweitigen Aufbringung des biometrischen Merkmals in das oder an dem Dokument unter der Kontrolle der Server-Applikation.

14. Verfahren zur Personalisierung eines Sicherheitsdokuments, umfassend:
- Betreiben eines lokalen USB Geräts gemäß dem Verfahren nach einem der vorhergehenden Ansprüche 1-10, wobei das eine lokale USB Gerät als das Sicherheitsdokument ein USB-Drucker ist, der zur Personalisierung von Sicherheitsdokumenten mittels eines drucktechnischen Verfahrens ausgebildet ist, wobei die Server-Applikation automatisch den zum Betrieb des USB Druckers geeigneten Druckertreiber aus einer Vielzahl von Druckertreibern auswählt;
- Übermittlung eines Bildes, welches gedruckt werden soll, von der Client-Applikation an die Server-Applikation, wobei die Server-Applikation eine Programmfunktion mit einer GUI zur Bearbeitung des Bildes beinhaltet oder operativ an diese Funktion gekoppelt ist und die graphischen Inhalte dieser GUI zur Bildbearbeitung an die Client-Applikation überträgt;
- Anzeige der übermittelten graphischen Information in einer GUI der Client-Applikation;
- Übermittlung von Informationen über Interaktionen des Nutzers mit der GUI der Client-Applikation, an die Server-Applikation;
- Bearbeitung des Bildes durch die Server-Applikation in Abhängigkeit von den übermittelten Nutzerinteraktionen;
- Senden des bearbeiteten Bildes von dem Server-Applikation an die Client-Applikation zum Aufdruck des bearbeiteten Bildes durch den Drucker in oder auf das Dokument unter der Kontrolle der Server-Applikation.

## Claims

1. A method for operating a local USB device (116, 404, 406, 802), comprising:
- providing (202) a user computer system (104) with a WebUSB-enabled browser (108), wherein the USB device is connected to the user computer system via a local USB interface (114.1) of the user computer system;
- providing (204) a server computer system (118) with a register (123) and with a server application (124) instantiated on the server computer system, wherein the register contains a plurality of device IDs of USB devices registered with the server computer system;
- downloading (206) a client application (110) that is interoperable with the server application (124) via a WebUSB interface (112) from the server computer system via a network (130) by the browser;
- automatically receiving (208) a device ID (134, 810, 812) of the USB device from the USB device by the client application via the local USB interface (114);
- transmitting (210) the received device ID from the client application to the server application in order to authenticate (212) the USB device to the server application as one of the registered USB devices and authenticating a user of the USB device to the server application;
- in the event of successful authentication, sending (214) an enable signal (136) from the server application to the client application;
- operating (216) the local USB device by the client application in interoperation with the server application only in response to receiving the enable signal, further comprising:
- automatically establishing a protected communication channel (132) between the downloaded client application and the server application;
wherein the device ID and the enable signal are transmitted via the communication channel, wherein, for the purpose of the authentication of the USB device, the server application generates a challenge in the form of a random data value which is transmitted via the communication channel to the client application, wherein the client application forwards the data value to the USB device, wherein the USB device signs the data value with a signature key uniquely assigned to the USB device and stored in a protected manner in the hardware of the USB device and returns the signed data value to the client application, wherein the client application transmits the signed data value via the protected communication channel to the server application in order to enable the server application to execute the authentication of the USB device on the basis of the signed data value, wherein the server application performs a signature verification during the course of the authentication and only generates the enable signal if the verification indicates that the signature is valid.

2. The method according to claim 1,
- wherein the protected communication channel is a cryptographically protected communication channel, in particular an end-to-end encrypted communication channel between the client application and the server application, which is protected against access by the browser.

3. The method according to any one of the preceding claims, wherein the client application is executed exclusively within the browser which downloaded the client application, the method further comprising:
- deleting the downloaded client application as soon as the browser (108) is closed, so that the client application must be downloaded again from the server computer system in order to run the client application again.

4. The method according to any one of the preceding claims, wherein the USB device is configured to release at least some of its hardware functions only for operation by applications that authenticate themselves to the USB device with an enable token, wherein the enable signal contains the enable token, the method further comprising:
- authenticating the client application to the USB device using the enable token.

5. The method according to any one of the preceding claims,
- wherein the device ID is an identifier (810, 812) specific to the USB device, in particular a MAC address, wherein the authentication comprises verifying whether the identifier is stored in the register; and/or
- wherein the device ID is a value derived by means of a device-specific cryptographic key (804, 808), in particular a challenge signed with a device-specific signing key, wherein the authentication comprises verifying the derived value, in particular verifying whether the device ID is identical to the challenge and whether the signature is valid;
- wherein the receiving of the device ID, the transmission of the device ID and the receiving of the enable signal or the abort signal from the client application takes place automatically after the downloading of the client application and independently of any user interaction ("in the background"); and/or
- wherein the operation of the local USB device only requires successful authentication of the USB device to the server application and receipt of the enable signal by the client application, but does not additionally require successful authentication of the user (102) to the server application.

6. The method according to one of the preceding claims 2-5,
- wherein the USB device contains a secret value (804, 808), in particular a secret cryptographic key or a PIN, which is stored in a protected manner in the device during the manufacture or activation of the USB device, and wherein the method comprises: generating the device ID (134) as a value derived with the aid of the secret value by the USB device; transmitting the derived value from the client application via the communication channel (132) to the server application, wherein the authentication comprises checking whether the derived value is stored in the register or may be derived from the server application from a reference value stored in the register using a predefined method; and/or
- wherein the USB device (116) contains a signature key (804, 808) stored in a protected manner in the device during the manufacture or activation of the USB device, and wherein the method comprises: generating a signed value with the aid of the signature key by the USB device; transmitting the signed value as the device ID of the device from the client application via the communication channel (132) to the server application, wherein the authentication comprises checking the validity of the signature using a signature verification key.

7. The method according to any one of the preceding claims, further comprising:
- automatically determining the type and/or hardware version of the USB device by the client application;
- transmitting the determined type and/or hardware version via the communication channel to the server application;
- automatically selecting, by the server application, one or more USB device-related functions that are suitable for operating the USB device of the determined type and/or determined hardware version from a plurality (122) of functions provided on the server computer system for a plurality of USB device types and/or hardware versions; and
- selectively using the selected functions by the server application to initialise and/or operate the USB device in interoperation with the client application.

8. The method according to any one of the preceding claims,
- wherein the one local USB device is one of one or more USB devices, wherein the one or more USB devices are each selected from a group comprising:
• a printer (402) for printing and/or personalising value or security documents;
• a chip card (406) with integrated USB interface, in particular a signature chip card;
• a chip card reader (404) with a USB interface;
- and/or wherein multiple USB device-related functions (122) are stored on the server computer system, comprising:
• a plurality of device type-specific device drivers for a plurality of different device types, and/or:
• a plurality of versions of the same device driver, and/or
• a plurality of programs for installation on a USB device, in particular firmware updates, patches and/or functional extension modules for the USB device; and/or
• one or more programs for automatic validation and/or modification of biometric data that has been collected by the USB device and transmitted to the server application - preferably via the communication channel according to claim 2; and/or
• one or more programs for processing data provided by the USB device or to be provided to the USB device for further use; and/or
• one or more programs that enable user input to control the program sequence.

9. The method according to any one of the preceding claims, wherein the server application comprises or is operatively coupled to a plurality of USB device-related functions (122), wherein the initialisation and/or operation of the USB device is effected by the client application, in interoperation with the server application, providing a user of the user computer system with access to USB device-related functions (122) via a GUI of the client application, wherein the server application functions as a virtual screen-sharing application (312) to provide the user with access to the USB device-related functions (122) instantiated on the server computer system.

10. The method according to any one of the preceding claims,
- wherein the client application is a browser-based app, in particular a JavaScript application; and/or
- wherein the client application comprises program logic for performing authentication of the USB device to the server computer system, wherein the client application preferably also comprises program logic for establishing the communication channel in interoperation with the server application, wherein the client application is substantially free of device-specific program logic for controlling and operating the USB device; and/or
- wherein the client application comprises program logic for detecting the time, location and type of user interactions (308) of the user (102) with a GUI of the client application and for forwarding this detected data to the server application; and/or
- wherein the client application implements a screen sharing client function (322) and is configured to share in real time the content (310, 318, 320) of GUIs of the server application and, optionally, also the content of the GUIs (304, 306) of other programs instantiated on the server computer system from the server application and displaying it to the user in a GUI of the client application; and/or
- wherein the server application has program logic for authenticating USB devices based on the register and the received device ID, for generating the enable signal or the abort signal, and device-specific program logic for controlling and operating the USB device depending on received information about the time, location and type of user interactions, wherein the server application preferably also comprises program logic for establishing the communication channel in interoperation with the client application; and/or
- wherein the server application implements a screen sharing server function (112) and is configured to transmit the content of GUIs of the server application and, optionally, also the content of other programs instantiated on the server computer system to the client application in real time and to convert user interactions with the transmitted content into control commands to the USB device.

11. A method for personalising a security document, comprising:
- operating a local USB device in accordance with the method according to any one of the preceding claims, wherein the local USB device is a USB chip card reader (404) configured for personalising chip cards as respective security document, wherein the server application automatically selects the device driver suitable for operating the USB chip card reader from a plurality of reader device drivers;
- in response to a signal from the chip card reader that a security document with an integrated USB interface that has not yet been personalised has been inserted into the reader, automatically authenticating, by the client application, the chip card as another USB device coupled to the user computer system via a local USB interface to the server application in the same way as the chip card reader using a device ID of the chip card, wherein the server application automatically selects the chip card device driver suitable for data exchange with this chip card from a plurality of chip card device drivers;
- transmitting information about user interactions with a GUI of the client application to the server application; and
- controlling the personalisation process, in particular the selection and modification of personal data stored on the chip card or otherwise applied to it, by the server application or by another application instantiated on the server computer system depending on the transmitted user interactions.

12. A method for using a security document, comprising:
- operating a local USB device in accordance with the method according to any one of preceding claims 1-10, wherein the local USB device as the security document is a chip card with a USB interface that contains a secret signature key that is uniquely assigned to the security document, wherein the server application automatically selects the driver suitable for operating the chip card from a plurality of drivers;
- opening a website of a signature portal provided by the server computer system via the browser;
- uploading the data to be signed from the user computer via the browser to the signature portal of the server computer system;
- providing a GUI for modifying the uploaded data and/or for controlling a signature process by the signature portal on the server computer;
- transferring the graphical content of the GUI of the signature portal by the server application to the client application;
- displaying the transmitted graphical information in a GUI of the client application;
- transmitting information about interactions (308) of the user (102) with the GUI of the client application to the server application (124); and
- signing the data to be signed with the signature key of the chip card by the chip card under the control of the selected chip card driver, wherein the selected driver generates control commands depending on the transmitted interactions of the user, wherein the control commands (324) of the selected driver are sent to the chip card via the WebUSB interface.

13. A method for personalising a security document, comprising:
- operating a local USB device in accordance with the method according to any one of preceding claims 1-10, wherein the local USB device is a USB chip card reader configured for personalising chip cards as respective security document, wherein the server application automatically selects the device driver suitable for operating the USB chip card reader from a plurality of reader device drivers;
- authenticating a biometric data sensor, as a further local USB device of the user computer system, to the server application in the same manner as the chip card reader on the basis of a device ID of the sensor, wherein the server application automatically selects the device driver suitable for operating the USB sensor from a plurality of sensor device drivers;
- in response to a signal from the sensor via the client application that a biometric feature of the user has been detected by the sensor, automatically transmitting the detected biometric feature from the client application to the server application;
- transmitting information about user interactions with a GUI of the client application, which displays the graphical content of the server application and, optionally, the GUI of other functions instantiated on the server to the user of the user computer system, to the server application;
- controlling the personalisation process, in particular validation and correction of the transmitted biometric feature, by the server application or by another application instantiated on the server computer system depending on the transmitted user interactions;
- sending the validated and/or corrected biometric feature from the server application to the client application for storage or other application of the biometric feature in or on the document under the control of the server application.

14. A method for personalising a security document, comprising:
- operating a local USB device in accordance with the method according to any one of preceding claims 1-10, wherein the local USB device is a USB printer configured for personalising security documents by means of a printing process, wherein the server application automatically selects the printer driver suitable for operating the USB printer from a plurality of printer drivers;
- transmitting an image to be printed from the client application to the server application, wherein the server application includes a program function with a GUI for processing the image or is operatively coupled to this function, and the graphical contents of this GUI are transmitted to the client application for image processing;
- displaying the transmitted graphical information in a GUI of the client application;
- transmitting information about user interactions with the GUI of the client application to the server application;
- processing of the image by the server application depending on the user interactions transmitted;
- sending the processed image from the server application to the client application for printing the processed image by the printer in or on the document under the control of the server application.

## Revendications

1. Procédé de fonctionnement d'un dispositif USB local (116, 404, 406, 802), comprenant les étapes consistant à :
- fournir (202) un système informatique utilisateur (104) avec un navigateur fonctionnant avec WebUSB (108), dans lequel le dispositif USB est connecté au système informatique utilisateur par l'intermédiaire d'une interface USB locale (114.1) du système informatique utilisateur ;
- fournir (204) un système informatique serveur (118) avec un registre (123) et avec une application serveur (124) instanciée sur le système informatique serveur, dans lequel le registre contient une pluralité d'ID de dispositifs USB enregistrés avec le système informatique serveur ;
- faire télécharger (206) une application client (110) qui peut interfonctionner avec l'application serveur (124) par l'intermédiaire d'une interface WebUSB (112) depuis le système informatique serveur par l'intermédiaire d'un réseau (130) par le navigateur ;
- faire recevoir (208) automatiquement un ID de dispositif (134, 810, 812) du dispositif USB de la part du dispositif USB par l'application client par l'intermédiaire de l'interface USB locale (114) ;
- transmettre (210) l'ID de dispositif reçu depuis l'application client à l'application serveur afin d'authentifier (212) le dispositif USB à l'application serveur en tant que l'un des dispositifs USB enregistrés et authentifier un utilisateur du dispositif USB vis-à-vis de l'application serveur ;
- dans le cas d'une authentification réussie, envoyer (214) un signal d'activation (136) depuis l'application serveur à l'application client ;
- faire fonctionner (216) le dispositif USB local par l'application client en interfonctionnement avec l'application serveur uniquement en réponse à la réception du signal d'activation, comprenant en outre l'étape consistant à :
- établir automatiquement un canal de communication protégé (132) entre l'application client téléchargée et l'application serveur ;
dans lequel l'ID de dispositif et le signal d'activation sont transmis par l'intermédiaire du canal de communication, dans lequel, aux fins de l'authentification du dispositif USB, l'application serveur génère un challenge sous la forme d'une valeur de données aléatoire qui est transmise par l'intermédiaire du canal de communication à l'application client, dans lequel l'application client transfert la valeur de données au dispositif USB, dans lequel le dispositif USB signe la valeur de données avec une clé de signature attribuée de manière unique au dispositif USB et stockée de manière protégée dans le matériel du dispositif USB et renvoie la valeur de données signée à l'application client, dans lequel l'application client transmet la valeur de données signée par l'intermédiaire du canal de communication protégée à l'application serveur afin de permettre à l'application serveur d'exécuter l'authentification du dispositif USB sur la base de la valeur de données signée, dans lequel l'application serveur réalise une vérification de signature au cours de l'authentification et génère uniquement le signal d'activation si la vérification indique que la signature est valide.

2. Procédé selon la revendication 1,
- dans lequel le canal de communication protégé est un canal de communication protégé de manière cryptographique, en particulier un canal de communication chiffré intégralement entre l'application client et l'application serveur, qui est protégé contre l'accès par le navigateur.

3. Procédé selon l'une quelconque des revendications précédentes, dans lequel l'application client est exécutée exclusivement au sein du navigateur qui a téléchargé l'application client, le procédé comprenant en outre les étapes consistant à :
- supprimer l'application client téléchargée dès que le navigateur (108) est fermé, de telle sorte que l'application client doit être téléchargée à nouveau depuis le système informatique serveur afin d'exécuter à nouveau l'application client.

4. Procédé selon l'une quelconque des revendications précédentes, dans laquelle le dispositif USB est configuré pour libérer au moins certaines de ses fonctions matérielles uniquement pour un fonctionnement par le biais d'applications qui s'authentifient vis-à-vis du dispositif USB avec un jeton d'activation, dans lequel le signal d'activation contient le jeton d'activation, le procédé comprenant en outre l'étape consistant à :
- authentifier l'application client vis-à-vis du dispositif USB en utilisant le jeton d'activation.

5. Procédé selon l'une quelconque des revendications précédentes,
- dans lequel l'ID de dispositif est un identifiant (810, 812) spécifique du dispositif USB, en particulier une adresse MAC, dans lequel l'authentification comprend une étape consistant à vérifier si l'identifiant est stocké dans le registre ; et/ou
- dans lequel l'ID de dispositif est une valeur dérivée au moyen d'une clé cryptographique spécifique du dispositif (804, 808), en particulier un challenge signé avec une clé de signature spécifique du dispositif, dans lequel l'authentification comprend une étape consistant à vérifier la valeur dérivée, en particulier à vérifier si l'ID de dispositif est identique au challenge et si la signature est valide ;
- dans lequel la réception de l'ID de dispositif, la transmission de l'ID de dispositif et la réception du signal d'activation ou du signal d'abandon de la part de l'application client se déroule automatiquement après l'étape consistant à télécharger l'application client et indépendamment de toute interaction utilisateur (« en arrière-plan ») ; et/ou
- dans lequel le fonctionnement du dispositif USB local exige uniquement une authentification réussie du dispositif USB à l'application serveur et à la réception du signal d'activation par l'application client, mais n'exige pas de plus une authentification réussie de l'utilisateur (102) vis-à-vis de l'application serveur.

6. Procédé selon l'une quelconque des revendications 2 à 5 précédentes,
- dans lequel le dispositif USB contient une valeur secrète (804, 808), en particulier une clé cryptographique secrète ou un PIN, qui est stockée de manière protégée dans le dispositif pendant la fabrication ou l'activation du dispositif USB, et dans lequel le procédé comprend les étapes consistant à : faire générer l'ID de dispositif (134) sous forme de valeur dérivée à l'aide de la valeur secrète par le dispositif USB ; transmettre la valeur dérivée depuis l'application client par l'intermédiaire du canal de communication (132) à l'application serveur, dans laquelle l'authentification comprend une étape consistant à vérifier si la valeur dérivée est stockée dans le registre ou peut être dérivée de l'application serveur depuis une valeur de référence stockée dans le registre en utilisant un procédé prédéfini ; et/ou
- dans lequel le dispositif USB (116) contient une clé de signature (804, 808) stockée de manière protégée dans le dispositif pendant la fabrication ou l'activation du dispositif USB, et dans lequel le procédé comprend les étapes consistant à : faire générer une valeur signée à l'aide de la clé de signature par le dispositif USB ; transmettre la valeur signée en tant qu'ID du dispositif depuis l'application client par l'intermédiaire du canal de communication (132) à l'application serveur, dans lequel l'authentification comprend une étape consistant à vérifier la validité de la signature en utilisant une clé de vérification de signature.

7. Procédé selon l'une quelconque des revendications précédentes, comprenant en outre les étapes consistant à :
- faire déterminer automatiquement le type et/ou la version matérielle du dispositif USB par l'application client ;
- transmettre le type et/ou la version matérielle déterminés par l'intermédiaire du canal de communication à l'application serveur ;
- faire sélectionner automatiquement, par l'application serveur, une ou plusieurs fonctions liées au dispositif USB qui sont adaptées pour faire fonctionner le dispositif USB du type déterminé et/ou de la version matérielle déterminée parmi une pluralité (122) de fonctions fournies sur le système informatique serveur pour une pluralité de types et/ou de versions matérielles du dispositif USB ; et
- faire utiliser sélectivement les fonctions sélectionnées par l'application serveur pour initialiser et/ou faire fonctionner le dispositif USB en interfonctionnement avec l'application client.

8. Procédé selon l'une quelconque des revendications précédentes,
- dans lequel le dispositif USB local concerné est un parmi un ou plusieurs dispositifs USB, dans lequel le ou les dispositifs USB sont chacun sélectionnés dans un groupe comprenant :
• une imprimante (402) pour imprimer et/ou personnaliser des documents de valeur ou de sécurité ;
• une carte à puce (406) avec une interface USB intégrée, en particulier une carte à puce de signature ;
• un lecteur de cartes à puce (404) avec une interface USB ;
- et/ou dans lequel de multiples fonctions liées au dispositif USB (122) sont stockées sur le système informatique serveur, comprenant :
• une pluralité de pilotes de dispositif spécifiques de types de dispositif pour une pluralité de types de dispositif différents, et/ou :
• une pluralité de versions du même pilote de dispositif, et/ou
• une pluralité de programmes pour installation sur un dispositif USB, en particulier des mises à jour de micrologiciel, des patchs et/ou des modules d'extension fonctionnelle pour le dispositif USB ; et/ou
• un ou plusieurs programmes pour validation et/ou modification automatique de données biométriques qui ont été recueillies par le dispositif USB et transmises à l'application serveur - de préférence par l'intermédiaire du canal de communication selon la revendication 2 ; et/ou
• un ou plusieurs programmes de traitement de données fournies par le dispositif USB ou destinées à être fournies au dispositif USB pour utilisation supplémentaire ; et/ou
• un ou plusieurs programmes qui activent l'entrée utilisateur pour commander la séquence de programme.

9. Procédé selon l'une quelconque des revendications précédentes, dans lequel l'application serveur comprend ou est couplée de manière fonctionnelle à une pluralité de fonctions liées à un dispositif USB (122), dans lequel l'initialisation et/ou le fonctionnement du dispositif USB sont effectués par l'application client, en interfonctionnement avec l'application serveur, pour fournir à un utilisateur du système informatique utilisateur un accès aux fonctions liées au dispositif USB (122) par l'intermédiaire d'une GUI de l'application client, dans lequel les fonctions d'application serveur en tant qu'application partageant un écran virtuel (312) pour fournir à l'utilisateur un accès aux fonctions liées au dispositif USB (122) sont instanciées sur le système informatique serveur.

10. Procédé selon l'une quelconque des revendications précédentes,
- dans lequel l'application client est une application basée sur navigateur, en particulier une application JavaScript ; et/ou
- dans lequel l'application client comprend une logique de programme pour réaliser l'authentification du dispositif USB vis-à-vis du système informatique serveur, dans lequel l'application client comprend également de préférence une logique de programme pour établir le canal de communication en interfonctionnement avec l'application serveur, dans lequel l'application client est essentiellement exempte d'une logique de programme spécifique du dispositif pour commander et faire fonctionner le dispositif USB ; et/ou
- dans lequel l'application client comprend une logique de programme pour détecter le temps, la localisation et le type d'interactions utilisateur (308) de l'utilisateur (102) avec une GUI de l'application client et pour transférer lesdites données détectées à l'application serveur ; et/ou
- dans lequel l'application client met en œuvre une fonction client de partage d'écran (322) et est configurée pour partager en temps réel le contenu (310, 318, 320) de GUI de l'application serveur et, éventuellement, également le contenu des GUI (304, 306) d'autres programmes instanciés sur le système informatique serveur depuis l'application serveur et l'afficher pour l'utilisateur dans une GUI de l'application client ; et/ou
- dans lequel l'application serveur a une logique de programme pour authentifier les dispositifs USB en se basant sur le registre et l'ID de dispositif reçu, pour générer le signal d'activation ou le signal d'abandon, et une logique de programme spécifique du dispositif pour commander et faire fonctionner le dispositif USB en fonction des informations reçues au sujet du temps, de la localisation et du type d'interactions utilisateur, dans lequel l'application serveur comprend également de préférence une logique de programme pour établir le canal de communication en interfonctionnement avec l'application client ; et/ou
- dans lequel l'application serveur met en œuvre une fonction de serveur de partage d'écran (112) et est configurée pour transmettre le contenu de GUI de l'application serveur et, éventuellement, également le contenu d'autres programmes instanciés sur le système informatique serveur à l'application client en temps réel et pour convertir les interactions utilisateur avec le contenu transmis dans des ordres de commande au dispositif USB.

11. Procédé de personnalisation d'un document de sécurité, comprenant les étapes consistant à :
- faire fonctionner un dispositif USB local conformément au procédé selon l'une quelconque des revendications précédentes, dans lequel le dispositif USB local est un lecteur de cartes de puce USB (404) configuré pour personnaliser des cartes à puce en tant que document de sécurité respectif, dans lequel l'application serveur sélectionne automatiquement le pilote de dispositif adapté pour faire fonctionner le lecteur de cartes à puce USB parmi une pluralité de pilotes de dispositif de lecteur ;
- en réponse à un signal depuis le lecteur de cartes à puce selon lequel un document de sécurité avec une interface USB intégrée qui n'a pas encore été personnalisée a été inséré dans le lecteur, faire authentifier automatiquement, par l'application client, la carte à puce en tant qu'un autre dispositif USB couplé au système informatique utilisateur par l'intermédiaire d'une interface USB locale avec l'application serveur de la même façon que le lecteur de cartes à puce en utilisant un ID de dispositif de la carte à puce, dans lequel l'application serveur sélectionne automatiquement le pilote de dispositif de carte à puce adapté pour un échange de données avec ladite carte à puce parmi une pluralité de pilotes de dispositif de carte à puce ;
- transmettre des informations au sujet d'interactions utilisateur avec une GUI de l'application client à l'application serveur ; et
- faire commander le processus de personnalisation, en particulier la sélection et la modification de données personnelles stockées sur la carte à puce ou appliquées de toute autre manière à celle-ci, par l'application serveur ou par une autre application instanciée sur le système informatique serveur en fonction des interactions utilisateur transmises.

12. Procédé d'utilisation d'un document de sécurité, comprenant les étapes consistant à :
- faire fonctionner un dispositif USB local conformément au procédé selon l'une quelconque des revendications 1 à 10 précédentes, dans lequel le dispositif USB local en tant que document de sécurité est une carte à puce avec une interface USB qui contient une clé de signature secrète qui est attribuée de manière unique au document de sécurité, dans lequel l'application serveur sélectionne automatiquement le pilote adapté pour faire fonctionner la carte à puce parmi une pluralité de pilotes ;
- ouvrir un site Internet d'un portail de signature fourni par le système informatique serveur par l'intermédiaire du navigateur ;
- téléverser les données à signer depuis l'ordinateur utilisateur par l'intermédiaire du navigateur au portail de signature du système informatique serveur ;
- faire fournir une GUI pour modifier les données téléversées et/ou pour commander un processus de signature par le portail de signature sur l'ordinateur serveur ;
- faire transférer le contenu graphique de la GUI du portail de signature par l'application serveur à l'application client ;
- afficher les informations graphiques transmises dans une GUI de l'application client ;
- transmettre des informations au sujet d'interactions (308) de l'utilisateur (102) avec la GUI de l'application client à l'application serveur (124) ; et
- faire signer les données à signer avec la clé de signature de la carte à puce par la carte à puce sous la commande du pilote de carte à puce sélectionné, dans lequel le pilote sélectionné génère des ordres de commande en fonction des interactions transmises de l'utilisateur, dans lequel les ordres de commande (324) du pilote sélectionné sont envoyés à la carte à puce par l'intermédiaire de l'interface WebUSB.

13. Procédé de personnalisation d'un document de sécurité, comprenant les étapes consistant à :
- faire fonctionner un dispositif USB local conformément au procédé selon l'une quelconque des revendications 1 à 10 précédentes, dans lequel le dispositif USB local est un lecteur de cartes de puce USB configuré pour personnaliser des cartes à puce en tant que document de sécurité respectif, dans lequel l'application serveur sélectionne automatiquement le pilote de dispositif adapté pour faire fonctionner le lecteur de cartes à puce USB parmi une pluralité de pilotes de dispositif lecteur ;
- authentifier un capteur de données biométriques, en tant que dispositif USB local supplémentaire du système informatique utilisateur, à l'application serveur de la même manière que le lecteur de cartes à puce sur la base d'un ID de dispositif du capteur, dans lequel l'application serveur sélectionne automatiquement le pilote de dispositif adapté pour faire fonctionner le capteur USB parmi une pluralité de pilotes de dispositif de capteur ;
- en réponse à un signal depuis le capteur par l'intermédiaire de l'application client selon lequel une caractéristique biométrique de l'utilisateur a été détectée par le capteur, transmettre automatiquement la caractéristique biométrique détectée depuis l'application client à l'application serveur ;
- transmettre des informations au sujet des interactions utilisateur avec une GUI de l'application client, qui affiche le contenu graphique de l'application serveur et, éventuellement, la GUI d'autres fonctions instanciées sur le serveur à l'utilisateur du système informatique utilisateur, à l'application serveur ;
- commander le processus de personnalisation, en particulier la validation et la correction de la caractéristique biométrique transmise, par l'application serveur ou par une autre application instanciée sur le système informatique serveur en fonction des interactions utilisateur transmises ;
- envoyer la caractéristique biométrique validée et/ou corrigée depuis l'application serveur à l'application client pour le stockage ou une autre application de la caractéristique biométrique dans ou sur le document sous la commande de l'application serveur.

14. Procédé de personnalisation d'un document de sécurité, comprenant les étapes consistant à :
- faire fonctionner un dispositif USB local conformément au procédé selon l'une quelconque des revendications 1 à 10 précédentes, dans lequel le dispositif USB local est une imprimante USB configurée pour personnaliser des documents de sécurité au moyen d'un processus d'impression, dans lequel l'application serveur sélectionne automatiquement le pilote d'imprimante adapté pour faire fonctionner l'imprimante USB parmi une pluralité de pilotes d'imprimante ;
- transmettre une image à imprimer depuis l'application client à l'application serveur, dans lequel l'application serveur inclut une fonction de programme avec une GUI pour traiter l'image ou est couplée de manière fonctionnelle à ladite fonction, et le contenu graphique de ladite GUI est transmis à l'application client pour traitement d'image ;
- afficher les informations graphiques transmises dans une GUI de l'application client ;
- transmettre des informations au sujet d'interactions utilisateur avec la GUI de l'application client à l'application serveur ;
- faire traiter l'image par l'application serveur en fonction des interactions utilisateur transmises ;
- envoyer l'image traitée depuis l'application serveur à l'application client pour faire imprimer l'image traitée par l'imprimante dans ou sur le document sous la commande de l'application serveur.
